(19) Europäisches Patentamt
European Patent Office
Office européen des brevets

(11) EP 2 484 700 B1

# (12) EUROPÄISCHE PATENTSCHRIFT

(45) Veröffentlichungstag und Bekanntmachung des Hinweises auf die Patenterteilung:
**09.10.2013 Patentblatt 2013/41**

(51) Int Cl.:
***C08C 19/02*** *(2006.01)* ***C08C 19/10*** *(2006.01)*
***C08F 4/42*** *(2006.01)* ***C08L 9/02*** *(2006.01)*
***C08L 15/00*** *(2006.01)* ***C08F 236/12*** *(2006.01)*

(21) Anmeldenummer: **11153437.6**

(22) Anmeldetag: **04.02.2011**

(54) **Funktionalisierte Nitrilkautschuke und ihre Herstellung**

Functionalised nitrile rubbers and their manufacture

Caoutchoucs nitriles fonctionnalisés et leur fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.08.2012 Patentblatt 2012/32**

(73) Patentinhaber:
- **LANXESS Deutschland GmbH**
  **50569 Köln (DE)**
- **Technische Universität München**
  **85747 München (DE)**

(72) Erfinder:
- **Obrecht, Werner, Prof. Dr.**
  **47447 Moers (DE)**
- **Müller, Julia Maria, Dr.**
  **50670 Köln (DE)**
- **Nuyken, Oskar, Prof. Dr.**
  **81927 München (DE)**
- **Schneider, Martin, D. I.**
  **50823 Köln (DE)**

(56) Entgegenhaltungen:
**EP-A1- 1 825 913**
**EP-A1- 2 143 489**
**EP-A2- 2 027 919**
**WO-A1-03/076537**
**WO-A1-2004/011536**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 484 700 B1

## Beschreibung

Die vorliegende Erfindung betrifft funktionalisierte Nitrilkautschuke, ein Verfahren zu deren Herstellung durch Metathese in Gegenwart funktionalisierter Allylverbindungen sowie deren Verwendung.

Metathese- Reaktionen werden umfangreich im Rahmen chemischer Synthesen eingesetzt, z.B. in Ringschlussmetathesen (RCM), Kreuzmetathesen (CM), Ringöffnungsmetathesen (ROM), ringöffnende Metathesepolymerisationen (ROMP), acyclische Dien Metathese- Polymerisationen (ADMET), Selbstmetathese, Umsetzung von Alkenen mit Alkinen (enin- Reaktionen), Polymerisation von Alkinen und Olefinierung von Carbonylen (WO- A- 97/06185 und Platinum Metals Rev., 2005, 49 (3), 123- 137) . Anwendung finden Metathese- Reaktionen beispielsweise zur Olefin-Synthese, zur ringöffnenden Polymerisation von Norbomenderivaten, zur Depolymerisation ungesättigter Polymere wie z.B. Nitrilkautschuken und zur Synthese von Telechelen.

Der Metatheseabbau von Polybutadien wird insbesondere für analytische Untersuchungen eingesetzt. Hierzu wird das Polymere in Gegenwart eines Überschusses an niedermolekularem Olefin so weit abgebaut, dass die hierbei resultierenden Bruchstücke mittels Gaschromatographie und/oder Massenspektroskopie untersucht werden können (Naturwissenschaften 1970, 11, 545; J. Macromol. Sci. Part A, Pure Appl. Chem. 1993, 30, 621-632; Kautsch. Gummi Kunstst. 1995, 48, 88-93). Auf diese Weise ist eine Bestimmung des Vernetzungsgrades von vulkanisiertem Polybutadien (Makromol. Chem. Rapid Commun. 1983, 4, 429-433) sowie die Bestimmung des Füllstoffgehalts möglich (Angew. Makromol. Chem. 1993, 207, 137-143). Auch Aussagen über die Sequenzlängen von Copolymeren aus einem Dien und einem Olefin sind mittels Metathese möglich (Macromol. Chem. 1987, 188, 1075-1084). Auf der Basis dieser Publikationen kann keine Lehre zur Herstellung funktionalisierter Nitrilkautschuke durch Metatheseabbau abgeleitet werden.

DD 146053 beschreibt die Herstellung von estergruppenterminierten Polyolefinen durch Metatheseabbau von doppelbindungshaltigen Polymeren in Gegenwart ungesättigter Dicarbonsäureester oder Diestern ungesättigter Dialkohole als Regler. Als Katalysatoren werden Übergangsmetallverbindungen der 5. bis 7. Nebengruppe eingesetzt. Von essentieller Bedeutung ist es, diese in Kombination mit Kokatalysatoren einzusetzen, bei denen es sich um Organyle des Siliziums, Germaniums, Zinns oder Bleis handelt. Bevorzugt werden Zinntetraalkyle eingesetzt. Der Einsatz derartiger Kokatalysatoren ist als nachteilig anzusehen, weil sie ökologisch bedenklich sind (Encyclopedia of Occupational Health.and Safety, 4th edition, (1998) Vol. III, ed. Jeanne Mager Stellman "tin tetralkyl") Aus DD 146053 können für den Metatheseabbau von Nitrilkautschuken somit keinerlei Rückschlüsse gezogen werden. Es wird im Rahmen der vorliegenden Anmeldung gezeigt, dass bei Einsatz von Metathesekatalysatoren auf Molybdänbasis mit Zusätzen von 1-Hexen ein Metatheseabbau von Nitrilkautschuk nicht möglich ist.

DD 146052 beschreibt die Synthese von estergruppenterminierten Polyalkenameren durch ringöffnende Polymerisation von Cycloolefinen in Gegenwart von ungesättigten organischen Diestern. Als Katalysatoren werden Übergangsmetallverbindungen der 5. bis 7. Nebengruppe eingesetzt. Auch in dieser Synthese ist es entscheidend, die Katalysatoren in Kombination mit Halogeniden der IV.-Hauptgruppe wie den Tetrahalogeniden von Silicium, Germanium, Zinn und Blei einzusetzen. Aus DD 146052 können für den Metatheseabbau von Nitrilkautschuken somit keinerlei Rückschlüsse gezogen werden. Des Weiteren ist die Verwendung von Germanium-, Zinn-und Bleihalogeniden aus den bereits für DD 146053 genannten Gründen problematisch.

WO- A- 08/027269 beschreibt ein zweistufiges Verfahren zur Herstellung funktionalisierter Polymere, bei dem im 1. Schritt Telechele mit endständigen Doppelbindungen hergestellt werden, indem Copolymere aus Ethylen und einem konjugierten Dien oder Alkin sowie optional $C_3$- $C_{20}$- $\alpha$- Olefinen in Gegenwart eines cyclischen Olefins oder Polyolefins, einem acyclischen Olefin, bevorzugt Ethylen, und/ oder einem Regler einem Metatheseabbau unterzogen werden. Im 2. Schritt werden über die endständigen Doppelbindungen der Telechele mittels reduktiver Hydroformylierung, oxidativer Hydroformylierung bzw. durch reduktive Aminierung funktionelle Gruppen (Hydroxylgruppen, Carboxylgruppen und Aminogruppen) eingeführt. Die dabei erhaltenen funktionalisierten Telechele werden für unterschiedliche Anwendungen wie die Herstellung von Polyurethanen und ungesättigten Polyesterharzen eingesetzt. WO- A-2008/027269 ist keine Lehre zu entnehmen, wie und mit welchen funktionalisierten Olefinen gleichzeitig ein Metatheseabbau und eine Funktionalisierung von Nitrilkautschuken erfolgen kann.

WO- A- 2008/042289 beschreibt eine weitere Methode zur Herstellung von Polymeren mit funktionellen Gruppen. Hierfür wird entweder die funktionelle Gruppe mittels Metathese in eine doppelbindungshaltige niedermolekulare Verbindung eingeführt, die anschließend polymerisiert wird oder die Einführung der funktionellen Gruppe erfolgt durch eine polymeranaloge Metathesereaktion an ein doppelbindungshaltiges Polymer. Geeignete Metathesereaktionen zur Einführung der funktionellen Gruppen sind die Kreuzmetathese, die Ringschlussmetathese oder ringöffnende Metathese. Bei der in WO- A- 2008/042289 beschriebenen Funktionalisierung der Polymeren erfolgt kein gleichzeitiger Metatheseabbau des Polymers. Daher gibt WO 2008/042289 keinerlei Anhaltspunkte, wie in einem einzigen Schritt funktionalisierte Nitrilkautschuke mit verringertem Molekulargewicht hergestellt werden können.

WO- A- 2007/100891 beschreibt Zusammensetzungen auf Basis aromatischer Polyester wie PET und PBT, die zudem ungesättigte Polymere mit mindestens einer terminalen funktionellen Gruppe enthalten. Diese funktionalisierten ungesättigten Polymere werden durch Metathesepolymerisation erhalten. Als bevorzugte funktionelle Grupppen

werden Hydroxy-, Carboxy-, und Estergruppen genannt. Die ungesättigten Polymere werden z.B. durch ringöffnende Metathesepolymerisation (ROMP) oder acyclische Dien- Metathese (ADMET) erhalten. Als Monomere kommen z.B. Cycloolefine oder $\alpha$, $\omega$- Diene in Frage. Alternativ können geeignete ungesättigte Polymere auch durch metathetischen Molekulargewichtsabbau aus höhermolekularen ungesättigten Polymeren erhalten werden. Zur Funktionalisierung wird ein Olefin mit einer oder mehreren funktionellen Gruppen eingesetzt. In den Beispielen 1 und 2 erfolgt die Polymerisation von Cyclopenten bzw. Cycloocten und 1, 5- Cyclooctadien in Gegenwart von 1, 4- Diacetoxy- 2- Buten, in Beispiel 3 wird ein Polyoctenamer in Gegenwart von 1, 5- Cyclooctadien und 1, 4- Diacetoxy- 2- Buten einem Metatheseabbau sowie Funktionalisierung unterzogen. Aus der WO- A- 2007/100891 können über die Auswahl der Katalysatoren und der funktionellen Monomeren für die Herstellung funktionalisierter Nitrilkautschuke durch Metatheseabbau keine Schlüsse gezogen werden.

In US 5, 880, 231 wird die Herstellung telecheler Polymerer durch Metathese- Polymerisation in Gegenwart des sogenannten Grubbs (I)- Katalysators beschrieben. Zum Einsatz kommt die acyclische Dien- Metathese (ADMET) entsprechender acyclischer $\alpha$, $\omega$- Diene in Gegenwart von $\alpha$, $\omega$- bifunktionellen Olefinen, die ringöffnende Metathesepolymerisation (ROMP) funktionalisierter Cyclooctene wie 5- Acetoxycycloocten und die Depolymerisation ungesättigter Polymere wie Polyhepten mit Ethylen. In US 5, 880, 231 gibt es weder Anhaltspunkte, dass die Aktivität des Grubbs (I)- Katalysators durch Nitrilgruppen nicht beeinträchtigt, noch gibt es Hinweise, dass durch Metatheseabbau von Nitrilkautschuk in Gegenwart geeigneter funktioneller Olefine niedermolekulare funktionalisierte Nitrilkautschuke herstellbar sind.

WO- A- 2009/009158 beschreibt die Herstellung funktionalisierter Polymerer durch Metathese, allerdings faktisch ohne Abbau des Molekulargewichts. Hierzu werden ungesättigte Polymere, die gegenüber einer Metathesereaktion "immun" sind und maximal um 5% abgebaut werden, mit doppelbindungshaltigen und funktionalisierten cyclischen oder acyclischen Verbindungen in Gegenwart geeigneter Katalysatoren umgesetzt. Das ungesättigte Polymer weist keine Doppelbindungen in der Hauptkette, sondern an der Hauptkette hängende Doppelbindungen auf. Als doppelbindungshaltige, funktionalisierte cyclische oder acyclische Verbindungen werden z.B. ($C_{1-4}$alkyl) acrylat, ($C_{1-4}$alkyl) methacrylat, Di ($C_{1-4}$alkyl) fumarat, Vinylchlorid, Vinylidenchlorid, Vinylacetat, Vinylbutyrat, Vinyl- n- butylether, N- vinylcarbazol, Allylethylether, Vinyl- ($C_1$-$_4$alkyl) alkohol, Vinyl- ($C_{1-4}$alkyl)- methylethylketon, Vinyl- ($C_{1-4}$alkyl) acetat, Allylmethylsulfid, Allyl (chloro) dimethylsilan, Allylisocyanat, Allyldiphenylphosphin, Allylharnstoff, Allylsilan, Allyl- $C_{1-4}$alkylsilan, Allyl- di ($C_{1-4}$alkyl) silan, Allyltri ($C_{1-4}$alkyl) silan oder Maleinsäureanhydrid genannt. WO- A- 2009/009158 gibt keinerlei Anhaltspunkt dafür, wie nitrilgruppenhaltige ungesättigte Polymere funktionalisiert werden, wobei gleichzeitig mit der Funktionalisierung eine signifikante Reduktion (deutlich >5%) der Molmasse erfolgt.

WO- A- 2006/127483 beschreibt den Metatheseabbau von Polybutadien zur Herstellung von funktionalisiertem Polybutadien mit Molmassen von 7.500 bis 100.000 g/mol in Gegenwart eines funktionalisierten acyclischen Diens. Hierfür wird Polybutadien vor dem Metatheseabbau teilweise hydriert, so dass weniger als 0, 5 mol%, vorzugsweise weniger als 0, 25 mol% vinylischer Doppelbindungen im Polymer verbleiben. Das für den Metatheseabbau eingesetzte acyclische Dien weist eine oder zwei funktionelle Gruppen, insbesondere Alkoxysilangruppen auf und wird in Mengen von 0, 0001 bis 1 mol% bezogen auf 1 Mol Doppelbindungen eingesetzt. Der Lehre von WO 2006/127483 kann nicht entnommen werden, welche Maßnahmen zu ergreifen sind, um doppelbindungs- und nitrilhaltige Polymere unter Metatheseabbau zu funktionalisieren.

US 5, 247, 023 beschreibt die Herstellung von Kohlenwasserstoffpolymeren mit Borangruppen am Kettenende oder an der Hauptkette. Die Einführung der Borangruppen erfolgt durch Kreuzmetathese von doppelbindungshaltigen Kohlenwasserstoffpolymeren mit doppelbindungshaltigen Boranen. Als doppelbindungshaltige Kohlenwasserstoffpolymere werden 1, 4- Polybutadien, 1, 4- Polyisoprene, Polypentenamer, Polyoctenamer, Polynorbornen sowie entsprechende Copolymere eingesetzt. Die für die Metathese eingesetzten Borane leiten sich ab von Dienen oder Trienen wie 1, 4- Pentadien, 1, 5- Hexadien und 1, 7- Octadien, die unter Verwendung von Dialkylboranen, Monoalkylboranen oder Diboranen monohydroboriert werden. Die nach der Metathese erhaltenen boranhaltigen Kohlenwasserstoffpolymere können durch polymeranaloge Reaktionen umgesetzt werden, wobei die Borangruppe in andere funktionelle Gruppen wie Hydroxylgruppen überführt wird. Nach der Lehre von US 5, 247, 023 werden für die Metathese keine doppelbindungshaltigen Kohlenwasserpolymere eingesetzt, die funktionelle Gruppen wie die in Nitrilkautschuk enthaltenen Nitrilgruppen enthalten. Des Weiteren ist die Synthese der für die Metathese eingesetzten Borane aufwändig, da unter Luft- und Feuchtigkeitsausschluss gearbeitet wrden muss. Auch ist bei der Durchführung der Metathese mit technisch verfügbaren Polymeren mit Nebenreaktionen von Wasser mit den Boranen zu rechnen, da technische Polymere häufig geringe Restfeuchtegehalte aufweisen. Des Weiteren ist die Herstellung von Polymeren mit den gewünschten funktionellen Gruppen aufwändig, da nach der Metathese noch eine Polymermodifikation durchgeführt werden muss, um die zunächst eingeführten funktionellen Gruppen in die gewünschten funktionellen Gruppen umzuwandeln.

Der Metatheseabbau von Nitrilkautschuken sowie hieraus erhaltene voll- und teilhydrierte Nitrilkautschuke ist prinzipiell bereits bekannt.

Beschrieben ist der Metatheseabbau von Nitrilkautschuk beispielsweise in WO- A- 02/100905, WO- A- 02/100941 und WO- A- 03/002613. Die Metathesereaktion wird zweckmäßigerweise im gleichen Lösungsmittel wie die nachfolgende Hydrierreaktion durchgeführt, damit man den abgebauten Nitrilkautschuk nach Beendigung der Abbaureaktion nicht aus dem Lösungsmittel isolieren muss, bevor man ihn der nachfolgenden Hydrierung unterwirft. Für die Katalyse der Metathese- Abbaureaktion verwendet man Metathesekatalysatoren, die gegenüber polaren Gruppen, insbesondere gegenüber Nitrilgruppen, tolerant sind.

**In** WO- A- 02/100905 und WO- A- 02/100941 werden Verfahren beschrieben, die den Abbau von Nitrilkautschuk-Ausgangspolymeren durch Olefinmetathese und die anschließende Hydrierung zu HNBR mit niedriger Mooney- Viskosität umfassen. Hierbei wird ein Nitrilkautschuk in einem ersten Schritt in Gegenwart eines Co- Olefins und spezieller Komplexkatalysatoren auf Osmium-, Ruthenium-, Molybdän- oder Wolfram- Basis umgesetzt und in einem zweiten Schritt hydriert. Erhältlich sind auf diesem Weg hydrierte Nitrilkautschuke mit einem Gewichtsmittel des Molekulargewichts ($M_w$) im Bereich von 30.000 bis 250.000, einer Mooney- Viskosität (ML 1+4 bei 100 °C) im Bereich von 3 bis 50 und einem Polydispersitätsindex PDI von kleiner 2.5. Zur Metathese von Nitrilkautschuk kann z.B. der Grubbs (I)-Katalysator eingesetzt werden. Die Metathese wird in Gegenwart eines Co- Olefins durchgeführt. Nach der Lehre von WO- A- 02/100905 ist das Olefin ein geradkettiges oder ein verzweigtes $C_2$- $C_{16}$- Olefin wie Ethylen, Isobuten, Styrol oder 1- Hexen. Des Weiteren wird allgemein angegeben, das Olefin könne auch funktionalisiert sein, wobei es die Metathese nicht inaktivieren oder sonstige negative Einflüsse haben soll. Es fehlen jedoch jegliche konkrete Hinweise auf funktionalisierte Olefine, die diese Eigenschaften aufweisen. Nach den Lehren von WO 02/100941 und WO 03/002613 ist das Olefin ein geradkettiges oder ein verzweigtes $C_2$- $C_{16}$- Olefin wie Ethylen, Isobuten, Styrol oder 1- Hexen. Funktionalisierte Olefine werden in WO 02/100941 und in WO 03/002613 nicht genannt.

Zur Steigerung der Aktivität der beim Metatheseabbau von Nitrilkautschuk in Gegenwart von 1- Olefinen eingesetzten Katalysatoren sind unterschiedlichste Zusätze bekannt: In EP- A- 1 825 913, EP- A- 1 894 946, EP- A- 2 027 919, EP- A- 2 027 919, EP- A- 2 145 681 und EP- A- 2145680 werden verschiedene Zusätze beschrieben, die zu einer Erhöhung der Aktivität von Metathesekatalysatoren führen. Hierbei wird die Metathese von Nitrilkautschuk bevorzugt in Gegenwart eines Co- Olefins durchgeführt, bei dem es sich insbesondere um ein geradkettiges oder verzweigtes $C_2$-$C_{16}$- Olefin wie Ethylen, Propylen, Isobuten, Styrol, 1- Hexen und 1- Octen, vorzugsweise um 1- Hexen oder 1- Octen handelt. Nicht beschrieben wird, wie nitrilhaltige funktionalisierte Kautschuke mit verringertem Molekulargewicht herzustellen sind.

Katalysatoren auf Ruthenium- und Osmium-Basis, die sich gut für den Metatheseabbau von Nitrilkautschuk eignen, sind in EP-A-1 760 093, EP-A-1 826 220, EP-A-2 028 194 und in EP-A-2 027 920 beschrieben.

Aus der EP- A- 1 760 093 ist es bekannt, den Metatheseabbau von Nitrilkautschuk in Gegenwart von Katalysatoren mit einem Carbenliganden, die ein Phosphoniumradikal tragen, durchzuführen. Die Metathese wird auch hier in Gegenwart eines Co- Olefins durchgeführt, bei dem es sich bevorzugt um ein geradkettiges oder verzweigtes $C_2$-$C_{16}$- Olefin wie Ethylen, Propylen, Isobuten, Styrol, 1- Hexen und 1- Octen, vorzugsweise um 1- Hexen oder 1- Octen handelt. EP- A- 1 760 093 kann nicht entnommen werden, mit welchen Olefinen funktionalisierte Nitrilkautschuke mit verringertem Molekulargewicht herzustellen sind.

Nach der Lehre von EP-A-1 826 220 gelingt ein effizienter Metathese-Abbau von Nitrilkautschuken bereits durch Einsatz geringer Mengen an Katalysatoren mit der allgemeinen Formel (I) mit den dafür angegebenen Bedeutungen der darin genannten Substituenten, Gruppen und Liganden.

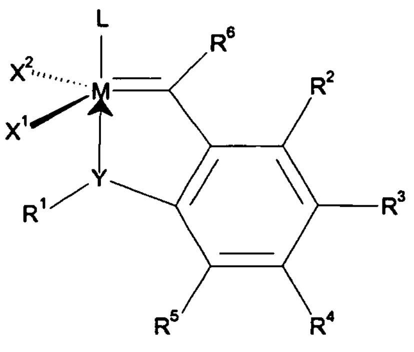

(I)

Auch diese Metathese kann in Gegenwart eines Co- Olefins durchgeführt werden, bei dem es sich bevorzugt um ein geradkettiges oder verzweigtes $C_2$- $C_{16}$- Olefin wie Ethylen, Propylen, Isobuten, Styrol, 1- Hexen und 1- Octen handelt. Aus der EP- A- 1 826 220 kann nicht entnommen werden, mit welchen Olefinen erfolgreich nitrilhaltige funktionalisierte Kautschuke mit verringertem Molekulargewicht herzustellen sind.

Nach der Lehre von EP- A- 2 028 194 eignen sich Katalysatoren der nachfolgend dargestellten allgemeinen Formel (I)- (III) ebenfalls für den Metatheseabbau von NBR. Die Metathese kann ebenfalls in Gegenwart von niedermolekularen Olefinen durchgeführt werden wie z.B. linearen oder verzweigten $C_2$- $C_{16}$- Olefinen, bevorzugt Ethylen,

Propylen, Isobuten, Styrol, 1- Hexen und 1- Octen, wobei 1- Hexen und 1- Octen besonders bevorzugt sind. EP- A- 2 028 194 kann nicht entnommen werden, wie nitrilhaltige funktionalisierte Kautschuke mit verringertem Molekulargewicht herzustellen sind.

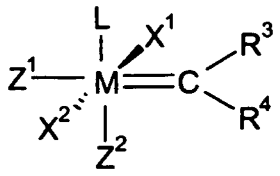

(I)

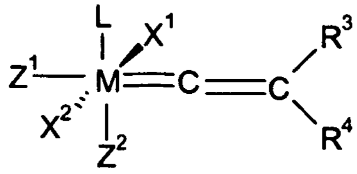

(II)

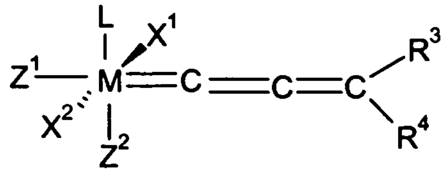

(III)

Mit den in EP-A-2 027 920 beschriebenen Ru- oder Os-basierten Katalysatoren der nachfolgend dargestellten allgemeinen Formeln, die fluorenylidenhaltige Carbene als Liganden aufweisen, ist ein besonders effizienter Abbau von Nitrilkautschuk in Gegenwart von 1-Olefinen möglich.

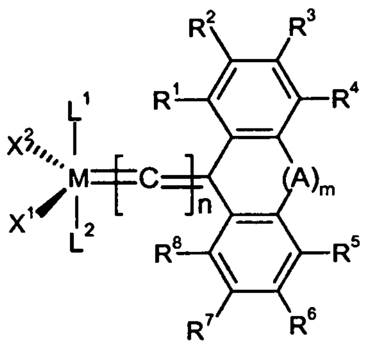

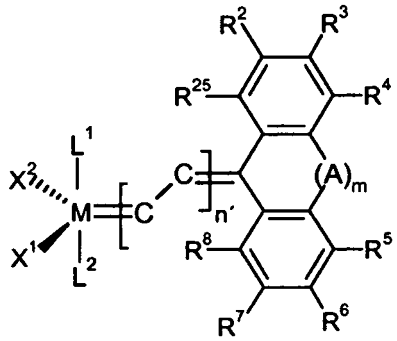

Allen zuvor genannten Verfahren zum Metatheseabbau von Nitrilkautschuk ist gemeinsam, dass nicht hydrierter Nitrilkautschuk unter Verwendung von 1-Olefinen, die keine funktionellen Gruppen enthalten, mit Metathesekatalysatoren behandelt wird, wobei das Molekulargewicht des Nitrilkautschuks reduziert und die Breite der Molmassenverteilung enger wird, d.h. der Polydispersitätsindex PDI ($M_w/M_n$, wobei Mw das Gewichtsmittel und Mn das Zahlenmittel des Molekulargewichts darstellt) sinkt. Die ausgehend von diesen Nitrilkautschuken erhaltenen hydrierten Nitrilkautschuke weisen in Kautschukmischungen gegenüber nicht-metathesierten hydrierten Nitrilkautschuken eine verbesserte Verarbeitbarkeit z.B. eine verbesserte Formfüllung beim Spritzgießen auf. Nach einer peroxidischen Vernetzung dieser Kautschukmischungen werden Vulkanisate mit niedrigerer Shore-A Härte, niedrigerem Moldulniveau bei unterschiedlichen Dehnungen sowie niedrigeren Reißfestigkeiten erhalten.

Aus WO- A- 00/71554 ist ferner eine Gruppe von Katalysatoren bekannt, die in der Fachwelt als "Grubbs (II) Katalysatoren" bezeichnet werden. Verwendet man einen solchen "Grubbs (II) Katalysator" wie z.B. den nachfolgend dargestellten Katalysator 1, 3- Bis (2, 4, 6- trimethylphenyl)- 2- imidazolidenyliden) (tricyclohexylphosphin)- ruthenium (phenyl- methylen) dichlorid für die NBR- Metathese (US- A- 2004/0132891), so gelingt diese sehr gut ohne Verwendung eines Co- Olefins.

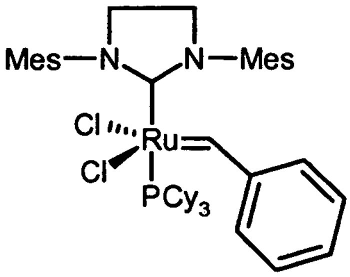

Grubbs (II) Katalysator

Nach der anschließenden Hydrierung, die bevorzugt im gleichen Lösungsmittel durchgeführt wird, weist der hydrierte Nitrilkautschuk niedrigere Molekulargewichte und eine engere Molekulargewichtsverteilung (PDI) auf als bei Verwendung von Katalysatoren des Grubbs- (I)- Typs. Die nach der Lehre von US- A- 2004/0132891 erhaltenen hydrierten Nitrilkautschuke weisen reduzierte Mischungsviskositäten und eine bessere Verarbeitbarkeit auf. Allerdings weisen die durch peroxidische Vernetzung hergestellten Vulkanisate ein reduziertes Modulniveau und niedrigere Reißfestigkeiten als Vulkanisate auf der Basis höhermolekularerer hydrierter Nitrilkautschuke auf. Der Lehre von US- A- 2004/0132891 ist nicht zu entnehmen, wie funktionalisierte nitrilhaltige Kautschuke herzustellen sind.

Bisher sind keine Maßnahmen bekannt geworden, die die Herstellung funktionalisierter Nitrilkautschuke mittels Metathese ermöglichen.

**Aufgabe der vorliegenden Erfindung** war es daher, ein Verfahren bereitzustellen, das die Herstellung funktionalisierter Nitrilkautschuke ermöglicht, die gleichzeitig ein gegenüber dem Ausgangsnitrilkautschuk verringertes Molekulargewicht $M_w$ aufweisen.

**Gelöst wird diese Aufgabe,** indem man Nitrilkautschuke in Gegenwart eines Metathesekatalysators sowie mindestens einem funktionalisierten Olefin spezieller Struktur einem Molekulargewichtsabbau unterzieht. Die eingesetzten Nitrilkautschuke können dabei unhydriert oder aber auch teilhydriert sein. Die auf diese Weise erhaltenen Nitrilkautschuke (wiederum unhydriert oder teilhydriert) zeichnen sich durch das Vorhandensein entsprechender funktioneller Gruppen und ein gegenüber dem Ausgangsnitrilkautschuk verringertes Molekulargewicht $M_w$ aus.

Sofern im weiteren von "Nitrilkautschuk" gesprochen wird, sind davon sowohl unhydrierte als auch teilhydrierte Nitrilkautschuke umfasst.

**Gegenstand der Erfindung** ist daher ein Verfahren zur Herstellung funktionalisierter Nitrilkautschuke, indem man einen Nitrilkautschuk mit einem Metathese-Katalysator in Kontakt bringt, bei dem es sich um einen Komplexkatalysator auf Basis eines Metalls der 6. oder 8. Nebengruppe des Periodensystems mit mindestens einem carbenartig an das Metall gebundenen Liganden handelt, in Gegenwart mindestens einer Verbindung der allgemeinen Formel (I) oder (II)

$$H_2C{=}CH{-}CH_2{-}X \qquad \text{(I)}$$

$$Y{-}CH_2{-}CH{=}CH{-}CH_2{-}Z \qquad \text{(II)}$$

wobei

X **$OR^1$,** worin $R^1$ für H, $C_1$- $C_{18}$ Alkyl, $C_7$- $C_{24}$ Aralkyl, Phenyl, Naphthyl oder Fluorenyl steht, **O- $(CH_2$- $CH_2$- $O)_n$- $R^2$,** worin $R^2$ für H, $C_1$- $C_{18}$ Alkyl, $C_7$- $C_{24}$ Aralkyl, Phenyl, Naphthyl oder Fluorenyl steht und n = 1 bis 20 ist,
**O- $(CH_2$- CH $(CH_3)$- $O)_nR^3$,** worin $R^3$ für H, $C_1$- $C_{18}$ Alkyl, $C_7$- $C_{24}$ Aralkyl, Phenyl, Naphthyl oder Fluorenyl steht und n = 1 bis 20 ist,
**O- C (=O)- $R^4$,** worin $R^4$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl,** welches durch mindestens einen Rest $OR^5$ substituiert ist, worin $R^5$ für H, $C_1$- $C_{18}$ Alkyl, $C_7$- $C_{24}$ Aralkyl, Phenyl, Naphthyl oder Fluorenyl steht, oder **NH- C (=O)- $OR^6$,** worin $R^6$ für H, $C_1$- $C_{18}$ Alkyl, $C_7$- $C_{24}$ Aralkyl, Phenyl, Naphthyl oder Fluorenyl steht, bedeutet, und

Y und Z gleich oder verschieden sind und

**$OR^7$,** worin $R^7$ für H, $C_1$- $C_{18}$ Alkyl, $C_7$- $C_{24}$ Aralkyl, Phenyl, Naphthyl oder Fluorenyl steht,
**O- $(CH_2$- $CH_2$- $O)_nR^8$,** worin $R^8$ für H, $C_1$- $C_{18}$ Alkyl, $C_7$- $C_{24}$ Aralkyl, Phenyl, Naphthyl oder Fluorenyl steht und n = 1 bis 20 ist,
**O- $(CH_2$- CH $(CH_3)$- $O)_n$- $R^9$,** worin $R^9$ für H, $C_1$- $C_{18}$ Alkyl, $C_7$- $C_{24}$ Aralkyl, Phenyl, Naphthyl oder Fluorenyl steht und n = 1 bis 20 ist,
**O- C (=O)- $R^{10}$,** worin $R^{10}$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl,** welches durch mindestens einen Rest $OR^{11}$ substituiert ist, worin $R^{11}$ für H, $C_1$- $C_{18}$ Alkyl, $C_7$- $C_{24}$ Aralkyl, Phenyl, Naphthyl oder Fluorenyl steht, oder
**NH- C (=O)- $OR^{12}$,** worin $R^{12}$ für H, $C_1$- $C_{18}$ Alkyl, $C_7$- $C_{24}$ Aralkyl, Phenyl, Naphthyl oder Fluorenyl steht, bedeuten.

Das erfindungsgemäße Verfahren ermöglicht die Herstellung funktionalisierter Nitrilkautschuke, die über die entsprechenden Endgruppen X oder aber Y und Z verfügen. Durch die simultan ablaufende Metathese und Funktionalisierung der Nitrilkautschuke verfügen die funktionalisierten Nitrilkautschuke über reduziertes Molekulargewicht. Es ist möglich, funktionalisierte Nitrilkautschuke herzustellen, die über ein Verhältnis von (Mw (e) /Mw (0) ) von < 55% verfügen, wobei Mw (e) das Gewichtsmittel des Molekulargewichts des funktionalisierten Nitrilkautschuks nach Durchführung des erfindungsgemäßen Verfahrens und Mw (0) das Gewichtsmittel des Molekulargewichts des eingesetzten Nitrilkautschuks vor Beginn des erfindungsgemäßen Verfahrens darstellt.

## Funktionalisierten Olefine der allgemeinen Formel (I) und (II)

Bevorzugt wird im erfindungsgemäßen Verfahren mindestens eine Verbindung der allgemeinen Formel (I) oder (II) als funktionalisiertes Olefin eingesetzt, worin

X **$OR^1$,** worin $R^1$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl,
**O- $(CH_2$- $CH_2$- $O)_n$- $R^2$,** worin $R^2$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl und n gleich 1 bis 20 und besonders bevorzugt gleich 1 bis 6 ist,
**O- $(CH_2$- CH $(CH_3)$- $O)_n$- $R^3$,** worin $R^3$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl und n gleich 1 bis 20 und besonders bevorzugt gleich 1 bis 6 ist,
**O- C (=O)- $R^4$,** worin $R^4$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl, $C_6$- $C_{12}$ Aryl, welches durch mindestens einen Rest $OR^5$ substituiert ist, worin $R^5$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl oder
**NH- C (=O)- $OR^6$,** worin $R^6$ für H, $C_1$- $C_{18}$ Alkyl, $C_7$- $C_{24}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl, bedeutet, und

Y und Z gleich oder verschieden sind und
**$OR^7$,** worin $R^7$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl,
**O- $(CH_2$- $CH_2$- O) $_n$- $R^8$,** worin $R^8$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- $(CH_2$- CH $(CH_3)$- $O)_n$- $R^9$,** worin $R^9$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- C (=O)- $R^{10}$,** worin $R^{10}$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl, **$C_6$- $C_{12}$ Aryl,** welches durch mindestens einen Rest $OR^{11}$ substituiert ist, worin $R^{11}$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl oder
**NH- C (=O)- $OR^{12}$,** worin $R^{12}$ für H, $C_1$- $C_{12}$ Alkyl, $C_7$- $C_{18}$ Aralkyl, Phenyl, Naphthyl oder Fluorenyl steht und besonders bevorzugt für H, $C_1$- $C_6$ Alkyl, $C_7$- $C_{12}$ Aralkyl oder Phenyl, bedeuten.

Derartige Verbindungen der allgemeinen Formel (I) und (II) sind entweder käuflich erhältlich oder aber nach dem Fachmann bekannten Syntheseverfahren herstellbar.
Insbesondere werden erfindungsgemäß die folgenden funktionalisierte Olefine eingesetzt:

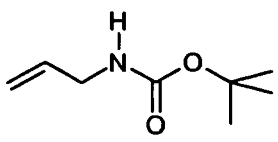

t-Butyl-n-Allylcarbamat

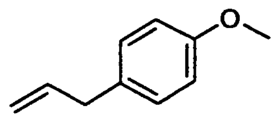

p-Allylanisol

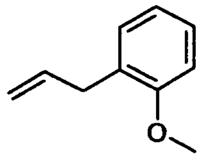

o-Allylanisol

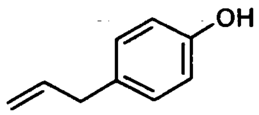

p-Allylphenol

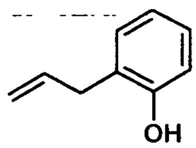

o-Allylphenol

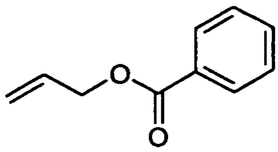

Benzoesäureallylester

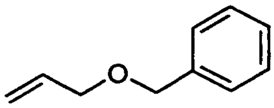

Allylbenzylether

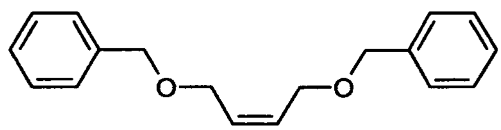

cis-1,4-Bisbenzoyloxy-2-buten

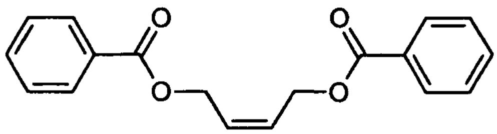

cis-2-Buten-1,4-diyl-dibenzoat

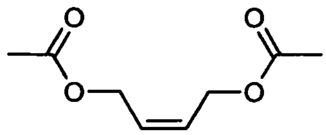

cis-2-Buten-1,4-diyl-diacetat

**Metathese-Katalysatoren:**

Bei den erfindungsgemäß einzusetzenden Metathese-Katalysatoren handelt es sich bewährterweise um Komplexkatalysatoren der 6. oder 8. Nebengruppe des Periodensystems, bevorzugt auf Basis von Molybdän, Osmium oder Ruthenium und besonders bevorzugt Osmium oder Ruthenium. Diese Komplexkatalysatoren besitzen das gemeinsame Strukturmerkmal, dass sie mindestens einen Liganden aufweisen, der carbenartig an das Metall gebunden ist. In einer bevorzugten Ausführungsform weist der Komplexkatalysator zwei Carben-Liganden auf, d.h. zwei Liganden, die carbenartig an das Zentralmetall des Komplexes gebunden sind.

Eingesetzt werden kann beispielsweise ein **Katalysator der allgemeinen Formel (A),**

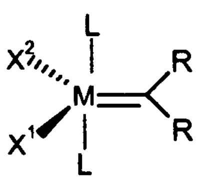

(A)

worin

M Osmium oder Ruthenium bedeutet,

$X^1$ und $X^2$ gleich oder verschieden sind und zwei Liganden, bevorzugt anionische Liganden, darstellen,

L gleiche oder verschiedene Liganden, bevorzugt neutrale Elektronen- Donoren darstellen,

R gleich oder verschieden sind und Wasserstoff, Alkyl, bevorzugt $C_1$- $C_{30}$- Alkyl, Cycloalkyl, bevorzugt $C_3$- $C_{20}$- Cycloalkyl, Alkenyl, bevorzugt $C_2$- $C_{20}$- Alkenyl, Alkinyl, bevorzugt $C_2$- $C_{20}$- Alkinyl, Aryl, bevorzugt $C_6$- $C_{24}$- Aryl, Carboxylat, bevorzugt $C_1$- $C_{20}$- Carboxylat, Alkoxy, bevorzugt $C_1$- $C_{20}$- Alkoxy, Alkenyloxy, bevorzugt $C_2$- $C_{20}$- Alkenyloxy, Alkinyloxy, bevorzugt $C_2$- $C_{20}$- Alkinyloxy, Aryloxy, bevorzugt $C_6$- $C_{24}$- Aryloxy, Alkoxycarbonyl, bevorzugt $C_2$- $C_{20}$- Alkoxycarbonyl, Alkylamino, bevorzugt $C_1$- $C_{30}$- Alkylamino, Alkylthio, bevorzugt $C_1$- $C_{30}$- Alkylthio, Arylthio, bevorzugt $C_6$- $C_{24}$- Arylthio, Alkylsulfonyl, bevorzugt $C_1$- $C_{20}$- Alkylsulfonyl, oder Alkylsulfinyl, bevorzugt $C_1$- $C_{20}$- Alkylsulfinyl darstellen, wobei diese Reste alle jeweils optional durch ein oder mehrere Alkyl-, Halogen-, Alkoxy-, Aryl- oder Heteroaryl- Reste substituiert sein können, oder alternativ beide Reste R unter Einbindung des gemeinsamen C- Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In bevorzugten Katalysatoren der allgemeinen Formel (A) ist der eine Rest R Wasserstoff und der andere Rest R bedeutet $C_1$- $C_{20}$- Alkyl, $C_3$- $C_{10}$- Cycloalkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{30}$- Alkylamino, $C_1$- $C_{30}$- Alkylthio, $C_6$- $C_{24}$- Arylthio, $C_1$- $C_{20}$- Alkylsulfonyl oder $C_1$- $C_{20}$- Alkylsulfinyl, wobei diese Reste alle jeweils durch ein oder mehrere Alkyl, -, Halogen-, Alkoxy-, Aryl- oder Heteroaryl- Reste substituiert sein können.

In den Katalysatoren der allgemeinen Formel (A) sind **$X^1$ und $X^2$** gleich oder verschieden und stellen zwei Liganden, bevorzugt anionische Liganden, dar. $X^1$ und $X^2$ können beispielsweise Wasserstoff, Halogen, Pseudohalogen, geradkettige oder verzweigte $C_1$- $C_{30}$- Alkyl, $C_6$- $C_{24}$- Aryl, $C_1$- $C_{20}$- Alkoxy, $C_6$- $C_{24}$- Aryloxy, $C_3$- $C_{20}$- Alkyldiketonat, $C_6$- $C_{24}$- Aryldiketonat, $C_1$- $C_{20}$- Carboxylat, $C_1$- $C_{20}$- Alkylsulfonat, $C_6$- $C_{24}$- Arylsulfonat, $C_1$- $C_{20}$- Alkylthiol, $C_6$- $C_{24}$- Arylthiol, $C_1$- $C_{20}$- Alkylsulfonyl oder $C_1$- $C_{20}$- Alkylsulfinyl- Reste bedeuten.

Die vorgenannten Reste $X^1$ und $X^2$ können ferner durch ein oder mehrere weitere Reste substituiert sein, beispielsweise durch Halogen, bevorzugt Fluor, $C_1$- $C_{10}$- Alkyl, $C_1$- $C_{10}$- Alkoxy oder $C_6$- $C_{24}$- Aryl, wobei auch diese Reste gegebenenfalls wiederum durch ein oder mehrere Substituenten substituiert sein können, die aus der Gruppe umfassend Halogen, bevorzugt Fluor, $C_1$- $C_5$- Alkyl, $C_1$- $C_5$- Alkoxy und Phenyl ausgewählt sind. In einer bevorzugten Ausführungsform sind $X^1$ und $X^2$ gleich oder verschieden und bedeuten Halogen, insbesondere Fluor, Chlor, Brom oder Jod, Benzoat, $C_1$- $C_5$- Carboxylat, $C_1$- $C_5$- Alkyl, Phenoxy, $C_1$- $C_5$- Alkoxy, $C_1$- $C_5$- Alkylthiol, $C_6$- $C_{24}$- Arylthiol, $C_6$- $C_{24}$- Aryl oder $C_1$- $C_5$- Alkylsulfonat. In einer besonders bevorzugten Ausführungsform sind $X^1$ und $X^2$ identisch und bedeuten Halogen, insbesondere Chlor, $CF_3COO$, $CH_3COO$, $CFH_2COO$, $(CH_3)_3CO$, $(CF_3)_2$ $(CH_3)$ CO, $(CF_3)$ $(CH_3)_2CO$, PhO (Phenoxy), MeO (Methoxy), EtO (Ethoxy), Tosylat (p- $CH_3$- $C_6H_4$- $SO_3$), Mesylat (2, 4, 6- Trimethylphenyl) oder $CF_3SO_3$ (Trifluormethansulfonat) .

In der allgemeinen Formel (A) sind **L** gleiche oder verschiedene Liganden und sind bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")- Liganden darstellen.

Bevorzugt bedeuten die beiden Liganden L unabhängig voneinander einen $C_6$- $C_{24}$- Aryl-, $C_1$- $C_{10}$- Alkyl- oder $C_3$- $C_{20}$- Cycloalkyl- Phosphin- Liganden, einen sulfonierten $C_6$- $C_{24}$- Aryl- oder sulfonierten $C_1$- $C_{10}$- Alkyl- Phosphin- Liganden, einen $C_6$- $C_{24}$- Aryl- oder $C_1$- $C_{10}$- Alkyl- Phosphinit- Liganden, einen $C_6$- $C_{24}$- Aryl- oder $C_1$- $C_{10}$- Alkylphosphonit- Liganden, einen $C_6$- $C_{24}$- Aryl- oder $C_1$- $C_{10}$- Alkylphosphit- Liganden, einen $C_6$- $C_{24}$- Aryl- oder $C_1$- $C_{10}$- Alkylarsin- Liganden, einen $C_6$- $C_{24}$- Aryl- oder $C_1$- $C_{10}$- Alkylamin- Liganden, einen Pyridin- Liganden, einen $C_6$- $C_{24}$- Aryl- oder $C_1$- $C_{10}$- Alkyl- Sulfoxid- Liganden, einen $C_6$- $C_{24}$- Aryl- oder $C_1$- $C_{10}$- Alkyl- Ether- Liganden oder einen $C_6$- $C_{24}$- Aryl- oder $C_1$- $C_{10}$- Alkylamid- Liganden, die alle jeweils durch eine Phenylgruppe substituiert sein können, die wiederum gegebenenfalls durch einen Halogen-, $C_1$- $C_5$- Alkyl- oder $C_1$- $C_5$- AlkoxyRest substituiert ist.

Die Bezeichnung "Phosphin" schließt beispielsweise $PPh_3$, P (p- Tol)$_3$, P (o- Tol)$_3$, PPh $(CH_3)_2$, P $(CF_3)_3$, P (p- $FC_6H_4)_3$, P (p- $CF_3C_6H_4)_3$, P ($C_6H_4$- $SO_3Na)_3$, P ($CH_2C_6H_4$- $SO_3Na)_3$, P (iso- Propyl)$_3$, P ($CHCH_3$ $(CH_2CH_3)$ )$_3$, P (Cyclopentyl)$_3$, P (Cyclohexyl)$_3$, P (Neopentyl)$_3$ und P (Neophenyl)$_3$ ein.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri- tert.- Butylphosphit, Triisopropylphosphit und Methyldiphenylphosphit ein.

Die Bezeichnung "Stibin" schließt beispielsweise Triphenylstibin, Tricyclohexylstibin und Trimethylstiben ein.

Die Bezeichnung "Sulfonat" schließt z.B. Trifluoromethansulfonat, Tosylat und Mesylat ein.

Die Bezeichnung "Sulfoxid" schließt beispielsweise $(CH_3)_2S$ (=O) und $(C_6H_5)_2S=O$ ein.

Die Bezeichnung "Thioether" schließt beispielsweise $CH_3SCH_3$, $C_6H_5SCH_3$, $CH_3OCH_2CH_2SCH_3$ und Tetrahydrothiophen ein.

Die Bezeichnung "Pyridin" soll im Rahmen dieser Anmeldung als Oberbegriff sämtliche stickstoffhaltigen Liganden einschließen wie sie z.B. von Grubbs in der WO- A- 03/011455 genannten werden. Beispiele hierfür sind: Pyridin, Picoline ($\alpha$-, $\beta$-, und $\gamma$- Picolin), Lutidine (2, 3-, 2, 4-, 2, 5-, 2, 6-, 3, 4- und 3, 5- Lutidin), Collidin (2, 4, 6- Trimethylpyridin), Trifluormethylpyridin, Phenylpyridin, 4- (Dimethylamino) pyridin, Chlorpyridine, Brompyridine, Nitropyridine, Chinolin, Pyrimidin, Pyrrol, Imidazol und Phenylimidazol.

Handelt es sich bei einem oder beiden der Liganden L um einen Imidazolidinrest (Im), so weist dieser üblicherweise eine Struktur der allgemeinen Formeln (IIa) oder (IIb) auf,

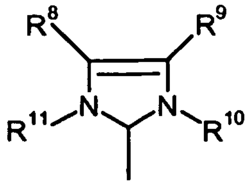

(IIa)

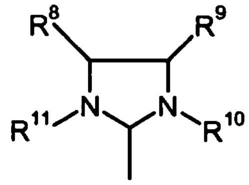

(IIb)

worin

$R^8$, $R^9$, $R^{10}$, $R^{11}$ gleich oder verschieden sind und Wasserstoff, geradkettiges oder verzweigtes $C_1$- $C_{30}$- Alkyl, $C_3$- $C_{20}$- Cycloalkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{20}$- Aryloxy, $C_2$- $C_{20}$- Alkoxycarbonyl, $C_1$- $C_{20}$- Alkylthio, $C_6$- $C_{20}$- Arylthio, $C_1$- $C_{20}$- Alkylsulfonyl, $C_1$- $C_{20}$- Alkylsulfonat, $C_6$- $C_{20}$- Arylsulfonat oder $C_1$- $C_{20}$- Alkylsulfinyl bedeuten.

Optional sind einer oder mehrere der Reste $R^8$, $R^9$, $R^{10}$, $R^{11}$ unabhängig voneinander durch einen oder mehrere Substituenten, vorzugsweise geradkettiges oder verzweigtes $C_1$- $C_{10}$- Alkyl, $C_3$- $C_8$- Cycloalkyl, $C_1$- $C_{10}$- Alkoxy oder $C_6$- $C_{24}$- Aryl substituiert, wobei diese vorgenannten Substituenten wiederum durch ein oder mehrere Reste, vorzugsweise ausgewählt aus der Gruppe Halogen, insbesondere Chlor oder Brom, $C_1$- $C_5$- Alkyl, $C_1$- $C_5$- Alkoxy und Phenyl substituiert sein können.

Nur zur Klarstellung sei hinzugefügt, dass die in den allgemeinen Formeln (IIa) und (IIb) im Rahmen dieser Anmeldung dargestellten Strukturen des Imidazolidinrests mit den in der Literatur für diesen Imidazolidinrest (Im) häufig auch zu findenden Strukturen (IIa') und (IIb'), die den Carben- Charakter des Imidazolidinrests hervorheben, gleichbedeutend sind. Dies gilt entsprechend auch für die zugehörigen bevorzugten, nachfolgend noch dargestellten Strukturen (IIIa)- (IIIf) .

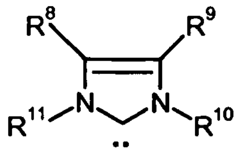

(IIa')

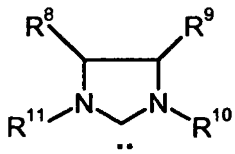

(IIb')

In einer bevorzugten Ausführungsform der Katalysatoren der allgemeinen Formel (A) bedeuten $R^8$ und $R^9$ unabhängig voneinander Wasserstoff, $C_6$- $C_{24}$- Aryl, besonders bevorzugt Phenyl, geradkettiges oder verzweigtes $C_1$- $C_{10}$- Alkyl, besonders bevorzugt Propyl oder Butyl, oder bilden zusammen unter Einschluss der Kohlenstoffatome, an die sie gebunden sind, einen Cycloalkyl- oder Aryl- Rest, wobei alle vorgenannten Reste gegebenenfalls wiederum durch ein oder mehrere weitere Reste substituiert sein können, ausgewählt aus der Gruppe umfassend geradkettiges oder verzweigtes $C_1$- $C_{10}$- Alkyl, $C_1$- $C_{10}$- Alkoxy, $C_6$- $C_{24}$- Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat,

Isocyanat, Carbodiimid, Carboalkoxy, Carbamat und Halogen.

In einer bevorzugten Ausführungsform der Katalysatoren der allgemeinen Formel (A) sind ferner die Reste $R^{10}$ und $R^{11}$ gleich oder verschieden und bedeuten geradkettiges oder verzweigtes $C_1$- $C_{10}$- Alkyl, besonders bevorzugt i-Propyl oder Neopentyl, $C_3$- $C_{10}$- Cycloalkyl, bevorzugt Adamantyl, $C_6$- $C_{24}$- Aryl, besonders bevorzugt Phenyl, $C_1$- $C_{10}$- Alkylsulfonat, besonders bevorzugt Methansulfonat, $C_6$- $C_{10}$- Arylsulfonat, besonders bevorzugt p- Toluolsulfonat.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$- $C_5$- Alkyl, insbesondere Methyl, $C_1$- $C_5$- Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste $R^{10}$ und $R^{11}$ gleich oder verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Ph jeweils für einen Phenyl- Rest, Bu für einen Butyl- Rest und Mes jeweils für 2, 4, 6- Trimethylphenyl- Rest steht oder Mes alternativ in allen Fällen für 2, 6- Diisopropylphenyl steht.

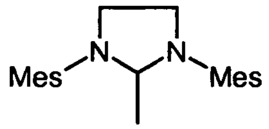

(IIIa)

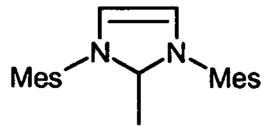

(IIIb)

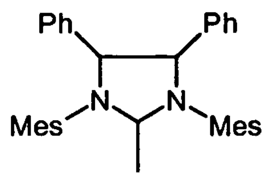

(IIIc)

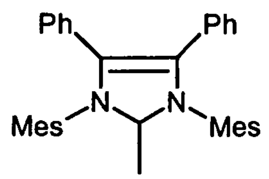

(IIId)

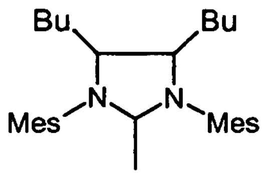

(IIIe)

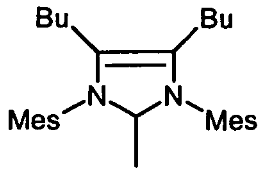

(IIIf)

Verschiedenste Vertreter der Katalysatoren der Formel (A) sind prinzipiell bekannt, so z.B. aus der WO-A-96/04289 und der WO-A-97/06185.

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (A) fallen, und die Strukturen (IV) (Grubbs (I)- Katalysator) und (V) (Grubbs (II)- Katalysator), wobei Cy für Cyclohexyl steht, besitzen.

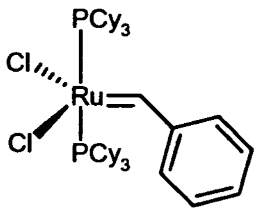

(IV)

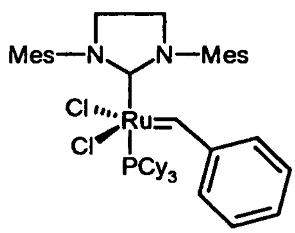

(V)

In einer weiteren Ausführungsform wird ein **Katalysator der allgemeinen Formel (A1)** eingesetzt, worin

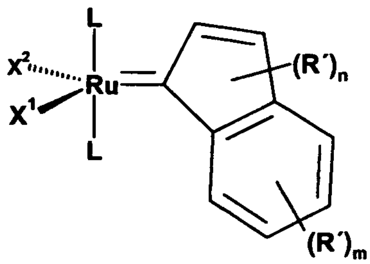

(A1)

$X^1$, $X^2$ und L die gleichen allgemeinen, bevorzugten und besonders bevorzugten Bedeutungen haben können wie in

| | |
|---|---|
| | der allgemeinen Formel (A), |
| n | gleich 0, 1 oder 2 ist, |
| m | gleich 0, 1, 2, 3 oder 4 ist und |
| R' | gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können. |

Als bevorzugter Katalysator, der unter die allgemeine Formel (A1) fällt, kann beispielsweise derjenige der folgenden Formel (VI) eingesetzt werden, wobei Mes jeweils für 2, 4, 6- Trimethylphenyl und Ph für Phenyl steht.

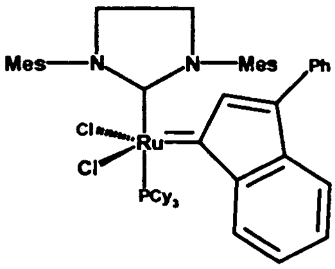

(VI)

Dieser in der Literatur auch als "Nolan-Katalysator" bezeichnete Katalysator ist beispielsweise aus WO-A-2004/112951 bekannt.

Bewährt hat sich auch der Einsatz eines **Katalysator der allgemeinen Formel (B),**

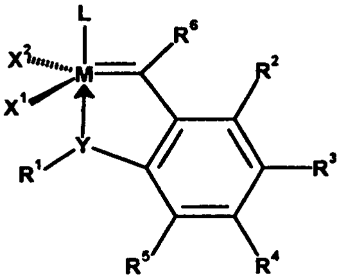

(B)

worin

| | |
|---|---|
| M | Ruthenium oder Osmium bedeutet, |
| $X^1$ und $X^2$ | gleiche oder verschiedene Liganden, bevorzugt anionische Liganden sind, |
| Y | Sauerstoff (O), Schwefel (S), einen Rest N- $R^1$ oder einen Rest P- $R^1$ bedeutet, wobei $R^1$ die nachfolgend genannten Bedeutungen besitzt, |
| $R^1$ | einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl- Rest darstellt, die alle jeweils optional durch ein oder mehrere Alkyl-, Halogen-, Alkoxy-, Aryl- oder Heteroaryl- Reste substituiert sein können, |
| $R^2$, $R^3$, $R^4$ und $R^5$ | gleich oder verschieden sind und Wasserstoff, organische oder anorganische Reste darstellen, |
| $R^6$ | H, einen Alkyl-, Alkenyl-, Alkinyl- oder einen Aryl- Rest bedeutet und |
| L | ein Ligand ist, der die gleichen Bedeutungen besitzt wie für die Formel (A) genannt. |

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew. Chem. Int. Ed. 2003, 42, 4592 beschrieben sind, und die Katalysatoren, die von Grela in WO- A- 2004/035596, Eur. J. Org. Chem 2003, 963- 966 und Angew. Chem. Int. Ed. 2002, 41, 4038 sowie in J. Org. Chem. 2004, 69, 6894- 96 und Chem. Eur. J 2004, 10, 777- 784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P $(R^7)_3$ Rest, wobei $R^7$ unabhängig voneinander $C_1$- $C_6$ Alkyl, $C_3$- $C_8$- Cycloalkyl oder Aryl bedeuten, oder aber einen gegebenenfalls substituierten Imidazolidinrest ("Im") darstellt.

**$C_1$- $C_6$- Alkyl** steht beispielsweise für Methyl, Ethyl, n- Propyl, iso- Propyl, n- Butyl, sec.- Butyl, tert.- Butyl, n-Pentyl, 1- Methylbutyl, 2- Methylbutyl, 3- Methylbutyl, neo- Pentyl, 1- Ethylpropyl und n- Hexyl.

**$C_3$- $C_8$- Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest **(Im)** weist eine Struktur der allgemeinen Formeln (IIa) oder (IIb) auf,

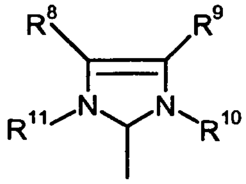

**(IIa)**

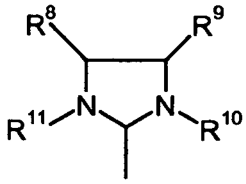

**(IIb)**

worin

$R^8$, $R^9$, $R^{10}$, $R^{11}$ gleich oder verschieden sind und Wasserstoff, geradkettiges oder verzweigtes $C_1$- $C_{30}$- Alkyl, $C_3$- $C_{20}$- Cycloalkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{20}$- Aryloxy, $C_2$- $C_{20}$- Alkoxycarbonyl, $C_1$- $C_{20}$- Alkylthio, $C_6$- $C_{20}$- Arylthio, $C_1$- $C_{20}$- Alkylsulfonyl, $C_1$- $C_{20}$- Alkylsulfonat, $C_6$- $C_{20}$- Arylsulfonat oder $C_1$- $C_{20}$- Alkylsulfinyl bedeuten.

Gegebenenfalls kann einer oder mehrere der Reste $R^8$, $R^9$, $R^{10}$, $R^{11}$ unabhängig voneinander durch einen oder mehrere Substituenten, vorzugsweise geradkettiges oder verzweigtes $C_1$- $C_{10}$- Alkyl, $C_3$- $C_8$- Cycloalkyl, $C_1$- $C_{10}$- Alkoxy oder $C_6$- $C_{24}$- Aryl substituiert sein, wobei diese vorgenannten Substituenten wiederum durch ein oder mehrere Reste, vorzugsweise ausgewählt aus der Gruppe Halogen, insbesondere Chlor oder Brom, $C_1$- $C_5$- Alkyl, $C_1$- $C_5$- Alkoxy und Phenyl substituiert sein können.

Bewährt hat es sich insbesondere, Katalysatoren der allgemeinen Formel (B) einzusetzen, worin $R^8$ und $R^9$ unabhängig voneinander Wasserstoff, $C_6$- $C_{24}$- Aryl, besonders bevorzugt Phenyl, geradkettiges oder verzweigtes $C_1$- $C_{10}$- Alkyl, besonders bevorzugt Propyl oder Butyl, bedeuten oder zusammen unter Einschluss der Kohlenstoffatome, an die sie gebunden sind, einen Cycloalkyl- oder Aryl- Rest bilden, wobei alle vorgenannten Reste gegebenenfalls wiederum durch ein oder mehrere weitere Reste substituiert sein können, ausgewählt aus der Gruppe umfassend geradkettiges oder verzweigtes $C_1$- $C_{10}$- Alkyl, $C_1$- $C_{10}$- Alkoxy, $C_6$- $C_{24}$- Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform wird ein Katalysator der allgemeinen Formel (B) eingesetzt, worin die Reste $R^{10}$ und $R^{11}$ gleich oder verschieden sind und geradkettiges oder verzweigtes $C_1$- $C_{10}$- Alkyl, besonders bevorzugt i- Propyl oder Neopentyl, $C_3$- $C_{10}$- Cycloalkyl, bevorzugt Adamantyl, $C_6$- $C_{24}$- Aryl, besonders bevorzugt Phenyl, $C_1$- $C_{10}$- Alkylsulfonat, besonders bevorzugt Methansulfonat, oder $C_6$- $C_{10}$- Arylsulfonat, besonders bevorzugt p- Toluolsulfonat bedeuten.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$- $C_5$- Alkyl, insbeson-

dere Methyl, $C_1$- $C_5$- Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste $R^{10}$ und $R^{11}$ gleich oder verschieden sein und bedeuten i-Propyl, Neopentyl, Adamantyl oder Mesityl.

Besonders bevorzugte Imidazolidinreste (Im) haben die bereits zuvor genannten Strukturen (IIIa- IIIf), wobei Mes jeweils für 2, 4, 6- Trimethylphenyl steht.

In den Katalysatoren der allgemeinen Formel (B) sind **$X^1$ und $X^2$** gleich oder verschieden und können beispielsweise Wasserstoff, Halogen, Pseudohalogen, geradkettige oder verzweigte $C_1$- $C_{30}$- Alkyl, $C_6$- $C_{24}$- Aryl, $C_1$- $C_{20}$- Alkoxy, $C_6$- $C_{24}$- Aryloxy, $C_3$- $C_{20}$- Alkyldiketonat, $C_6$- $C_{24}$- Aryldiketonat, $C_1$- $C_{20}$- Carboxylat, $C_1$- $C_{20}$- Alkylsulfonat, $C_6$- $C_{24}$- Arylsulfonat, $C_1$- $C_{20}$- Alkylthiol, $C_6$- $C_{24}$- Arylthiol, $C_1$- $C_{20}$- Alkylsulfonyl oder $C_1$- $C_{20}$- Alkylsulfinyl bedeuten.

Die vorgenannten Reste $X^1$ und $X^2$ können ferner durch ein oder mehrere weitere Reste substituiert sein, beispielsweise durch Halogen, bevorzugt Fluor, $C_1$- $C_{10}$- Alkyl, $C_1$- $C_{10}$- Alkoxy oder $C_6$- $C_{24}$- Aryl- Reste, wobei auch die letzteren Reste gegebenenfalls wiederum durch ein oder mehrere Substituenten substituiert sein können, die aus der Gruppe umfassend Halogen, bevorzugt Fluor, $C_1$- $C_5$- Alkyl, $C_1$- $C_5$- Alkoxy und Phenyl ausgewählt sind.

In einer bevorzugten Ausführungsform sind $X^1$ und $X^2$ gleich oder verschieden und bedeuten Halogen, insbesondere Fluor, Chlor, Brom oder Jod, Benzoat, $C_1$- $C_5$- Carboxylat, $C_1$- $C_5$- Alkyl, Phenoxy, $C_1$- $C_5$- Alkoxy, $C_1$- $C_5$- Alkylthiol, $C_6$- $C_{24}$- Arylthiol, $C_6$- $C_{24}$- Aryl oder $C_1$- $C_5$- Alkylsulfonat.

In einer besonders bevorzugten Ausführungsform sind $X^1$ und $X^2$ identisch und bedeuten Halogen, insbesondere Chlor, $CF_3COO$, $CH_3COO$, $CFH_2COO$, $(CH_3)_3CO$, $(CF_3)_2 (CH_3) CO$, $(CF_3) (CH_3)_2CO$, PhO (Phenoxy), MeO (Methoxy), EtO (Ethoxy), Tosylat (p- $CH_3$- $C_6H_4$- $SO_3$), Mesylat (2, 4, 6- Trimethylphenyl) oder $CF_3SO_3$ (Trifluormethansulfonat) .

In der allgemeinen Formel (B) bedeutet der **Rest $R^1$** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest $R^1$ einen $C_1$- $C_{30}$- Alkyl, $C_3$- $C_{20}$- Cylcoalkyl, $C_2$- $C_{20}$- Alkenyl, $C_2$- $C_{20}$- Alkinyl, $C_6$- $C_{24}$- Aryl, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{10}$- Alkylamino-, $C_1$- $C_{20}$- Alkylthio, $C_6$- $C_{24}$- Arylthio, $C_1$- $C_{20}$- Alkylsulfonyl oder $C_1$- $C_{20}$- Alkylsulfinyl Rest, die alle jeweils optional durch ein oder mehrere Alkyl-, Halogen-, Alkoxy-, Aryl- oder Heteroaryl- Reste substituiert sein können.

Bevorzugt steht $R^1$ für einen $C_3$- $C_{20}$- Cylcoalkyl- Rest, einen $C_6$- $C_{24}$- Aryl- Rest oder einen geradkettigen oder verzweigten $C_1$- $C_{30}$- Alkyl- Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht $R^1$ für einen geradkettigen oder verzweigten $C_1$- $C_{12}$- Alkyl- Rest.

Der $C_3$- $C_{20}$- Cycloalkyl- Rest umfasst beispielsweise Cyclopropyl, Cyclobutyl, Cylopentyl, Cyclohexyl, Cycloheptyl und Cyclooctyl.

Bei dem $C_1$- $C_{12}$- Alkyl- Rest kann es sich beispielsweise um Methyl, Ethyl, n- Propyl, iso- Propyl, n- Butyl, sec.- Butyl, tert.- Butyl, n- Pentyl, 1- Methylbutyl, 2- Methylbutyl, 3- Methylbutyl, neo- Pentyl, 1- Ethylpropyl, n- Hexyl, n-Heptyl, n- Octyl, n- Decyl oder n- Dodecyl handeln. Insbesondere steht $R^1$ für Methyl oder Isopropyl.

Der $C_6$- $C_{24}$- Aryl- Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (B) sind die **Reste $R^2$, $R^3$, $R^4$ und $R^5$** gleich oder verschieden und können Wasserstoff, organische oder anorganische Reste darstellen.

In einer geeigneten Ausführungsform sind $R^2$, $R^3$, $R^4$, $R^5$ gleich oder verschieden und bedeuten Wasserstoff, Halogen, Nitro, $CF_3$, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind $R^2$, $R^3$, $R^4$, $R^5$ gleich oder verschieden und bedeuten Wasserstoff, Halogen, bevorzugt Chlor oder Brom, Nitro, $CF_3$, $C_1$- $C_{30}$- Alkyl, $C_3$- $C_{20}$- Cylcoalkyl, $C_2$- $C_{20}$- Alkenyl, $C_2$- $C_{20}$- Alkinyl, $C_6$- $C_{24}$- Aryl, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylamino-, $C_1$- $C_{20}$- Alkylthio, $C_6$- $C_{24}$- Arylthio, $C_1$- $C_{20}$- Alkylsulfonyl oder $C_1$- $C_{20}$- Alkylsulfinyl Reste, die alle jeweils optional durch ein oder mehrere $C_1$- $C_{30}$- Alkyl-, $C_1$- $C_{20}$- Alkoxy-, Halogen-, $C_6$- $C_{24}$- Aryl- oder Heteroaryl- Reste substituiert sein können.

In einer besonders bewährten Ausführungsform sind $R^2$, $R^3$, $R^4$, $R^5$ sind gleich oder verschieden und stehen für Nitro, geradkettige oder verzweigte $C_1$- $C_{30}$- Alkyl-, $C_5$- $C_{20}$- Cylcoalkyl-, geradkettige oder verzweigte $C_1$- $C_{20}$- Alkoxy- Reste oder $C_6$- $C_{24}$- Aryl- Reste, bevorzugt Phenyl oder Naphthyl. Die $C_1$- $C_{30}$- Alkyl- Reste sowie $C_1$- $C_{20}$- Alkoxy- Reste können optional durch ein oder mehrere Doppel- oder Dreifachbindungen oder auch ein oder mehrere

Heteroatome, bevorzugt Sauerstoff oder Stickstoff, unterbrochen sein.

Ferner können auch zwei oder mehr der Reste $R^2$, $R^3$, $R^4$ oder $R^5$ über aliphatische oder aromatische Strukturen verbrückt sein. $R^3$ und $R^4$ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest $R^6$** Wasserstoff, einen Alkyl-, Alkenyl-, Alkinyl- oder einen Aryl- Rest. Bevorzugt bedeutet $R^6$ H, einen $C_1$- $C_{30}$- Alkyl, einen $C_2$- $C_{20}$- Alkenyl-, einen $C_2$- $C_{20}$- Alkinyl oder einen $C_6$- $C_{24}$- Aryl- Rest. Besonders bevorzugt ist $R^6$ Wasserstoff.

Ferner geeignet sind **Katalysatoren gemäß der allgemeinen Formel (B1),**

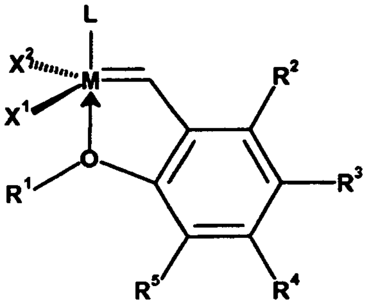

**(B 1)**

worin

M, L, $X^1$, $X^2$, $R^1$, $R^2$, $R^3$, $R^4$ und $R^5$ die für die allgemeine Formel (B) genannten allgemeinen, bevorzugten und besonders bevorzugten Bedeutungen besitzen können.

Die Katalysatoren der allgemeinen Formel (B1) sind z.B. aus US 2002/0107138 A1 (Hoveyda et al.) prinzipiell bekannt und können nach dort angegebenen Herstellverfahren erhalten werden.

Besonders bevorzugt sind Katalysatoren der allgemeinen Formel (B1), wobei

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$- $C_{12}$ Alkylrest, insbesondere Isopropyl steht, |
| $R^2$, $R^3$, $R^4$, $R^5$ | die für die allgemeine Formel (B) genannten allgemeinen und bevorzugten Bedeutungen besitzen, insbesondere alle Wasserstoff bedeuten und |
| L | die für die allgemeine Formel (B) genannten allgemeinen und bevorzugten Bedeutungen besitzt und insbesondere für eine gegebenenfalls substituierten Imidazolidin- Rest der Formeln (IIa) oder (IIb) steht, |

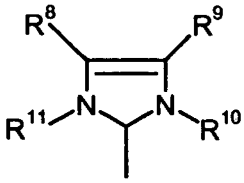

(IIa)

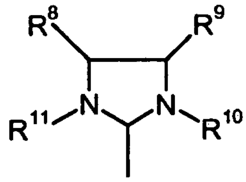

(IIb)

worin

$R^8$, $R^9$, $R^{10}$, $R^{11}$ gleich oder verschieden sind und Wasserstoff, geradkettiges oder verzweigtes $C_1$- $C_{30}$- Alkyl, $C_3$- $C_{20}$- Cylcoalkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylthio, $C_6$- $C_{24}$- Arylthio, $C_1$- $C_{20}$- Alkylsulfonyl, $C_1$- $C_{20}$- Alkylsulfonat, $C_6$- $C_{24}$- Arylsulfonat oder $C_1$- $C_{20}$- Alkylsulfinyl bedeuten, wobei die vorgenannten Reste jeweils durch einen oder mehrere Substituenten, vorzugsweise geradkettiges oder verzweigtes $C_1$- $C_{10}$- Alkyl, $C_3$- $C_8$- Cycloalkyl, $C_1$- $C_{10}$- Alkoxy oder $C_6$- $C_{24}$- Aryl substituiert sein können, wobei auch diese vorgenannten Substituenten

wiederum durch ein oder mehrere Reste, vorzugsweise ausgewählt aus der Gruppe Halogen, insbesondere Chlor oder Brom, $C_1$- $C_5$- Alkyl, $C_1$- $C_5$- Alkoxy und Phenyl substituiert sein können.

Ganz besonders bevorzugt ist ein Katalysator, der unter die allgemeine Strukturformel (B1) fällt und die Formel (VII) besitzt, wobei Mes jeweils für 2, 4, 6- Trimethylphenyl steht.

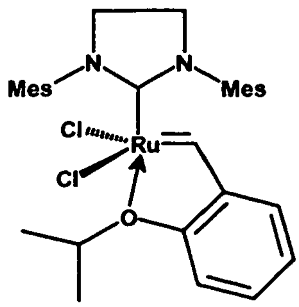

(VII)

Dieser Katalysator (VII) wird in der Literatur auch als "Hoveyda-Katalysator" bezeichnet.

Weiterhin geeignete Katalysatoren sind solche, die unter die allgemeine Strukturformel (B1) fallen und eine der folgenden Formeln (VIII), (IX), (X), (XI), (XII), (XIII), (XIV) und (XV) besitzen, wobei Mes jeweils 2, 4, 6- Trimethylphenyl bedeutet.

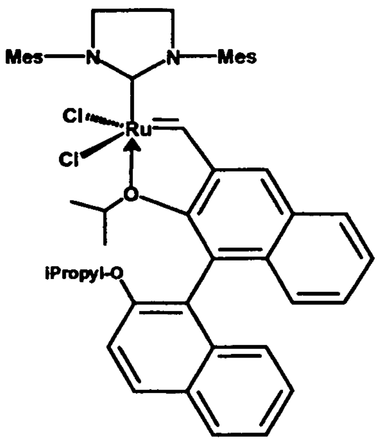

(VIII)

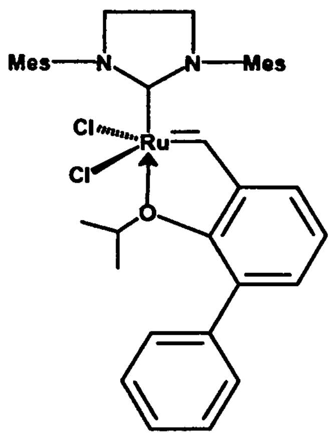

(IX)

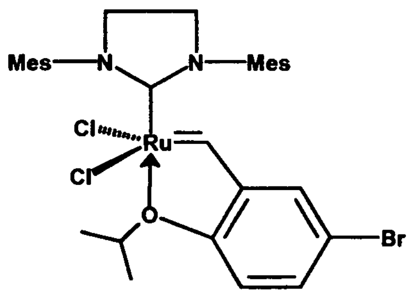

(X)

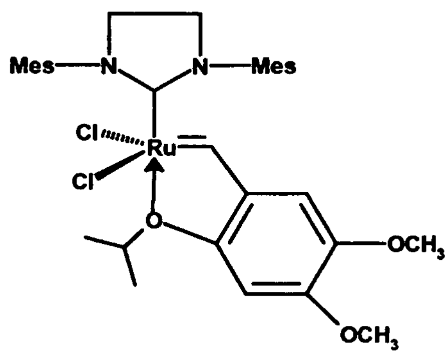

(XI)

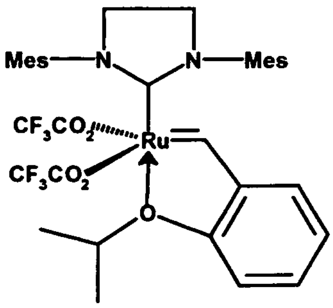

(XII)

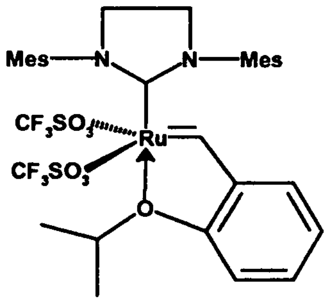

(XIII)

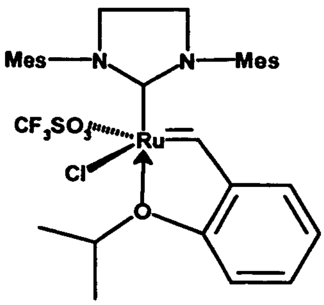

(XIV)

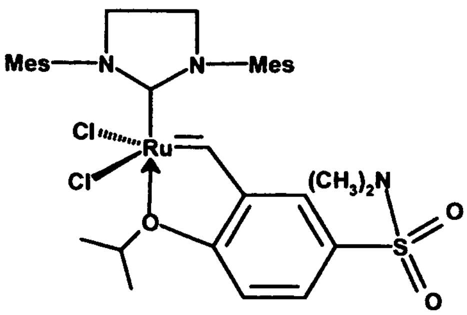

(XV)

Ein weiterer geeigneter Katalysator besitzt die **allgemeine Formel (B2),**

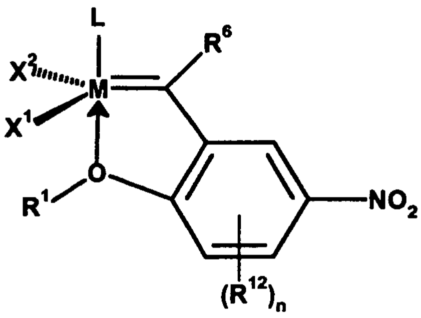

**(B2)**

worin

| | |
|---|---|
| M, L, $X^1$, $X^2$, $R^1$ und $R^6$ | die für die Formel (B) genannten allgemeinen und bevorzugten Bedeutungen haben, |
| $R^{12}$ | gleich oder verschieden sind und die für die Reste $R^2$, $R^3$, $R^4$ und $R^5$ in der Formel (B) genannten allgemeinen und bevorzugten Bedeutungen, ausgenommen Wasserstoff, besitzen und |
| n | gleich 0, 1, 2 oder 3 ist. |

Die Katalysatoren der allgemeinen Formel (B2) sind beispielsweise aus WO-A-2004/035596 (Grela) prinzipiell bekannt und können nach dort angegebenen Herstellverfahren erhalten werden.

Besonders bevorzugt sind Katalysatoren der allgemeinen Formel (B2), wobei

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$-$C_{12}$ Alkylrest, insbesondere für Isopropyl steht, |
| $R^{12}$ | die für die allgemeine Formel (B2) genannten Bedeutungen besitzt, |
| n | gleich 0, 1, 2 oder 3 und insbesondere gleich 0 ist |
| $R^6$ | Wasserstoff bedeutet und |
| L | die für die allgemeine Formel (B) genannten Bedeutungen besitzt, und insbesondere für einen gegebenenfalls substituierten Imidazolidin-Rest der Formeln (IIa) oder (IIb) steht, worin $R^8$, $R^9$, $R^{10}$, $R^{11}$ gleich oder verschieden sind und die für die insbesondere bevorzugten Katalysatoren der allgemeinen Formel (B1) genannten Bedeutungen besitzen. |

Besonders geeignet ist ein Katalysator der nachfolgenden Struktur (XVI)

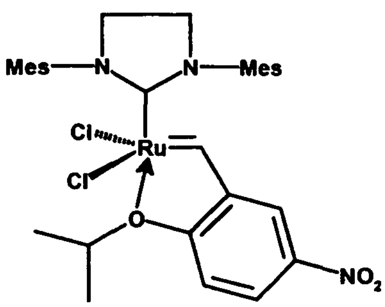

**(XVI)**

Der Katalysator (XVI) wird in der Literatur auch als "Grela-Katalysator" bezeichnet.

Ein weiterer geeigneter Katalysator, der unter die allgemeine Formel (B2) fällt, besitzt folgende Struktur (XVII), wobei Mes jeweils für 2, 4, 6- Trimethylphenyl steht.

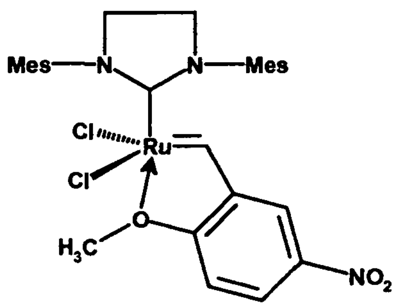

**(XVII)**

Alternative kann auch dendritisch aufgebauter **Katalysator der allgemeinen Formel (B3)** eingesetzt werden,

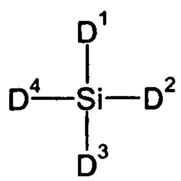

(B3)

worin $D^1$, $D^2$, $D^3$ und $D^4$ jeweils eine Struktur der nachfolgend dargestellten allgemeinen Formel (XVIII) aufweisen, die über die rechts dargestellte Methylengruppe an das Silicium der Formel (B3) angebunden ist und

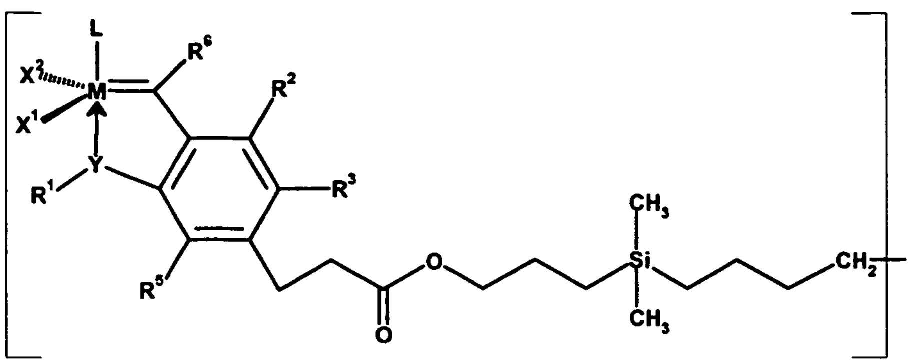

**(XVIII)**

worin

M, L, $X^1$, $X^2$, $R^1$, $R^2$, $R^3$, $R^5$ und $R^6$ die für die allgemeine Formel (B) genannten allgemeinen und bevorzugten Bedeutungen besitzen können.

Die Katalysatoren gemäß der allgemeinen Formel (B3) sind aus US 2002/0107138 A1 bekannt und gemäß den dort gemachten Angaben herstellbar.

Eine weitere alternative Ausführungsform betrifft einen Katalysator der Formel (B4),

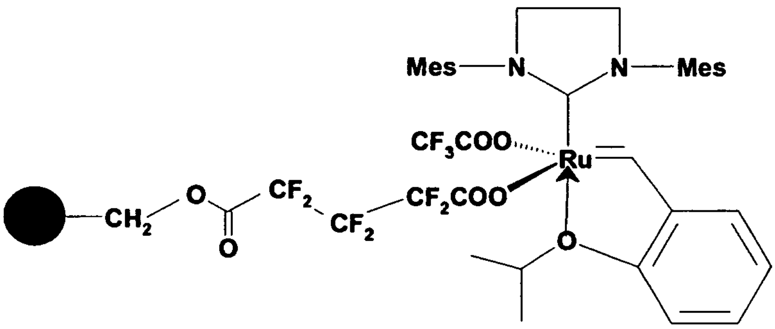

(B4)

worin das Symbol • für einen Träger steht.

Bevorzugt handelt es sich bei dem Träger um ein Poly (styroldivinylbenzol)- Copolymer (PS- DVB) . Die Katalysatoren gemäß Formel (B4) sind aus Chem. Eur. J. 2004 10, 777- 784 prinzipiell bekannt und nach dort beschriebenen Herstellmethoden erhältlich.

Alle vorgenannten Katalysatoren des Typs (B) können entweder als solche eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Eine weitere Ausführungsform betrifft einen **Katalysator der allgemeinen Formel (C),** worin

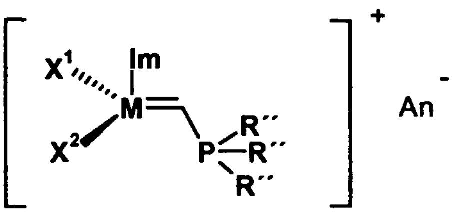

(C)

| | |
|---|---|
| M | Ruthenium oder Osmium bedeutet, |
| $X^1$ und $X^2$ | gleich oder verschieden sind und anionische Liganden darstellen, |
| R″ | gleich oder verschieden sind und organische Reste darstellen, |
| Im | einen gegebenenfalls substituierten Imidazolidinrest darstellt und |
| An | ein Anion darstellt. |

Die Katalysatoren der allgemeinen Formel (C) sind prinzipiell bekannt (siehe z.B. Angew. Chem. Int. Ed. 2004,43, 6161-6165).

$X^1$ und $X^2$ können in der allgemeinen Formel (C) die gleichen allgemeinen, bevorzugten und besonders bevorzugten Bedeutungen besitzen wie in den Formeln (A) und (B) .

Der Imidazolidinrest (Im) weist üblicherweise eine Struktur der allgemeinen Formeln (IIa) oder (IIb) auf, die bereits für den Katalysator- Typ der Formeln (A) und (B) genannt wurden und kann auch alle dort als bevorzugt genannten Strukturen, insbesondere die der Formeln (IIIa)- (IIIf) aufweisen.

Die Reste R″ sind in der allgemeinen Formel (C) gleich oder verschieden und bedeuten einen geradkettigen oder verzweigten $C_1$- $C_{30}$- Alkyl-, $C_5$- $C_{30}$- Cylcoalkyl- oder Aryl- Rest, wobei die $C_1$- $C_{30}$- Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R″in der allgemeinen Formel (C) gleich und bedeuten Phenyl, Cyclohexyl, Cyclopentyl, Isopropyl, o-Tolyl, o-Xylyl oder Mesityl.

Alternativ kann auch ein **Katalysator der allgemeinen Formel (D)** eingesetzt werden, worin

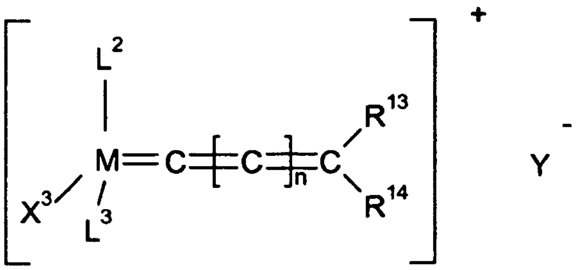

(D)

M Ruthenium oder Osmium bedeutet,

$R^{13}$, $R^{14}$ unabhängig voneinander Wasserstoff, $C_1$- $C_{20}$- Alkyl, $C_2$- $C_{20}$- Alkenyl, $C_2$- $C_{20}$ Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylthio, $C_1$- $C_{20}$- Alkylsulfonyl oder $C_1$- $C_{20}$ Alkylsulfinyl bedeuten,

$X^3$ ein anionischer Ligand ist,

$L^2$ ein neutraler $\pi$- gebundener Ligand ist, unabhängig davon, ob mono- oder polycyclisch,

$L^3$ einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl- Gruppen, Phosphite, Phosphinite, Phosphonite, Phosphinamine, Arsine, Stibine, Ether, Amine, Amide, Imine, Sulfoxide, Thioether und Pyridine darstellt,

$Y^-$ ein nicht- koordinierendes Anion ist und

n 0, 1, 2, 3, 4 oder 5 ist.

In einer weiteren Ausführungsform wird ein **Katalysator der allgemeinen Formel (E)** eingesetzt,

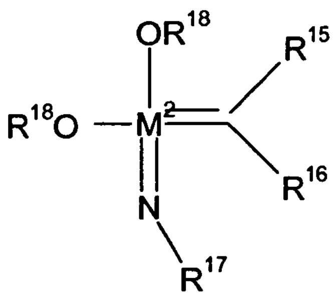

(E)

worin

$M^2$ Molybdän bedeutet,

$R^{15}$ und $R^{16}$ gleich oder verschieden sind und Wasserstoff, $C_1$- $C_{20}$- Alkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylthio, $C_1$- $C_{20}$- Alkylsulfonyl oder $C_1$- $C_{20}$ Alkylsulfinyl bedeuten,

$R^{17}$ and $R^{18}$ gleich oder verschieden sind und einen substituierten oder einen halogen- substituierten $C_1$- $C_{20}$- Alkyl, $C_6$- $C_{24}$- Aryl, $C_6$- $C_{30}$- Aralkyl- Rest oder Silikonenthaltende Analoga davon darstellen.

Alternativ kann auch ein **Katalysator der allgemeinen Formel (F)** eingesetzt werden, worin

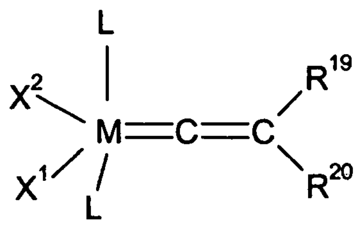 (F)

M Ruthenium oder Osmium bedeutet,

$X^1$ und $X^2$ gleich oder verschieden sind und anionische Liganden darstellen, die alle in den allgemeinen Formeln (A) und (B) genannte Bedeutungen von $X^1$ und $X^2$ annehmen können,

L gleiche oder verschiedene Liganden darstellt, die alle in den allgemeinen Formeln (A) und (B) genannten Bedeutungen von L annehmen können,

$R^{19}$ and $R^{20}$ gleich oder verschieden sind und Wasserstoff oder substituiertes oder unsubstituiertes Alkyl bedeuten.

Alternativ kann auch ein **Katalysator der allgemeinen Formel (G), (H) oder (K)** eingesetzt werden,

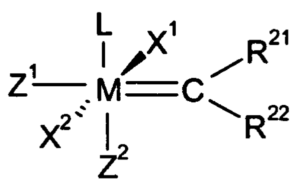

(G)

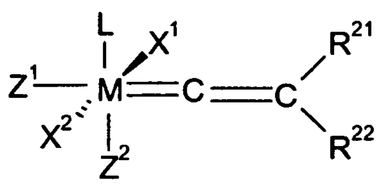

(H)

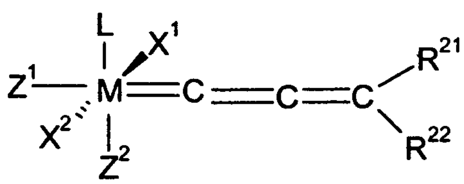

(K)

wobei

M Osmium oder Ruthenium bedeutet,

$X^1$ und $X^2$ gleich oder verschieden sind und zwei Liganden, bevorzugt anionische Liganden, darstellen,

L einen Liganden, bevorzugt einen neutralen Elektronen-Donor darstellt,

$Z^1$ und $Z^2$ gleich oder verschieden sind und neutrale Elektronen-Donoren darstellen,

$R^{21}$ und $R^{22}$ unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (G), (H) und (K) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den erfindungsgemäß einsetzbaren Katalysatoren der allgemeinen Formeln (G), (H) und (K) eingesetzt sind **$Z^1$ und $Z^2$** gleich oder verschieden und stellen neutrale Elektronen- Donoren dar. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt $C_1$- $C_{10}$- Alkyl, Cycloalkyl, bevorzugt $C_3$- $C_8$- Cycloalkyl, Alkoxy, bevorzugt $C_1$- $C_{10}$- Alkoxy, Halogen, bevorzugt Chlor oder Brom, Aryl, bevorzugt $C_6$- $C_{24}$- Aryl, oder Heteroaryl, bevorzugt $C_5$- $C_{23}$ Heteroaryl- Reste, die jeweils erneut durch ein oder mehrere Gruppen, bevorzugt ausgewählt aus der Gruppe bestehend aus Halogen, insbesondere Chlor oder Brom, $C_1$- $C_5$- Alkyl, $C_1$- $C_5$- Alkoxy und Phenyl substituiert sein können.

Beispiele für $Z^1$ und $Z^2$ umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

$Z^1$ und $Z^2$ können auch miteinander verbrückt sein unter Ausbildung einer cyclischen Struktur. In diesem Fall handelt es sich bei $Z^1$ und $Z^2$ um einen einzigen zweizähnigen Liganden.

In den Katalysatoren der allgemeinen Formeln (G), (H) und (K) kann L die gleichen allgemeinen, bevorzugten und besonders bevorzugten Bedeutungen annehmen wie L in den allgemeinen Formeln (A) und (B).

In den Katalysatoren der allgemeinen Formeln (G), (H) und (K) sind **$R^{21}$ und $R^{22}$** gleich oder verschieden und bedeuten Alkyl, bevorzugt $C_1$- $C_{30}$- AlKyl, besonders bevorzugt $C_1$- $C_{20}$- Alkyl, Cycloalkyl, bevorzugt $C_3$- $C_{20}$- Cycloalkyl, besonders bevorzugt $C_3$- $C_8$- Cycloalkyl, Alkenyl, bevorzugt $C_2$- $C_{20}$- Alkenyl, besonders bevorzugt $C_2$- $C_{16}$- Alkenyl, Alkinyl, bevorzugt $C_2$- $C_{20}$- Alkinyl, besonders bevorzugt $C_2$- $C_{16}$- Alkinyl, Aryl, bevorzugt $C_6$- $C_{24}$- Aryl, Carboxylat, bevorzugt $C_1$- $C_{20}$- Carboxylat, Alkoxy, bevorzugt $C_1$- $C_{20}$- Alkoxy, Alkenyloxy, bevorzugt $C_2$- $C_{20}$- Alkenyloxy, Alkinyloxy, bevorzugt $C_2$- $C_{20}$- Alkynyloxy, Aryloxy, bevorzugt $C_6$- $C_{24}$- Aryloxy, Alkoxycarbonyl, bevorzugt $C_2$- $C_{20}$- Alkoxycarbonyl, Alkylamino, bevorzugt $C_1$- $C_{30}$- Alkylamino, Alkylthio, bevorzugt $C_1$- $C_{30}$- Alkylthio, Arylthio, bevorzugt $C_6$- $C_{24}$- Arylthio, Alkylsulfonyl, bevorzugt $C_1$- $C_{20}$- Alkylsulphonyl, oder Alkylsulfinyl, bevorzugt $C_1$- $C_{20}$- Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (G), (H) und (K) sind **$X^1$ und $X^2$** gleich oder verschieden und können die gleichen allgemeinen, bevorzugten und besonders bevorzugten Bedeutungen haben wie zuvor für $X^1$ und $X^2$ in der allgemeinen Formel (A) angegeben.

Bevorzugt werden Katalysatoren der allgemeinen Formeln (G), (H) und (K) eingesetzt, wobei

M Ruthenium ist,

$X^1$ und $X^2$ beide Halogen, insbesondere Chlor darstellen,

$R^1$ und $R^2$ gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt $C_1$- $C_{10}$- Alkyl, Cycloalkyl, bevorzugt $C_3$- $C_8$- Cycloalkyl, Alkoxy, bevorzugt $C_1$- $C_{10}$- Alkoxy, Halogen, bevorzugt Chlor oder Brom, Aryl, bevorzugt $C_6$- $C_{24}$- Aryl, oder Heteroaryl, bevorzugt $C_5$- $C_{23}$ Heteroaryl- Reste substituiert sein können,

$R^{21}$ und $R^{22}$ gleich oder verschieden sind und $C_1$- $C_{30}$- Alkyl $C_3$- $C_{20}$- Cycloalkyl, $C_2$- $C_{20}$- Alkenyl, $C_2$- $C_{20}$- Alkynyl, $C_6$- $C_{24}$- Aryl, $C_1$- $C_{20}$- Carboxylate, $C_1$- $C_{20}$- Alkoxy, $C_2$- $C_{20}$- Alkenyloxy, $C_2$- $C_{20}$- Alkynyloxy, $C_6$- $C_{24}$- Aryloxy, $C_2$- $C_{20}$- Alkoxycarbonyl, $C_1$- $C_{30}$- Alkylamino, $C_1$- $C_{30}$- Alkylthio, $C_6$- $C_{24}$- Arylthio, $C_1$- $C_{20}$- Alkylsulphonyl, $C_1$- $C_{20}$- Alkylsulphinyl darstellen, und

L eine Struktur der bereits zuvor beschriebenen allgemeinen Formeln (IIa) oder (IIb), inbesondere der Formeln (IIIa) bis (IIIf) besitzt.

Ein besonders bevorzugter Katalysator, der unter die allgemeine Formel (G) fällt, besitzt die Struktur (XIX), worin

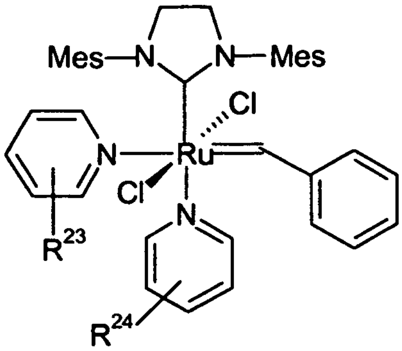

(XIX)

$R^{23}$ und $R^{24}$ gleich oder verschieden sind und Halogen, geradkettiges oder verzweigtes $C_1$- $C_{20}$- Alkyl, $C_1$- $C_{20}$-Heteroalkyl, $C_1$- $C_{10}$- Haloalkyl, $C_1$- $C_{10}$- Alkoxy, $C_6$- $C_{24}$- Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die genannten Reste $C_1$- $C_{20}$- Alkyl, $C_1$- $C_{20}$- Heteroalkyl, $C_1$- $C_{10}$- Haloalkyl, $C_1$- $C_{10}$- Alkoxy, $C_6$- $C_{24}$- Aryl, bevorzugt Phenyl, Formyl, Nitro, Stickstoff- Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, $C_1$- $C_5$- Alkyl, $C_1$- $C_5$- Alkoxy oder Phenyl substituiert sein.

Besonders bevorzugte Ausführungsformen des Katalysators der Formel (XIX) besitzen die Strukturen (XIX a) oder (XIX b), wobei $R^{23}$ und $R^{24}$ die gleichen Bedeutungen besitzen wie in der Formel (XIX) angegeben.

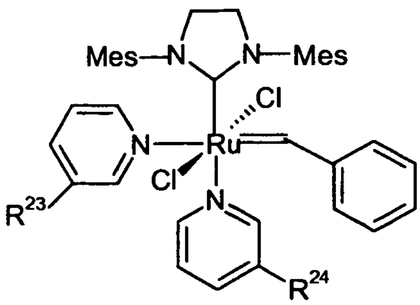

(XIXa)

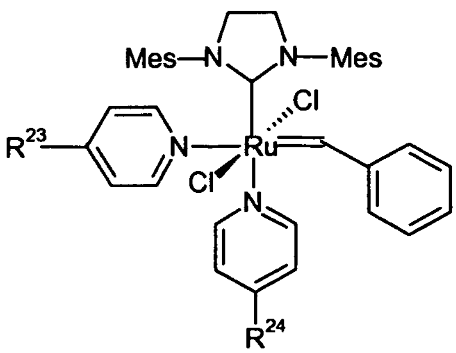

(XIXb)

Wenn $R^{23}$ und $R^{24}$ für H stehen, wird in der Literatur vom "Grubbs III Katalysator" gesprochen.

Weitere geeignete Katalysatoren, die unter die allgemeinen Formeln (G), (H) und (K) fallen, besitzen die nachfolgend genannten Strukturformen (XX)- (XXXI), wobei Mes jeweils für 2, 4, 6- Trimethylphenyl steht.

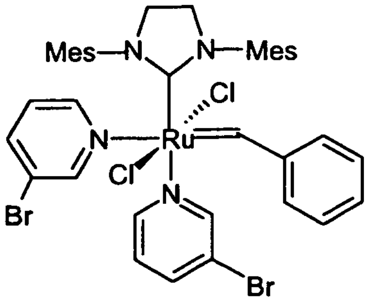

(XX)

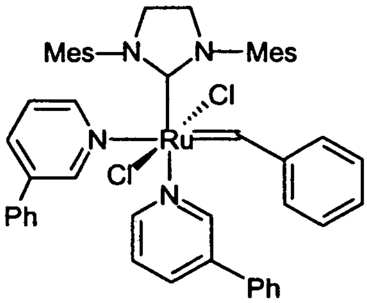

(XXI)

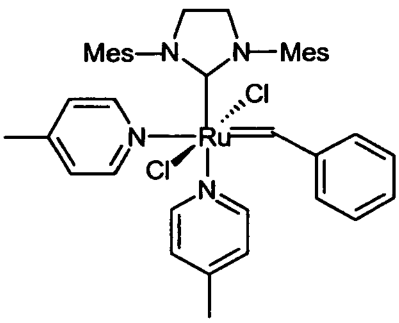

(XXII)

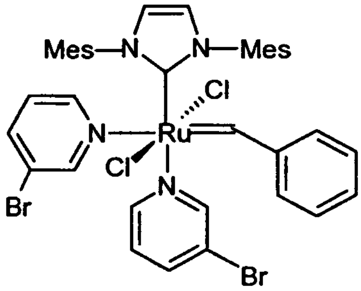

(XXIII)

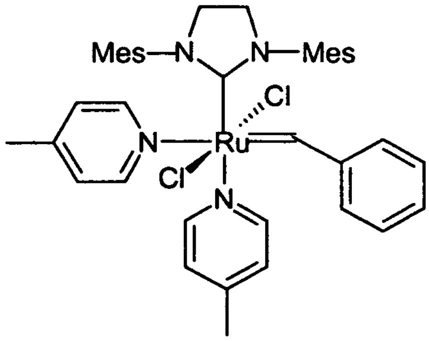

(XXIV)

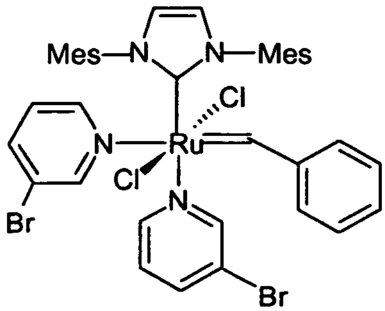

(XXV)

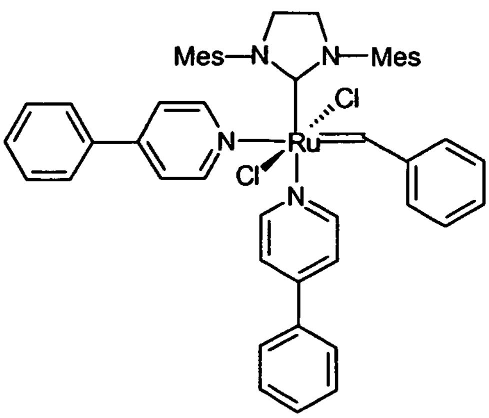

(XXVI)

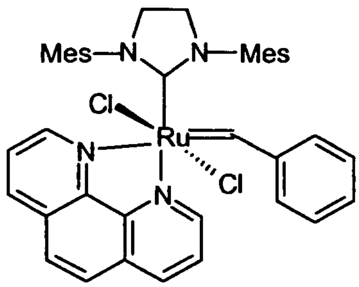

(XXVII)

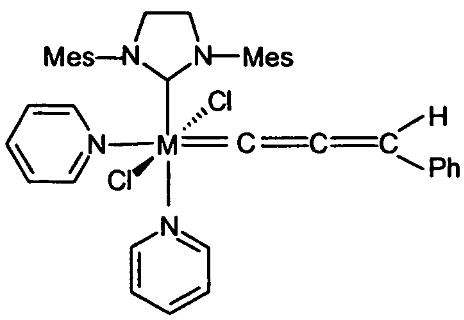

(XXVIII)

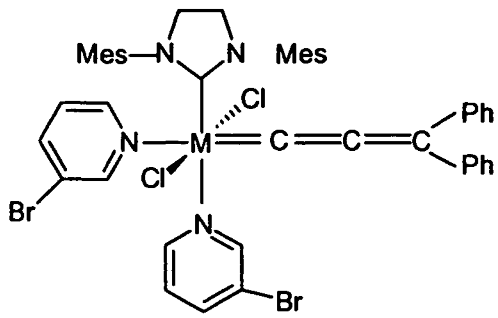

(XXIX)

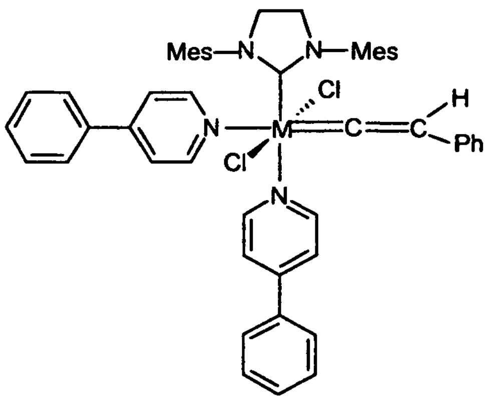

(XXX)

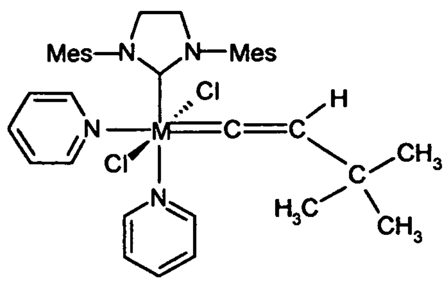

(XXXI)

Alternativ kann auch ein **Katalysator (N)** eingesetzt werden, der das allgemeine Strukturelement (N1) aufweisen, wobei das mit einem "*" gekennzeichnete Kohlenstoff-Atom über eine oder mehrere Doppelbindungen an das Katalysator-Grundgerüst gebunden ist,

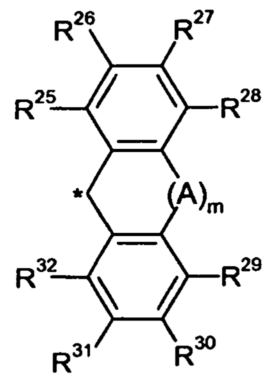

(N1)

und worin

$R^{25}$- $R^{32}$ gleich oder verschieden sind und für Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat (- $SO_3^-$), - $OSO_3^-$, -$PO_3^-$ oder $OPO_3^-$ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von $R^{25}$- $R^{32}$ unter Einschluss der Ringkohlenstoff- Atome, an die sie gebunden sind, durch Verbrückung eine cyclische Gruppe, bevorzugt ein aromatisches System, ausbilden, oder alternativ $R^8$ gegebenenfalls mit einem anderen Liganden des Ruthenium- oder Osmium- Carben- Komplexkatalysators verbrückt ist,

m 0 oder 1 ist und

A Sauerstoff, Schwefel, C ($R^{33}R^{34}$), N- $R^{35}$, -C ($R^{36}$) =C ($R^{37}$) -, - C ($R^{36}$) ($R^{38}$)- C ($R^{37}$) ($R^{39}$)- bedeutet, worin $R^{33}$- $R^{39}$ gleich oder verschieden sind und jeweils die gleichen Bedeutungen besitzen können wie die Reste $R^{25}$- $R^{32}$.

Die erfindungsgemäßen Katalysatoren weisen das Strukturelement der allgemeinen Formel (N1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (N) sind bereits in der EP-A-2 027 920 beschrieben, auf die hiermit für die Definition der Katalysatoren (N) und deren Herstellung Bezug genommen wird ("incorporated by reference"), soweit die entsprechenden Jurisdiktionen dies zulassen.

Zu den Katalysatoren (N) mit einem Strukturelement der allgemeinen Formel (N1) zählen beispielsweise solche der nachfolgenden **allgemeinen Formeln (N2a) und (N2b)**,

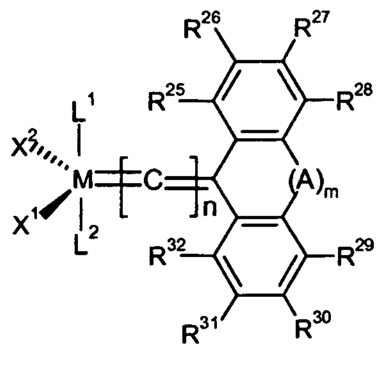

(N2a)

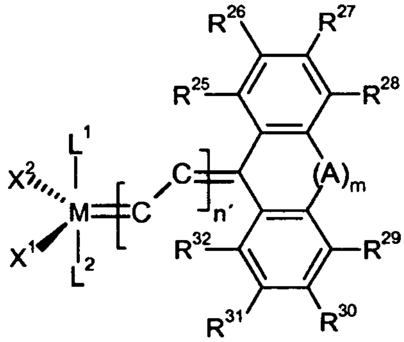

(N2b)

worin

| | |
|---|---|
| M | Ruthenium oder Osmium ist, |
| $X^1$ und $X^2$ | gleich oder verschieden sind und zwei Liganden, bevorzugt anionische Liganden, darstellen, |
| $L^1$ und $L^2$ | gleiche oder verschiedene Liganden, bevorzugt neutrale Elektronen-Donoren darstellen, wobei $L^2$ alternativ auch mit dem Rest $R^8$ verbrückt sein kann, |
| n | 0, 1, 2 oder 3, bevorzugt 0, 1 oder 2, ist, |
| n' | 1 oder 2, bevorzugt 1 ist, und $R^{25}$ -$R^{32}$, m und A die gleichen Bedeutungen besitzen wie in der allgemeinen Formel (N1). |

Bei den Katalysatoren der allgemeinen Formel (N2a) ist das Strukturelement der allgemeinen Formel (N1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungsgemäßen Katalysatoren der allgemeinen Formel (N2b) ist das Strukturelement der allgemeinen Formel (N1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (N2a) und (N2b) umfassen somit Katalysatoren, bei denen die folgenden **allgemeinen Strukturelemente (N3)- (N9)**

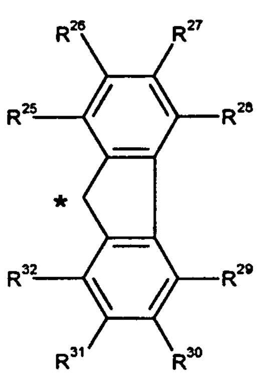

(N3)

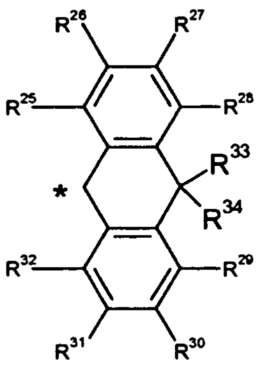

(N4)

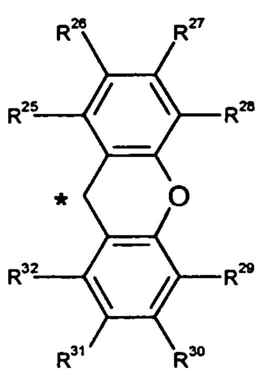

(N5)

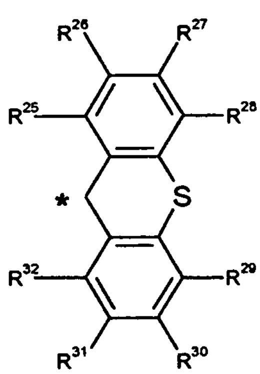

(N6)

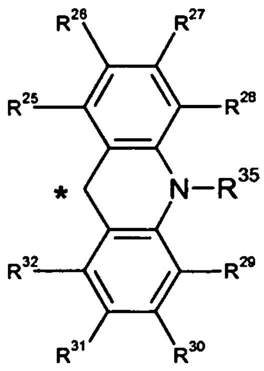

(N7)

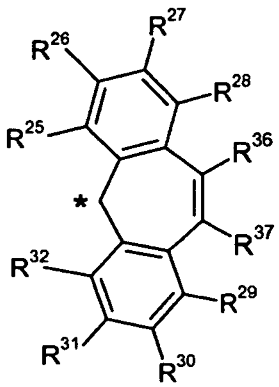

(N8)

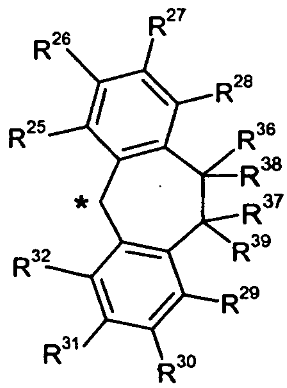

(N9)

über das mit einem "*" gekennzeichnete C- Atom über ein oder mehrere Doppelbindungen an das Katalysator- Grundgerüst der **allgemeinen Formel (N10a) bzw. (N10b)**

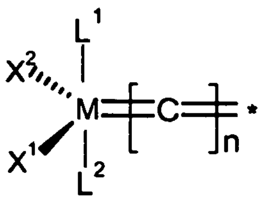

(N10a)

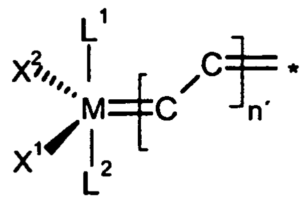

(N10b)

gebunden sind, wobei $X^1$ und $X^2$, $L^1$ und $L^2$, n, n' und $R^{25}$- $R^{39}$ die für die allgemeine Formeln (N2a) und (N2b) genannten Bedeutungen besitzen.

Typischerweise sind die erfindungsgemäßen Ruthenium- oder Osmium Carben- Katalysatoren fünffach koordiniert.

Im **Strukturelement der allgemeinen Formel (N1)** sind $R^{15}$- $R^{32}$ gleich oder verschieden und bedeuten Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat (- $SO_3^-$), - $OSO_3^-$, -$PO_3^-$ oder $OPO_3^-$ oder stehen für Alkyl, bevorzugt $C_1$- $C_{20}$- Alkyl, insbesondere $C_1$- $C_6$- Alkyl, Cycloalkyl, bevorzugt $C_3$- $C_{20}$- Cycloalkyl, insbesondere $C_3$- $C_8$- Cycloalkyl, Alkenyl, bevorzugt $C_2$- $C_{20}$- Alkenyl, Alkinyl, bevorzugt $C_2$- $C_{20}$- Alkinyl, Aryl, bevorzugt $C_6$- $C_{24}$- Aryl, inbesondere Phenyl, Carboxylat, bevorzugt $C_1$- $C_{20}$- Carboxylat, Alkoxy, bevorzugt $C_1$- $C_{20}$- Alkoxy, Alkenyloxy, bevorzugt $C_2$- $C_{20}$- Alkenyloxy, Alkinyloxy, bevorzugt $C_2$- $C_{20}$- Alkinyloxy, Aryloxy, bevorzugt $C_6$- $C_{24}$- Aryloxy, Alkoxycarbonyl, bevorzugt $C_2$- $C_{20}$- Alkoxycarbonyl, Alkylamino, bevorzugt $C_1$- $C_{30}$- Alkylamino, Alkylthio, bevorzugt $C_1$- $C_{30}$- Alkylthio, Arylthio, bevorzugt $C_6$- $C_{24}$- Arylthio, Alkylsulfonyl, bevorzugt $C_1$- $C_{20}$- Alkylsulfonyl, Alkylsulfinyl, bevorzugt $C_1$- $C_{20}$- Alkylsulfinyl, Dialkylamino-, bevorzugt Di ($C_1$- $C_{20}$-alkyl) amino, Alkylsilyl, bevorzugt $C_1$- $C_{20}$- Alkylsilyl, oder Alkoxysilyl, bevorzugt $C_1$- $C_{20}$- Alkoxysilyl- Reste darstellen, wobei diese Reste alle jeweils optional durch ein oder mehrere Alkyl-, Halogen-, Alkoxy-, Aryl- oder Heteroaryl- Reste substituiert sein können, oder alternativ auch jeweils zwei direkt benachbarte Reste aus der Gruppe von $R^{25}$- $R^{32}$ unter Einschluss der Ringkohlenstoff- Atome, an die sie gebunden sind, durch Verbrückung eine cyclische Gruppe, bevorzugt ein aromatisches System, ausbilden können, oder alternativ $R^8$ gegebenenfalls mit einem anderen Liganden des Ruthenium- oder Osmium- Carben- Komplexkatalysators verbrückt ist,

m ist 0 oder 1 und

A bedeutet Sauerstoff, Schwefel, C ($R^{33}$) ($R^{34}$), N- $R^{35}$, -C ($R^{36}$) =C ($R^{37}$)- oder- C ($R^{36}$) ($R^{38}$)- C ($R^{37}$) ($R^{39}$) -, worin $R^{33}$- $R^{39}$ gleich oder verschieden sind und jeweils die gleichen bevorzugten Bedeutungen besitzen können wie die Reste $R^1$- $R^8$.

**$C_1$- $C_6$- Alkyl** steht im **Strukturelement der allgemeinen Formel (N1)** beispielsweise für Methyl, Ethyl, n-Propyl, iso- Propyl, n- Butyl, sec.- Butyl, tert.- Butyl, n- Pentyl, 1- Methylbutyl, 2- Methylbutyl, 3- Methylbutyl, neo- Pentyl, 1- Ethylpropyl und n- Hexyl.

**$C_3$- $C_8$- Cycloalkyl** steht im **Strukturelement der allgemeinen Formel (N1)** beispielsweise für Cyclopropyl, Cyclobutyl, Cylopentyl, Cyclohexyl, Cycloheptyl und Cyclooctyl.

**$C_6$- $C_{24}$- Aryl** umfasst im **Strukturelement der allgemeinen Formel (N1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste $X^1$ und $X^2$ im Strukturelement der allgemeinen Formel (N1) besitzen die gleichen allgemeinen, bevorzugten und besonders bevorzugten Bedeutungen, die für Katalysatoren der allgemeinen Formel A genannt werden.

In den allgemeinen Formeln (N2a) und (N2b) bzw. analog in den allgemeinen Formeln (N10a) und (N10b) stehen die Reste $L^1$ und $L^2$ für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel A genannt sind.

Bevorzugt sind Katalysatoren der allgemeinen Formeln (N2a) oder (N2b) mit einer allgemeinen Struktureinheit (N1), wobei

M Ruthenium darstellt,

$X^1$ und $X^2$ gleichzeitig Halogen bedeuten,

n 0, 1 oder 2 ist in der allgemeinen Formel (N2a) bzw.

n' 1 ist in der allgemeinen Formel (N2b)

$L^1$ und $L^2$ gleich oder verschieden sind und die für die allgemeinen Formeln (N2a) und (N2b) genannten allgemeinen oder bevorzugten Bedeutungen besitzen,

$R^{25}$- $R^{32}$ gleich oder verschieden sind und die für die allgemeinen Formeln (N2a) und (N2b) genannten allgemeinen oder bevorzugten Bedeutungen besitzen,

m entweder 0 oder 1 ist,

und, wenn m = 1 ist

A für Sauerstoff, Schwefel, C ($C_1$- $C_{10}$- Alkyl)$_2$, -C ($C_1$- $C_{10}$- Alkyl)$_2$- C ($C_1$- $C_{10}$- Alkyl)$_2$-, - C ($C_1$- $C_{10}$- Alkyl) =C ($C_1$- $C_{10}$- Alkyl)- oder- N ($C_1$- $C_{10}$- Alkyl) steht.

Ganz besonders bevorzugt sind Katalysatoren der Formeln (N2a) oder (N2b) mit einer allgemeinen Struktureinheit (N1), wobei

M Ruthenium darstellt,

$X^1$ und $X^2$ beide Chlor bedeuten,

n 0, 1 oder 2 ist in der allgemeinen Formel (N2a) bzw.

n' 1 ist in der allgemeinen Formel (N2b)

$L^1$ einen Imidazolidin- Rest der Formeln (IIIa) bis (IIIf) darstellt,

$L^2$ einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin- Rest, einen Imidazolidin- Rest der Formeln (XIIa) bis (XIIf) oder einen Phosphin- Liganden, insbesondere $PPh_3$, P (p- Tol)$_3$, P (o- Tol)$_3$, PPh ($CH_3$)$_2$, P ($CF_3$)$_3$, P (p- $FC_6H_4$)$_3$, P (p- $CF_3C_6H_4$)$_3$, P ($C_6H_4$- $SO_3Na$)$_3$, P ($CH_2C_6H_4$- $SO_3Na$)$_3$, P (iso- Propyl)$_3$, P ($CHCH_3$ ($CH_2CH_3$) )$_3$, P (Cyclopentyl)$_3$, P (Cyclohexyl)$_3$, P (Neopentyl)$_3$ und P (Neophenyl)$_3$ darstellt,

$R^{25}$- $R^{32}$ die für die allgemeinen Formeln (N2a) und (N2b) genannten allgemeinen oder bevorzugten Bedeutungen

besitzen,

m entweder 0 oder 1 ist,

und, wenn m = 1 ist

A für Sauerstoff, Schwefel, C ($C_1$- $C_{10}$- Alkyl)$_2$, -C ($C_1$- $C_{10}$- Alkyl)$_2$- C ($C_1$- $C_{10}$- Alkyl)$_2$-, - C ($C_1$- $C_{10}$- Alkyl) =C ($C_1$- $C_{10}$- Alkyl)- oder —N ($C_1$- $C_{10}$- Alkyl) steht.

Für den Fall, dass der Rest $R^{25}$ mit einem anderen Liganden des Katalysators der Formel N verbrückt ist, ergeben sich beispielsweise für die Katalysatoren der allgemeinen Formeln (N2a) und (N2b) die folgenden Strukturen der allgemeinen Formeln (N13a) und (N13b)

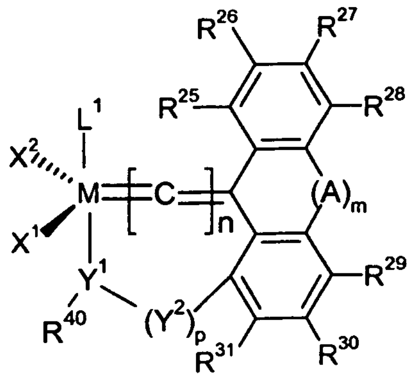

(N13a)

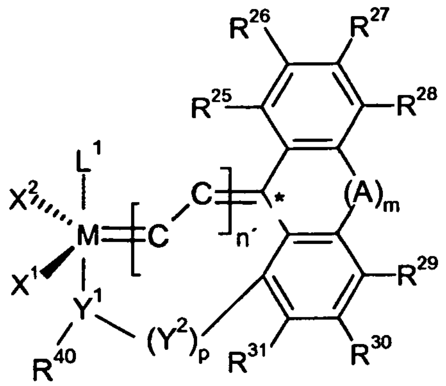

(N13b)

worin

$Y^1$ Sauerstoff, Schwefel, einen Rest N- $R^{41}$ oder einen Rest P- $R^{41}$ bedeutet, wobei $R^{41}$ die nachfolgend genannten Bedeutungen besitzt,

$R^{40}$ und $R^{41}$ gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkyl- sulfinyl-Rest darstellen, die alle jeweils optional durch ein oder mehrere Alkyl-, Halogen-, Alkoxy-, Aryl- oder Heteroaryl- Reste substituiert sein können,

p 0 oder 1 ist und

$Y^2$ wenn p = 1 ist, für- $(CH_2)_r$- mit r = 1, 2 oder 3, -C (=O)- $CH_2$-, - C (=O) -, - N=CH-, - N (H)- C (=O)- oder aber alternativ die gesamte Struktureinheit "- $Y^1$ ($R^{40}$)- $(Y^2)_p$- " für (- N ($R^{40}$) =CH- $CH_2$- ), (- N ($R^{40}$, $R^{41}$) =CH- $CH_2$- ), steht und

wobei M, $X^1$, $X^2$, $L^1$, $R^{25}$- $R^{32}$, A, m und n die gleichen Bedeutungen besitzen wie in den allgemeinen Formeln (IIa) und (IIb) .

Als **Beispiele für Katalysatoren der Formel (N)** seien die folgenden Strukturen genannt:

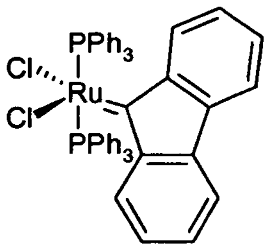

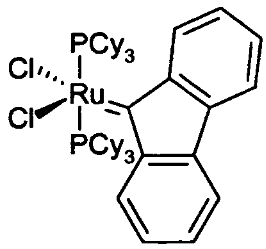

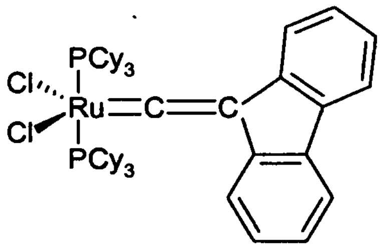

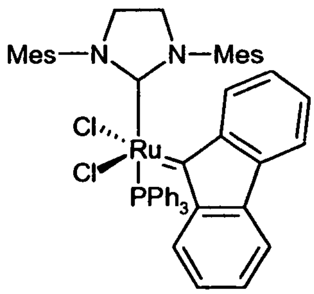

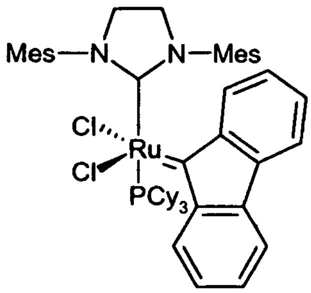

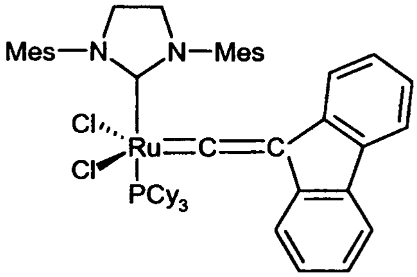

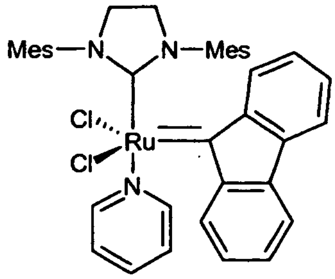

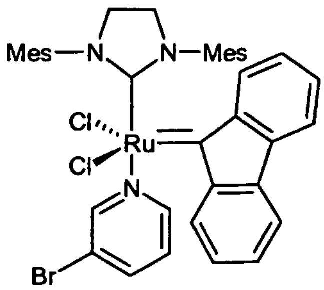

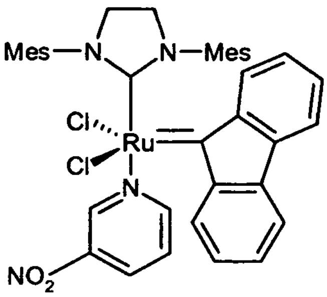

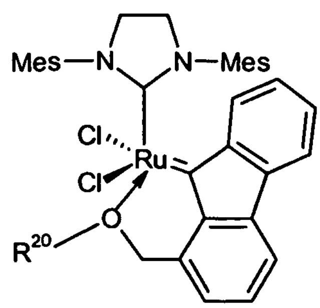

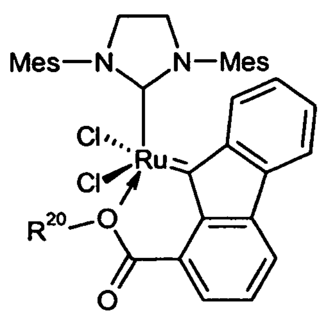

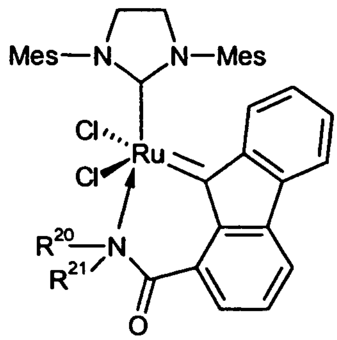

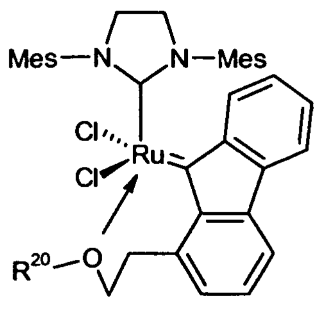

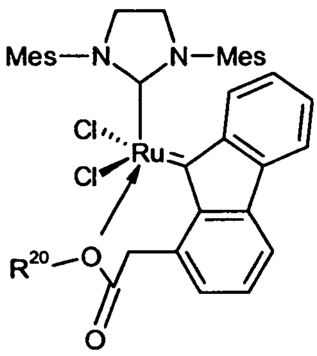

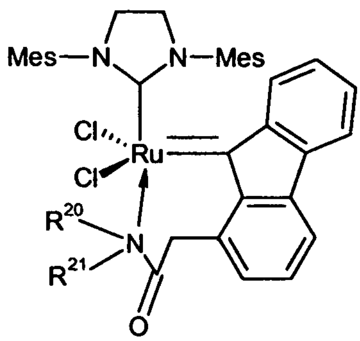

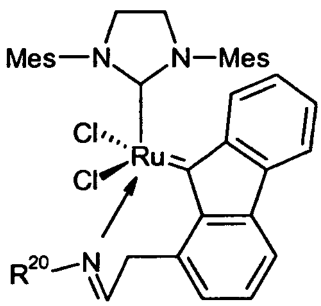

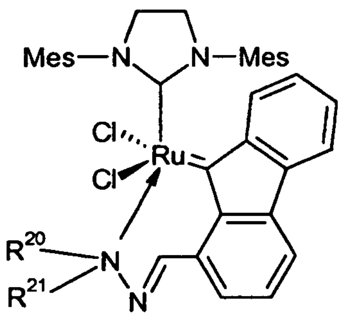

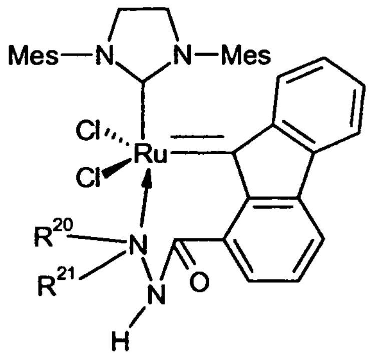

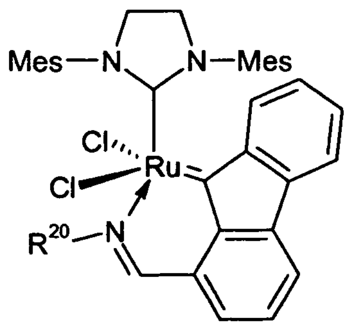

Bevorzugt werden im erfindungsgemäßen Verfahren Katalysatoren der allgemeinen Formel (A), (B), (G) und (N), besonders bevorzugt ein Katalysator der allgemeinen Formel (A) und ganz besonders bevorzugt der Grubbs (II)-Katalysator in Kombination mit einem funktionalisierten Olefin ausgewählt aus der Gruppe bestehend aus t- Butyl- n-Allylcarbamat, p- Allylanisol, o- Allylanisol, p- Allylphenol, o- Allylphenol, Benzoesäureallylester, Allylbenzylether, cis-1, 4- Bisbenzoyloxy- 2- buten, cis- 2- Buten- 1, 4- diyl- dibenzoat, cis- 2- Buten- 1, 4- diyl- diacetat und Mischungen davon eingesetzt.

**Durchführung der Metathese-Reaktion:**

Im erfindungsgemäßen Verfahren wird die Verbindung der allgemeinen Formel (I) oder (II) üblicherweise in einer Menge von $8*10^{-6}$ mol bis $8*10^{-3}$ mol bezogen auf 1 g Nitrilkautschuk eingesetzt, bevorzugt in einer Menge von $1*10^{-5}$ mol bis $5*10^{-3}$ mol auf 1 g Nitrilkautschuk, und besonders bevorzugt in einer Menge von $2*10^{-5}$ mol bis $2*10^{-3}$ mol auf 1 g Nitrilkautschuk.

Der Metathesekatalysator wird in einer Menge von $4*10^{-8}$ mol bis $4*10^{-5}$ mol bezogen auf 1 g Nitrilkautschuk eingesetzt, bevorzugt ist eine Menge von $2*10^{-7}$ mol bis $2*10^{-5}$ mol auf 1 g Nitrilkautschuk, besonders bevorzugt ist eine Menge von $5*10^{-7}$ mol bis $7{,}5*10^{-6}$ mol auf 1 g Nitrilkautschuk.

Der Metathese- Katalysator wird bezogen auf das eingesetzte funktionalisierte Olefin der allgemeinen Formeln (I) oder (II) in einem molaren Verhältnis von ($5*10^{-6}$ bis 5) : 1, bevorzugt ($1*10^{-4}$ bis $5*10^{-1}$) : 1, besonders bevorzugt von ($2*10^{-3}$ bis 1, $5*10^{-2}$) : 1 eingesetzt.

Üblicherweise wird das erfindungsgemäße Verfahren in Abwesenheit von Verbindungen der IV. Hauptgruppe des Periodensystems durchgeführt, es ist insbesondere bewährt, das Verfahren in Abwesenheit von Organylen oder Halogeniden des Siliziums, Germaniums, Zinns oder Bleis durchzuführen, wie sie in einzelnen Verfahren des Standes der Technik zwingend eingesetzt werden müssen. Diese Durchführungsweise ist dann bevorzugt, wenn eine ökologisch unbedenkliche Herstellung angestrebt wird. Insbesondere kann das erfindungsgemäße Verfahren in Abwesenheit von Zinntetralkylen durchgeführt werden.

Die Metathese-Reaktion kann in einem geeigneten Lösungsmittel durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan, Cyclohexan und Chlorbenzol. Das besonders bevorzugte Lösungsmittel ist Chlorbenzol.

Die Konzentration des eingesetzten Nitrilkautschuks in der Reaktionsmischung der Metathese ist nicht kritisch,

aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des Nitrilkautschuks in der Reaktionsmischung im Bereich von 1 bis 25 Gew.%, besonders bevorzugt im Bereich von 5 bis 20 Gew.%, bezogen auf die gesamte Reaktionsmischung.

Die Durchführung des erfindungsgemäßen Verfahrens erfolgt bei Temperaturen im Bereich von -20°C bis 120°C, vorzugweise bei 0°C bis 100°C, besonders bevorzugt von 10°C bis 70°C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von fünf Stunden unter normalen Bedingungen beendet. Der Fortschritt der Metathese kann durch Standard-Analytik überwacht werden, z.B. durch GPC-Messungen oder durch Bestimmung der Viskosität.

Optional kann im erfindungsgemäßen Verfahren neben der Verbindung der allgemeinen Formel (I) oder (II) zusätzlich auch noch ein geradkettiges oder verzweigtes $C_2$- $C_{16}$- Olefin. Geeignet sind beispielsweise Ethylen, Propylen, Isobuten, Styrol, 1- Hexen oder 1- Octen. Bevorzugt wird 1- Hexen oder 1- Octen verwendet. Sofern das Co- Olefin flüssig ist (wie beispielsweise 1- Hexen), liegt die Menge des Co- Olefins bevorzugt in einem Bereich von 0, 2- 20 Gew. % bezogen auf den eingesetzten Nitrilkautschuk. Sofern das Co- Olefin ein Gas ist, wie beispielsweise Ethylen, wird die Menge des Co- Olefins so gewählt, dass sich im Reaktionsgefäß bei Raumtemperatur ein Druck im Bereich von 1 x $10^5$ Pa- 1 x $10^7$ Pa einstellt, bevorzugt ein Druck im Bereich von 5, 2 x $10^5$ Pa bis 4 x $10^6$ Pa.

Im Anschluss an die Metathesereaktion kann eine Hydrolyse durchgeführt werden. Auf diese Weise werden die durch die Metathese eingeführten Carbamatgruppen in Aminogruppen bzw. die Ether- und Estergruppen in Hydroxylgruppen umgewandelt. Die so hergestellten Telechele können mit multifunktinellen Isocyanaten vernetzt werden.

**Nitrilkautschuke:**

Zur Herstellung der erfindungsgemäßen funktionalisierten Nitrilkautschuke werden Nitrilkautschuke eingesetzt. Der Begriff "Nitrilkautschuk" umfasst im Rahmen dieser Anmeldung sowohl unhydrierte als auch teilhydrierte Nitrilkautschuke. Diese enthalten Wiederholungseinheiten, die sich von mindestens einem konjugierten Dien und mindestens einem $\alpha$ ,$\beta$-ungesättigten Nitril ableiten. Die C=C Doppelbindungen aus den einpolymerisierten Dien-Monomeren können somit entweder unhydriert oder teilweise hydriert vorliegen. Im Fall der Teilhydrierung sind die C=C Doppelbindungen aus den einpolymerisierten Dien-Monomeren bevorzugt zu mindestens 50% bis zu maximal 99 %, besonders bevorzugt zu 75 bis 98,5 %, ganz besonders bevorzugt zu 80 bis 98 % und insbesondere zu 85 bis 96% hydriert.

Zur Herstellung der erfindungsgemäßen funktionalisierten Nitrilkautschuke können ferner Nitrilkautschuke eingesetzt werden, die Wiederholungseinheiten enthalten, die sich von mindestens einem konjugierten Dien, mindestens einem $\alpha$,$\beta$-ungesättigten Nitril und einem oder mehreren weiteren copolymerisierbaren Termonomeren ableiten. Wiederum können diese Nitrilkautschuke, d.h. die C=C Doppelbindungen aus den einpolymerisierten Dien-Monomeren sowie den weiteren einpolymerisierten Termonomeren unhydriert oder teilhydriert sein. Im Fall der Teilhydrierung sind die C=C Doppelbindungen aus den einpolymerisierten Dien-Monomeren sowie einem oder mehreren weiteren copolymerisierbaren Termonomeren bevorzugt zu mindestens 50% bis zu maximal 99 %, besonders bevorzugt 75 - 98,5 %, ganz besonders bevorzugt 80 — 98 % und insbesondere 85 - 96% hydriert.

Das **konjugierte Dien** kann von jeder Natur sein. Bevorzugt werden ($C_4$- $C_6$) konjugierte Diene eingesetzt. Besonders bevorzugt sind 1, 3- Butadien, Isopren, 2, 3- Dimethylbutadien, Piperylen oder Gemische daraus. Insbesondere bevorzugt sind 1, 3- Butadien und Isopren oder Gemische daraus. Ganz besonders bevorzugt ist 1, 3- Butadien.

Als **$\alpha$, $\beta$- ungesättigtes Nitril** kann jedes bekannte $\alpha$, $\beta$- ungesättigte Nitril eingesetzt werden, bevorzugt sind ($C_3$- $C_5$)- $\alpha$, $\beta$- ungesättigte Nitrile wie Acrylnitril, Methacrylnitril, Ethacrylnitril oder Mischungen davon. Besonders bevorzugt ist Acrylnitril.

Als weitere copolymerisierbare Termonomere können beispielsweise **aromatische Vinylmonomere,** bevorzugt Styrol, $\alpha$- Methylstyrol und Vinylpyridin, **fluorhaltige Vinylmonomere,** bevorzugt Fluorethylvinylether, Fluorpropylvinylether, o- Fluormethylstyrol, Vinylpentafluorbenzoat, Difluoroethylen und Tetrafluoroethylen, oder auch **copolymerisierbare Antiageing Monomere,** bevorzugt N- (4- anilinophenyl) acrylamid, N- (4- anilinophenyl) methacrylamid, N- (4- anilinphenyl) cinnamide, N- (4- anilinophenyl) crotonamid, N- phenyl- 4- (3- vinyl- benzyl oxy) anilin und N- phenyl-4- (4- vinylbenzyloxy) anilin eingesetzt werden sowie **nicht- konjugierte Diene,** wie 4- Cyanocyclohexen und 4- Vinylcyclohexen, oder auch **Alkine,** wie 1- oder 2- Butin.

Als weitere copolymerisierbare Termonomere können ein oder mehrere carboxygruppenhaltige, copolymerisierbare Termonomere eingesetzt werden, beispielsweise $\alpha$,$\beta$-ungesättigte Monocarbonsäuren, deren Ester, $\alpha$,$\beta$-ungesättigte Dicarbonsäuren, deren Mono- oder -Diester oder deren entsprechenden Anhydride oder Amide.

Als **$\alpha$,$\beta$-ungesättigte Monocarbonsäuren** können bevorzugt Acrylsäure und Methacrylsäure eingesetzt werden. Einsetzbar sind auch **Ester der $\alpha$,$\beta$-ungesättigten Monocarbonsäuren,** bevorzugt deren Alkylester, Alkoxyalkyl- oder Hydroxyalkylester.

Bevorzugt sind **$C_1$- $C_{18}$ Alkylester der $\alpha$, $\beta$- ungesättigten Monocarbonsäuren**, besonders bevorzugt $C_1$-

$C_{18}$ Alkylester der Acryl- und Methacrylsäure, insbesondere bevorzugt Methyl (meth) acrylat, Ethyl (meth) acrylat, Propyl (meth) acrylat, n- Butyl (meth) acrylat, t- Butyl (meth) acrylat, Hexyl (meth) acrylat, 2- Ethyhexyl (meth) acrylat, Octyl (meth) acrylat, n- Dodecyl (meth) acrylat, 2- Propylheptylacrylat und Lauryl (meth) acrylat. Insbesondere wird n- Butylacrylat eingesetzt.

Bevorzugt sind auch **$C_2$- $C_{12}$- Alkoxyalkylester der α, β- ungesättigten Monocarbonsäuren,** besonders bevorzugt **$C_2$- $C_{12}$-** Alkoxyalkylester der Acrylsäure oder der Methacrylsäure, insbesondere Methoxymethyl (meth) acrylat, Methoxyethyl (meth) acrylat, Ethoxyethyl (meth) acrylat und Methoxyethyl (meth) acrylat. Insbesondere wird Methoxyethylacrylat eingesetzt.

Bevorzugt sind auch **$C_1$- $C_{12}$- Hydroxyalkylester der α, β- ungesättigten Monocarbonsäuren**, besonders bevorzugt $C_1$- $C_{12}$- Hydroxyalkylester der Acryl- oder Methacrylsäure, inbesondere 2- Hydroxyethyl (meth) acrylat, 3-Hydroxypropyl- (meth) acrylat und Hydroxy (butyl (meth) acrylat.

Als sonstige Ester der α, β- ungesättigten Monocarbonsäuren werden ferner beispielsweise Polyethylenglykol (meth) acrylat, Polypropylenglykol (meth) acrylat, Glycidyl (meth) acrylat, Epoxy (meth) acrylat, N- (2- Hydroxyethyl) acrylamide, N- (2- Hydroxymethyl) acrylamide und Urethan (meth) acrylat eingesetzt.

Einsetzbar sind auch Mischungen von Alkylestern, wie z.B. den vorgenannten, mit Alkoxyallcylestern, z.B. in Form der vorgenannten.

Einsetzbar sind auch **Cyanoalkylacrylate und Cyanoalkylmethacrylate**, in denen die Zahl der C-Atome in der Cyanoalkylgruppe 2-12 beträgt, vorzugsweise α-Cyanoethylacrylat, β -Cyanoethylacrylat und Cyanobutylmethacrylat.

Einsetzbar sind auch **Fluor-substituierte Benzylgruppenhaltige Acrylate oder Methacrylate**, vorzugsweise Fluorobenzylacrylat, und Fluorobenzylmethacrylat. Einsetzbar sind auch **Fluoroalkylgruppen haltige Acrylate und -Methacrylate**, vorzugsweise Trifluoroethylacrylat und Tetrafluoropropylmethacrylat. Einsetzbar sind auch **Aminogruppenhaltige αβ -ungesättigte Carbonsäureester** wie Dimethylaminomethylacrylat und Diethylaminoethylacrylat.

Als copolymerisierbare Monomere können ferner **α,β-ungesättigte Dicarbonsäuren**, bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α, β- ungesättigten Dicarbonsäuren.** Bei diesen α, β- ungesättigten Dicarbonsäuremono- oder diestern kann es sich z.B. um Alkyl-, bevorzugt $C_1$- $C_{10}$- Alkyl, insbesondere Ethyl-, n- Propyl-, iso- Propyl, n- Butyl-, tert.- Butyl, n- Pentyl- oder n- Hexyl-, **Alkoxyalkyl-,** bevorzugt $C_2$- $C_{12}$ Alkoxyalkyl-, besonders bevorzugt $C_3$- $C_8$- Alkoxyalkyl, **Hydroxyalkyl,** bevorzugt $C_1$- $C_{12}$ Hydroxyalkyl-, besonders bevorzugt $C_2$- $C_8$- Hydroxyalkyl, **Cycloalkyl-,** bevorzugt $C_5$- $C_{12}$- Cycloalkyl-, besonders bevorzugt $C_6$- $C_{12}$- Cycloalkyl, **Alkylcycloalkyl-,** bevorzugt $C_6$- $C_{12}$- Alkylcycloalkyl-, besonders bevorzugt $C_7$- $C_{10}$- Alkylcycloalkyl, oder **Aryl-,** bevorzugt $C_6$- $C_{14}$- Aryl- Mono- oder- Diester handeln, wobei es sich im Fall der Diester jeweils auch um gleiche oder gemischte Ester handeln kann.

Beispiele von **α,β-ungesättigten Dicarbonsäuremonoestern** umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;

- Citraconsäuremonobenzylester, bevorzugt Monobenzylcitraconat;
- Itaconsäuremonoalkylester, bevorzugt Monomethylitaconat, Monoethylitaconat, Monopropyl itaconat und Mono-n-butylitaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Die Anteile an Wiederholungseinheiten im Nitrilkautschuk, die auf das konjugierte Dien und a,β-ungesättigte Nitril zurückgehen, können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der a,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Termonomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der a,β-ungesättigten Nitrile durch die Anteile der zusätzlichen Monomere ersetzt, wobei sich die Anteile aller Monomere jeweils zu 100 Gew.-% aufsummieren.

Die erfindungsgemäß eingesetzten unhydrierten oder teilhydrierten Nitrilkautschuke besitzen eine Mooney-Viskosität (ML 1+4 bei 100°C) im Bereich von 10 bis 120 Mooneyeinheiten, bevorzugt von 20 bis 100 Mooneyeinheiten. Die Bestimmung der Mooney-Viskosität erfolgt gemäß ASTM Norm D 1646.

Werden erfindungsgemäß unhydrierten oder teilhydrierten Nitrilkautschuke mit einer Mooney-Viskosität (ML 1+4 bei 100°C) im Bereich von 30 bis 70, bevorzugt von 30 bis 50 eingesetzt, so entspricht dies einem Gewichtsmittel des Molekulargewicht Mw im Bereich von 150.000 - 500.000, bevorzugt im Bereich von 170.000 - 400.000, und die Polydispersität PDI = Mw/Mn, wobei Mw das Gewichtsmittel und Mn das Zahlenmittel des Molekulargewichts darstellt, liegt typischerweise im Bereich von 2,0 - 6,0, bevorzugt im Bereich von 2,0 - 4,0.

Derartige teilhydrierte Nitrilkautschuke sind dem Fachmann hinreichend bekannt und entweder käuflich erhältlich, z.B. unter der Marke Therban® der Lanxess Deutschland GmbH oder aber nach dem Fachmann geläufigen Methoden herstellbar.

Die Herstellung von teilhydrierten Nitrilkautschuken erfolgt üblicherweise durch Emulsionspolymerisation gefolgt von einer Hydrierung und ist dem Fachmann geläufig und aus einer Vielzahl von Literaturstellen und Patenten bekannt.

Die Hydrierung kann z.B. unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B. US- A- 3, 700, 637, DE- A- 25 39 132, EP- A- 0 134 023, DE- OS- 35 41 689, DE- OS- 35 40 918, EP- A- 0 298 386, DE- OS- 35 29 252, DE- OS- 34 33 392, US- A- 4, 464, 515 und US- A- 4, 503, 196) .

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

$(R^1{}_mB)_1\ MX_n$,

worin M Ruthenium oder Rhodium ist, $R^1$ gleich oder verschieden sind und eine $C_1$- $C_8$ Alkylgruppe, eine $C_4$- $C_8$ Cycloalkylgruppe, eine $C_6$- $C_{15}$ Aryl- Gruppe oder eine $C_7$- $C_{15}$ Aralkylgruppe darstellen. B ist Phosphor, Arsen, Schwefel oder eine Sulfoxid- Gruppe S=O, X ist Wasserstoff oder ein Anion, vorzugsweise Halogen und besonders bevorzugt Chlor oder Brom, 1 ist 2, 3 oder 4, m ist 2 oder 3 und n ist 1, 2 oder 3, bevorzugt 1 oder 3. Bevorzugte Katalysatoren sind Tris (triphenylphosphin)- rhodium (I)- chlorid, Tris (triphenylphosphin)- rhodium (III)- chlorid und Tris (dimethylsulfoxid)- rhodium (III)- chlorid sowie Tetrakis (triphenylphosphin)- rhodium- hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0, 01- 1 Gew. %, bevorzugt im Bereich von 0, 03- 0, 5 Gew. % und besonders bevorzugt im Bereich von 0, 1- 0, 3 Gew. % bezogen auf das Gewicht des Polymers sind geeignet.

Üblicherweise ist es sinnvoll, den Katalysator zusammen mit einem Co-Katalysator zu verwenden, der ein

Ligand der Formel $R^1{}_mB$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co- Katalysatoren finden sich beispielsweise in US- A- 4, 631, 315. Bevorzugter Co- Katalysator ist Triphenylphosphin. Der Co- Katalysator wird bevorzugt in Mengen in einem Bereich von 0, 3- 5 Gew. %, bevorzugt im Bereich von 0, 5- 4 Gew. % eingesetzt, bezogen auf das Gewicht des zu hydrierenden Nitrilkautschuks. Bevorzugt liegt ferner das Gewichtsverhältnis des Rhodium- haltigen Katalysators zum Co- Katalysator im Bereich von 1: 3 bis 1: 55, besonders bevorzugt im Bereich von 1: 5 bis 1: 45, bezogen auf 100 Gewichtsteile des zu hydrierenden Nitrilkautschuks werden geeigneterweise 0, 1 bis 33 Gewichtsteile des Co- Katalyators, bevorzugt 0, 5 bis 20 und ganz besonders bevorzugt 1 bis 5 Gewichtsteile, insbesondere mehr als 2 aber weniger als 5 Gewichtsteile Co- Katalysator bezogen auf 100 Gewichtsteile des zu hydrierenden Nitrilkautschuks eingesetzt.

Die praktische Durchführung dieser Hydrierung ist dem Fachmann aus US- A- 6, 683, 136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Mit dem erfindungsgemäßen Verfahren werden funktionalisierte Nitrilkautschuke mit verringertem Molekulargewicht erhalten, die bisher über keines der bekannten Verfahren erhältlich waren.

**Gegenstand der Erfindung** sind daher ferner Nitrilkautschuke enthaltend Wiederholungseinheiten, die sich von mindestens einem konjugierten Dien und mindestens einem a,β-ungesättigten Nitril ableiten, sowie entweder Endgruppen X oder Endgruppen Y und Z, wobei

X
: **$OR^1$,** worin $R^1$ für H, $C_1$- $C_{18}$ Alkyl, $C_7$- $C_{24}$ Aralkyl, Phenyl, Naphthyl oder Fluorenyl steht,
: **O- $(CH_2$- $CH_2$- $O)_n$- $R^2$,** worin $R^2$ für H, $C_1$- $C_{18}$ Alkyl, $C_7$- $C_{24}$ Aralkyl, Phenyl, Naphthyl oder Fluorenyl steht und n = 1 bis 20 ist,
: **O- $(CH_2$- CH $(CH_3)$- $O)_n$- $R^3$,** worin **$R^3$** für H, $C_1$- $C_{18}$ Alkyl, $C_7$- $C_{24}$ Aralkyl, Phenyl, Naphthyl oder Fluorenyl steht und n = 1 bis 20 ist,
: **O- C (=O)- $R^4$,** worin $R^4$ für H, $C_1$- $C_{18}$ Alkyl, $C_7$- $C_{24}$ Aralkyl, Phenyl, Naphthyl oder Fluorenyl steht,
: **$C_6$- $C_{18}$ Aryl,** welches durch mindestens einen Rest $OR^5$ substituiert ist , worin $R^1$ für H, $C_1$- $C_{18}$ Alkyl, $C_7$- $C_{24}$ Aralkyl, Phenyl, Naphthyl oder Fluorenyl steht, oder
: **NH- C (=O)- $OR^6$,** worin $R^6$ für H, $C_1$- $C_{18}$ Alkyl, $C_7$- $C_{24}$ Aralkyl, Phenyl, Naphthyl oder Fluorenyl steht, bedeutet, und

Y und Z
: gleich oder verschieden sind und
: **$OR^7$,** worin $R^7$ für H, $C_1$- $C_{18}$ Alkyl, $C_7$- $C_{24}$ Aralkyl, Phenyl, Naphthyl oder Fluorenyl steht,
: **O- $(CH_2$- $CH_2$- O) n- $R^8$,** worin $R^8$ für H, $C_1$- $C_{18}$ Alkyl, $C_7$- $C_{24}$ Aralkyl, Phenyl, Naphthyl oder Fluorenyl steht und n = 1 bis 20 ist,
: **O- $(CH_2$- CH $(CH_3)$- $O)_n$- $R^9$,** worin $R^9$ für H, $C_1$- $C_{18}$ Alkyl, $C_7$- $C_{24}$ Aralkyl, Phenyl, Naphthyl oder Fluorenyl steht und n = 1 bis 20 ist,
: **O- C (=O)- $R^{10}$,** worin $R^{10}$ für H, $C_1$- $C_{18}$ Alkyl, $C_7$- $C_{24}$ Aralkyl, Phenyl, Naphthyl oder Fluorenyl steht,
: **$C_6$- $C_{18}$ Aryl,** welches durch mindestens einen Rest $OR^{11}$ substituiert ist , worin $R^{11}$ für H, $C_1$- $C_{18}$ Alkyl, $C_7$- $C_{24}$ Aralkyl, Phenyl, Naphthyl oder Fluorenyl steht, oder
: **NH- C (=O)- $OR^{12}$,** worin $R^{12}$ für H, $C_1$- $C_{18}$ Alkyl, $C_7$- $C_{24}$ Aralkyl, Phenyl, Naphthyl oder Fluorenyl steht, bedeuten.

Für die bevorzugten Bedeutungen von X, Y und Z sowie der darin enthaltenen Reste gelten die gleichen Definitionen wie für die bevorzugten Bedeutungen von X, Y und Z und der darin enthaltenen Reste in den allgemeinen Formel (I) und (II).

Bezüglich der in diesen erfindungsgemäßen Nitrilkautschuken enthaltenen Wiederholungseinheiten der Monomere sowie der optionalen teilweisen Hydrierung der C=C Doppelbindungen in der Polymerhauptkette gilt das für die Ausgangs-Nitrilkautschuke gesagte entsprechend.

Die erfindungsgemäßen funktionalisierten Nitrilkautschuke besitzen eine Mooney-Viskosität (ML 1+4 bei 100°C) im Bereich von 5 - 30, bevorzugt im Bereich von 5 - 20. Das Gewichtsmittel des Molekulargewicht Mw liegt üblicherweise im Bereich von 10.000-160.000, bevorzugt im Bereich von 10.000-130.000 und besonders bevorzugt 10.000 -1250.000. Die erhaltenen Nitrilkautschuke besitzen ferner eine Polydispersität PDI = Mw/Mn, wobei Mn das Zahlenmittel des Molekulargewichts und Mw das Gewichtsmittel des Molekulargewichts darstellt, im Bereich 1,4 - 4,0 bevorzugt im Bereich von 1,5 - 3,0.

Sofern gewünscht, können die erfindungsgemäßen funktionalisierten Nitrilkautschuke enthaltend entweder

Endgruppen X oder Endgruppen Y und Z wie oben definiert, einer weiteren Hydrierung unterzogen werden.

**Gegenstand der Erfindung** sind somit auch **vollständig hydrierte Nitrilkautschuke** die Wiederholungseinheiten, die sich von mindestens einem konjugierten Dien und mindestens einem a,β-ungesättigten Nitril ableiten, sowie Endgruppen X, Y oder Z enthalten. Für die Definition der Endgruppen X, Y und Z gilt das bereits für die erfindungsgemäßen optional teilhydrierten Nitrilkautschuke.

**Gegenstand der Erfindung** sind ferner vulkanisierbare Mischungen enthaltend

(i) mindestens einen funktionalisierten Nitrilkautschuk, der optional teilweise oder ganz hydriert sein kann, enthaltend entweder Endgruppen X oder Endgruppen Y und Z worin
**X** $OR^1$, worin $R^1$ für H, $C_1$- $C_{18}$ Alkyl, $C_7$- $C_{24}$ Aralkyl, Phenyl, Naphthyl oder Fluorenyl steht,
**O- $(CH_2$- $CH_2$- $O)_n$- $R^2$,** worin $R^2$ für H, $C_1$- $C_{18}$ Alkyl, $C_7$- $C_{24}$ Aralkyl, Phenyl, Naphthyl oder Fluorenyl steht und n = 1 bis 20 ist,
**O- $(CH_2$- CH $(CH_3)$- $O)_n$- $R^3$,** worin $R^3$ für H, $C_1$- $C_{18}$ Alkyl, $C_7$- $C_{24}$ Aralkyl, Phenyl, Naphthyl oder Fluorenyl steht und n = 1 bis 20 ist,
**O- C (=O)- $R^4$,** worin $R^4$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl,** welches durch mindestens einen Rest $OR^5$ substituiert ist , worin $R^1$ für H, $C_1$- $C_{18}$ Alkyl, $C_7$- $C_{24}$ Aralkyl, Phenyl, Naphthyl oder Fluorenyl steht, oder
**NH- C (=O)- $OR^6$,** worin $R^6$ für H, $C_1$- $C_{18}$ Alkyl, $C_7$- $C_{24}$ Aralkyl, Phenyl, Naphthyl oder Fluorenyl steht, bedeutet, und
**Y** und **Z** gleich oder verschieden sind und
**$OR^7$,** worin $R^7$ für H, $C_1$- $C_{18}$ Alkyl, $C_7$- $C_{24}$ Aralkyl, Phenyl, Naphthyl oder Fluorenyl steht,
**O- $(CH_2$- $CH_2$- $O)_n$- $R^8$,** worin $R^8$ für H, $C_1$- $C_{18}$ Alkyl, $C_7$- $C_{24}$ Aralkyl, Phenyl, Naphthyl oder Fluorenyl steht und n = 1 bis 20 ist,
**O- $(CH_2$- CH $(CH_3)$- $O)_n$- $R^9$,** worin $R^9$ für H, $C_1$- $C_{18}$ Alkyl, $C_7$- $C_{24}$ Aralkyl, Phenyl, Naphthyl oder Fluorenyl steht und n = 1 bis 20 ist, **O- C (=O)- $R^{10}$,** worin $R^{10}$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl,** welches durch mindestens einen Rest $OR^{11}$ substituiert ist , worin $R^{11}$ für H, $C_1$- $C_{18}$ Alkyl, $C_7$- $C_{24}$ Aralkyl, Phenyl, Naphthyl oder Fluorenyl steht, oder
NH- C (=O)- $OR^{12}$, worin $R^{12}$ für H, $C_1$- $C_{18}$ Alkyl, $C_7$- $C_{24}$ Aralkyl, Phenyl, Naphthyl oder Fluorenyl steht, bedeuten, und

(ii) mindestens einen Vernetzer oder Vernetzungssystem.

Für die bevorzugten Bedeutungen von X, Y und Z sowie der darin enthaltenen Reste gelten auch hier die gleichen Definitionen wie für die bevorzugten Bedeutungen von X, Y und Z und der darin enthaltenen Reste in den allgemeinen Formel (I) und (II).

Zusätzlich können die vulkanisierbaren Mischungen noch ein oder mehrere weitere übliche Additive enthalten.

Die Herstellung dieser vulkanisierbaren Mischungen erfolgt üblicherweise durch Mischen des funktionalisierten Nitrilkautschuks (i), der optional auch teilweise oder ganz hydriert sein kann und mindestens einem Vernetzungssystem (ii) und gegebenenfalls ein oder mehreren weiteren Additiven.

Als **Vernetzer** kommen beispielsweise peroxidische Vernetzer in Frage wie Bis (2, 4- dichlorbenzyl) peroxid, Dibenzoylperoxid, Bis (4- chlorbenzoyl) peroxid, 1, 1- Bis- (t- butylperoxy)- 3, 3, 5- trimethylcyclohexan, tert- Butylperbenzoat, 2, 2 Bis (t- butylperoxy) buten, 4, 4- di- tert.Butyl peroxynonylvalerat, Dicumylperoxid, 2, 5- Dimethyl- 2, 5- di (t- butylperoxy)- hexan, tert- Butylcumylperoxid, 1, 3- Bis (t- butylperoxy isopropyl)- benzol, Di- t- butylperoxid und 2, 5- Dimethyl- 2, 5- di (t- butylperoxy)- hexyn- 3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan- tri (meth) acrylat, Triallyltrimellithat, Ethylenglycoldimethacrylat, Butandioldimethacrylat, Trimethylolpropantrimethacrylat, Zinkacrylat, Zinkdiacrylat, Zinkmethacrylat, Zinkdimethacrylat, 1, 2- Polybutadien oder N, N'- m- phenylen- dimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere

Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Dithiophosphate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2- Mercaptobenzothiazol (MBT), Dibenzthiazyldisulfid (MBTS), Zinkmercaptobenzothiazol (ZMBT) und Kupfer- 2- mercaptobenzo- thiazol.

Als Sulfenamidderivate können zum Beispiel eingesetzt werden: N- Cyclohexyl- 2- benzothiazylsulfenamid (CBS), N- tert.- Butyl- 2- benzthiazylsulfenamid (TBBS), N, N'- Dicyclohexyl- 2- benzthiazylsulfenamid (DCBS), 2- Morpholinothiobenzthiazol (MBS), N- Oxydiethylenthiocarbamyl- N- tert.butylsulfenamid und Oxydiethylenthiocarbamyl- N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdi ($C_2$- $C_{16}$) alkydithiophosphate Kupferdi ($C_2$- $C_{16}$) alkyldithiophosphate und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Eine Vernetzung ist auch mit Vernetzern möglich, die mindestens zwei Isocyanatgruppen aufweisen - entweder in Form mindestens zwei freier Isocyanatgruppen (-NCO) oder aber in Form geschützter Isocyanatgruppen, aus denen unter den Vernetzungsbedingungen in-situ die -NCO Gruppen freigesetzt werden.

Ebenso als Zusätze geeignet sind beispielsweise: Zinkdiamindiisocyanat, Hexamethylentetramin, 1, 3- Bis (citraconimidomethyl) benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen funktionalisierten, optional teilweise oder ganz hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin- Vernetzers erfolgen, bevorzugt in Gegenwart eines Vernetzungsbeschleunigers. Der Polyamin- Vernetzer ist nicht eingeschränkt, solange es sich (1) um eine Verbindung handelt, die entweder zwei oder mehr Amino- Gruppen enthält (ggf. auch in Salz- Form) oder (2) um eine Spezies, die während der Vernetzungsreaktion in- situ eine Verbindung ausbildet, die zwei oder mehr Amino- Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid- Strukturen (letzteres eine Struktur "- C (=O) $NHNH_2$")

Beispiele für derartige Polyamin-Vernetzer (ii) sind:

- Aliphatische Polyamine, bevorzugt Hexamethylendiamin, Hexamethylendiamincarbamat, Tetramethylenpentamin,

Hexamethylendiaminzimtaldehyd-Addukt oder Hexamethylendiamindibenzoat;

- Aromatische Polyamine, bevorzugt 2, 2- Bis (4- (4- aminophenoxy) phenyl) propan, 4, 4'- Methylendianilin, m-Phenylendiamin, p- Phenylendiamin oder 4, 4'- Methylen- bis (o- chloroanilin;
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des optional hydrierten Nitrilkautschuks.

Als Vernetzungsbeschleuniger kann in Kombination mit dem Polyamin- Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di- o- tolylguanidin (DOTG), o- Tolylbiguanidin und Di- o- tolylguanidin- Salz der Dicathecolborsäure. Einsetzbar sind ferner Aldehydamin- Vernetzungsbeschleuniger wie z.B. n- Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1, 8- diazabicyclo [5.4.0] undec- 7- en (DBU), 1, 5- diazabicyclo [4.3.0]- 5- nonen (DBN), 1, 4- diazabicyclo [2.2.2] octan (DABCO), 1, 5, 7- triazabicyclo [4.4.0] dec- 5- en (TBD), 7-methyl- 1, 5, 7- triazabicyclo [4.4.0] dec- 5- en (MTBD) .

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Die vulkanisierbare Mischung basierend auf dem erfindungsgemäßen optional hydrierten Nitrilkautschuk kann prinzipiell auch Anvulkanisationsverzögerer enthalten, die sich bei einer Vulkanisation mit Schwefel oder mit Peroxiden unterscheiden.

Bei einer Vulkanisation mit Schwefel werden eingesetzt: Cyclohexylthiophthalimid (CTP), N,N' Dinitrosopentamethlyentetramin (DNPT), Phthal-säureanhydrid (PTA) und Diphenylnitrosamin. Bevorzugt ist Cyclohexylthiophthalimid (CTP).

Bei einer Vulkanisation mit Peroxiden werden zur Verzögerung der Anvulkanisation Verbindungen wie sie in WO- A- 97/01597 und US- A- 4, 857, 571 genannt sind, eingesetzt. Bevorzugt sind sterisch gehinderte p- Dialkylaminophenole, insbesondere Ethanox 703 (Sartomer)

Neben der Zugabe des oder der Vernetzer kann der erfindungsgemäße optional hydrierten Nitrilkautschuk auch mit weiteren üblichen Kautschukadditiven gemischt werden.

Diese schließen beispielsweise die typischen und dem Fachmann gut bekannten Substanzen wie Füllstoffe, Füllstoffaktivatoren, Anvulkanisationsverzögerer, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris (2- methoxy- ethoxy) silan, N- Cyclohexyl- 3- aminopropyltrimethoxysilan, 3- Aminopropyl- trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl) methyldimethoxysilan in Betracht. Weitere Füllstoffaktivatoren stellen zum Beispiel grenzflächenaktive Substanzen wie Triethanolamin und Ethylenglykole mit Molekulargewichten von 74 bis 10 000 g/mol dar. Die Menge an Füllstoffaktivatoren beträgt üblicherweise 0 bis 10 phr, bezogen auf die Menge des Füllstoffs. Die Bestimmung der geeigneten Menge an Füllstoffaktivator ist dem Fachmann in Abhängigkeit von der Art und Menge des Füllstoffs geläufig.

Als **Alterungsschutzmittel** können den vulkanisierbaren Mischungen beispielsweise die folgenden zugesetzt werden: Polymerisiertes 2, 2, 4- Trimethyl- 1, 2- dihydrochinolin (TMQ), 2- Mercaptobenzimidazol (MBI), Methyl- 2-Mercaptobenzimidazol (MMBI) oder Zinkmethylmercaptobenzimidazol (ZMMBI) .

Alternativ können auch die folgenden, allerdings weniger bevorzugten Alterungsschutzmittel eingesetzt werden: aminische Alterungsschutzmittel z. B. in Form von Mischungen aus Diaryl- p- phenylendiaminen (DTPD), octyliertem Diphenylamin (ODPA), Phenyl- $\alpha$- Naphthylamin (PAN) und/ oder Phenyl- $\beta$- Naphthylamin (PBN) . Vorzugsweise werden solche auf Phenylendiaminbasis eingesetzt. Beispiele für Phenylendiamine sind N- Isopropyl- N'- phenyl- p- Phenylendiamin, N- 1, 3- Dimethylbutyl- N'- Phenyl- p- Phenylendiamin (6PPD), N- 1, 4- Dimethylpentyl- N'- phenyl- p- Phenylendiamin (7PPD) und N, N'- bis- 1, 4- (1, 4- Dimethylpentyl)- p- Phenylendiamin (7PPD) .

Die Alterungsschutzmittel werden üblicherweise in Mengen von bis zu 10 Gew.Teilen, bevorzugt bis zu 5 Gew.Teilen, besonders bevorzugt 0,25 bis 3 Gew.Teilen, inbesondere 0,4 bis 1,5 Gew. Teile, bezogen auf 100 Gew.Teile

der Summe aus teilhydriertem Nitrilkautschuk und vinylgruppenhaltigem Silikonkautschuk eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden üblicherweise in Mengen von ca. 0 bis 10 Gew.Teilen, bevorzugt 0,5 bis 5 Gew.Teilen, bezogen auf 100 Gew.Teile der Summe aus teilhydriertem Nitrilkautschuk und vinylgruppenhaltigem Silikonkautschuk eingesetzt.

Auch die Verstärkung mit Festigkeitsträgern (Fasern) aus Glas, nach der Lehre von US- A- 4, 826, 721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Vulkanisaten auf Basis mindestens eines erfindungsgemäßen funktionalisierten Nitrilkautschuks, welches dadurch gekennzeichnet ist, dass man die zuvor beschriebene vulkanisierbare Mischung durch Erhöhung der Temperatur vernetzt, bevorzugt in einem Formgebungsverfahren, besonders bevorzugt unter Anwendung des Spritzgusses.

**Gegenstand der Erfindung** ist somit ebenso das Vulkanisat, bevorzugt als Formteil vorliegend, welches durch das vorgenannte Vulkanisationsverfahren erhältlich ist. Diese Vulkanisate zeichnen sich dadurch aus, dass sie über ein besonders stabiles Netzwerk verfügen, dessen Ausbildung durch die funktionellen und vulkanisationsaktiven Endgruppen im erfindungsgemäßen Nitrilkautschuk, möglich wird, da die Anzahl der freien Kettenenden im Vulkanisat reduziert wird.

Durch dieses Vulkanisationsverfahren können eine Vielzahl von Formteilen hergestellt werden, so z.B. eine Dichtung, eine Kappe, einen Schlauch oder eine Membran. Insbesondere können O-Ringdichtungen, Flachdichtungen, Wellendichtringe, Dichtmanschetten, Dichtkappen, Staubschutzkappen, Steckerdichtungen, Thermoisolierschläuche, Ölkühlerschläuche, Luftansaugschläuche, Servolenkschläuche oder Pumpenmembranen hergestellt werden.

Die durch die Metathese vor/oder nach Hydrolyse hydroxylierten und/oder aminmodifizierten Nitrilkautschuke eignen sich für die Isocyanatvernetzung, beispielsweise für die Herstellung von Verbundglasscheiben, für die Dichtungen von Doppel- oder Dreifachverglasungen sowie die Fixierung von Pulvermischungen für Festoffraketen bzw. Boostern.

Die funktionalisierten Nitrilkautschuke weisen eine niedrige Glastemperatur auf. Durch Kopplung mit harten Bausteinen auf der Basis von Polyestern oder Polyamiden werden Multiblockcopolymere zugänglich, die als thermoplastische Elastomere einsetzbar sind. Diese thermoplastischen Elastomere können für die Herstellung von Dichtungen aller Art wie Achsmanschetten , Dichtkappen und Schläuche eingesetzt werden.

Aufgrund ihrer niedrigen Glastemperatur eigenen sich die funktionalisierten Nitrilkautschuke auch für die Schlagzähmodifikation von spröden Thermo- und Duroplasten, insbesondere wenn die Thermo- oder Duroplasten polar sind oder geeignete funktionelle Gruppen aufweisen, die mit den funktionellen Gruppen des Nitrilkautschuks in physikalische Wechselwirkung treten oder reagieren können. Beispiele sind die Schlagzähmodifikation von Polyamiden (aromatische oder aliphatische), Polyestern wie Polybutylen (PBT) oder Polyethylenterephthalat (PET), Polycarbonat (PC), Polymethylenoxid (POM), Polyethersulfonen, Polyetherketonen, Polybenzimidazol und Polyphenylensulfid.

Duroplasten, die durch die funktionalisierten Nitrilkautschuke elastifiziert werden können, sind PF- Harze, Epoxidharze, Melamin/ Formaldeydharze und ungesättigte Polyesterharze (UP- Harze) . Die elastifizierten Duroplaste eigenen sich für die Herstellung von Brems- und Kupplungsbelägen (PF- Harze), die Herstellung von Klebstoffen (Epoxydharze), Lackierungen und Anstriche (UP- Harze) sowie für die Herstellung von Formkörpern wie Bootskörpern (UP-Harze) oder Flügeln für Windräder (UP- Harze, PF- Harze) .

Gegenstand der Erfindung sind somit auch Blockcopolymere enthaltend ein oder mehrere Blöcke basierend auf dem funktionalisierten Nitrilkautschuk.

**Beispiele:**

In den nachfolgenden Beispielen werden die in **Tabelle 1** aufgeführten Metathesekatalysatoren I, II und III, die in **Tabelle 2** genannten Nitrilkautschuke A, B, C und D sowie die in **Tabelle 3** aufgeführten Olefine eingesetzt.

**Tabelle 1:** **Eingesetzte Katalysatoren**

| Katalysator | Bezeichnung | Strukturformel | Molmasse [g/mol] | Quelle |
|---|---|---|---|---|
| I | Grubbs-II-Katalysator | 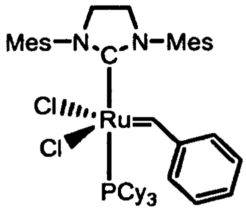 | 848,33 | Firma Materia/ Pasadena; USA |
| II | 2,6-Diisopropyl-phenylimido neophylidene molybdenum(VI) bis(t-butoxide) | 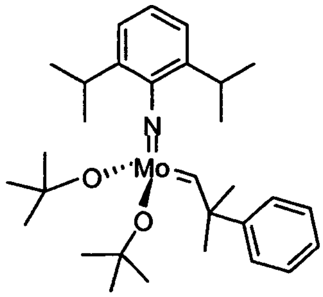 | 549,65 | ABCR |
| III | 2,6-Diisopropyl-phenylimido neophylidene molybdenum(VI) bis(hexafluoro-t-butoxide) | 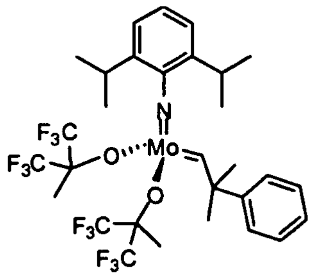 | 765,53 | ABCR |

**Tabelle 2:** **Eingesetzte Nitrilkautschuke**

| Kautschuk | Nitrilgehalt [Gew.-%] | Hydriergrad [%] | $MN_0$ [g/mol] | $MW_0$ [g/mol] | $PDI_0$ |
|---|---|---|---|---|---|
| A | 34 | 0 | 60100 | 174800 | 2,9 |
| B | 34 | 0 | 74100 | 204000 | 2,8 |
| C | 34 | 0 | 77100 | 223000 | 2,9 |
| D | 34 | 65,4 | 57800 | 190500 | 3,3 |
| $MN_0$ Zahlenmittel der Molmasse vor dem Metathese-Abbau<br>$MW_0$ Gewichtsmittel der Molmasse vor dem Metathese-Abbau<br>$PDI_0$ Polydispersitätsindex vor dem Abbau | | | | | |

**Tabellen 3a und 3b:** **Eingesetzte Olefine**

Soweit die eingesetzten Olefine nicht kommerziell erworben wurden, ist die Herstellung nachfolgend beschrieben.

**Tabelle 3a:** **Nicht erfindungsgemäße Olefine**

| Chemische Bezeichnung | Strukturformel | Molmasse [g/mol] | Quelle |
|---|---|---|---|
| 1-Hexen | 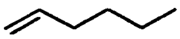 | 84,16 | Sigma-Aldrich |

(fortgesetzt)

| Chemische Bezeichnung | Strukturformel | Molmasse [g/mol] | Quelle |
|---|---|---|---|
| 1-Octen | 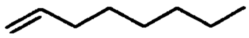 | 112,21 | Acros Organics |
| 1-Decen | 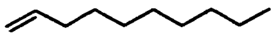 | 140,27 | Acros Organics |
| trans-4-Octen | 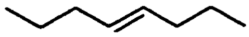 | 112,21 | Acros Organics |
| 5-Decen | $CH_3-(CH_2)_3-CH=CH-(CH_2)_3-CH_3$ | 140,27 | s. Synthesevorschrift |
| Styrol | 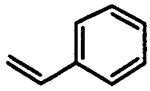 | 104,15 | Sigma-Aldrich |
| m-Nitrostyrol | 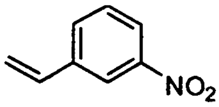 | 149,15 | ABCR |
| α-Methylstyrol | 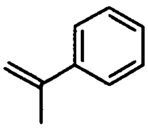 | 118,18 | Acros Organics |
| trans-Stilben | 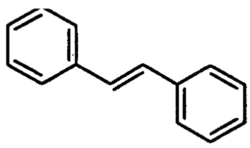 | 180,25 | Fluka |
| 1,1-Diphenylethylen | 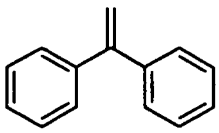 | 180,25 | Acros Organics |
| Allylamin | 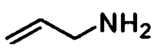 | 57,09 | Fluka |
| 1-Allyl-2,3,4,5,6-Pentafluorbenzol | 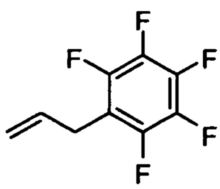 | 208,13 | Sigma-Aldrich |
| 3, 3, 4, 4, 5, 5, 6, 6, 6-Nonafluor-1-hexen | 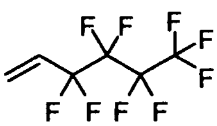 | 246,07 | Sigma-Aldrich |
| 4-Octen-1,8-diol | 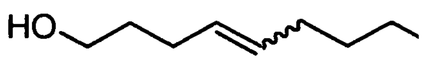 | 144,21 | s. Synthesevorschrift |

(fortgesetzt)

| Chemische Bezeichnung | Strukturformel | Molmasse [g/mol] | Quelle |
|---|---|---|---|
| 3,10-Diisopropyl-2,11-dimethyl-6-dodecen-3,10-diol | 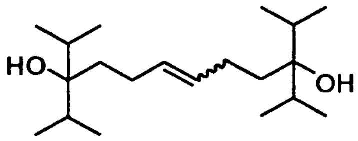 | 312,35 | s. Synthesevorschrift |
| Fumarsäurediethylester | 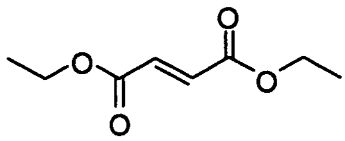 | 172,18 | s. Synthesevorschrift |

**Tabelle 3b: Erfindungsgemäße Olefine**

| Chemische Bezeichnung | Strukturformel | Molmasse [g/mol] | Quelle |
|---|---|---|---|
| Allylalkohol | 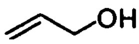 | 58,08 | Acros Organics |
| Allylbenzylether | 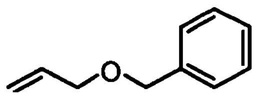 | 148,20 | Sigma-Aldrich |
| Benzoesäureallylester | 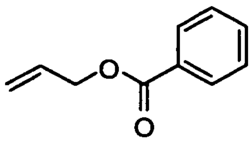 | 162,19 | s. Synthesevorschrift |
| t-Butyl-n-Allylcarbamat | 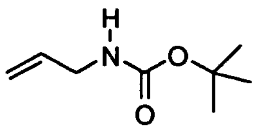 | 157,21 | Sigma-Aldrich |
| o-Allylphenol | 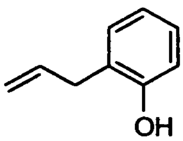 | 134,18 | Acros Organics |
| p-Allylphenol | 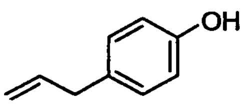 | 134,18 | s. Synthesevorschrift |
| o-Allylanisol | 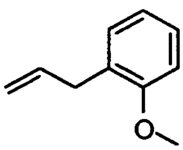 | 148,20 | s. Synthesevorschrift |
| p-Allylanisol | 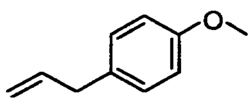 | 148,20 | Acros Organics |
| cis-2-Buten-1,4-diol | 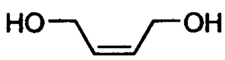 | 88,11 | Fluka |

(fortgesetzt)

| Chemische Bezeichnung | Strukturformel | Molmasse [g/mol] | Quelle |
|---|---|---|---|
| cis-2-Buten-1,4-diyldiacetat | 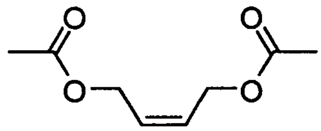 | 172,18 | s. Synthesevorschrift |
| cis-2-Buten-1,4-diyldibenzoat | 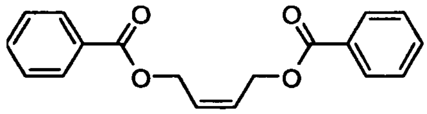 | 296,32 | s. Synthesevorschrift |
| cis-1,4-Bisbenzyloxy-2-buten | 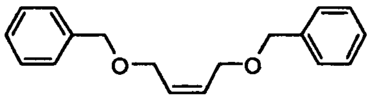 | 268,53 | Sigma-Aldrich |

**A Herstellung der nicht käuflich erworbenen Olefine:**

**5-Decen:**

Unter Schlenkbedingungen wurden zunächst 5,0 g (59 mmol) 1-Hexen in 20 mL trockenem Dichlormethan vorgelegt. Die Reaktion wurde durch Zugabe von 50 mg ($2,95*10^{-5}$ mol, 0,1 mol-%) Grubbs II-Katalysator in 5 mL Dichlormethan gestartet. Die Reaktionsmischung wurde anschließend 6 Stunden bei 35 °C gerührt. Das entstandene Ethen wurde durch einen kontinuierlichen Inertgas-Strom ausgetrieben. Nach Entfernen des Lösungsmittels im Vakuum wurde das Produkt nach Destillation unter vermindertem Druck (20 mbar, 58 °C) als farblose Flüssigkeit erhalten.

Ausbeute: 2,4 g (17,8 mmol, 58%, davon 84% trans-konfiguriert)

**4-Octen-1,8-diol:**

Unter Schlenkbedingungen wurden 2, 0 g (23, 5 mmol) 4- Penten- 1- ol in 10 mL trockenem Dichlormethan gelöst. Die Selbstmetathese von 4- Penten- 1- ol wurde durch Zugabe von 20 mg ($2, 35*10^{-5}$ mol, 0, 1 mol- %) Grubbs II- Katalysator in 6 mL Dichlormethan gestartet. Die Reaktionsmischung wurde anschließend 24 Stunden bei Raumtemperatur gerührt. Das entstandene Ethen wurde durch einen kontinuierlichen Inertgas- Strom ausgetrieben. Nach Entfernen des Lösungsmittels im Vakuum wurde das Produkt nach Säulenchromatographie (Kieselgel, Ethylacetat) als farbloses Öl erhalten.

Ausbeute: 745 mg (5,17 mmol, 44%, davon 83% trans-konfiguriert)

**3,10-Diisopropyl-2,11-dimethyl-6-dodecen-3,10-diol:**

In einem ausgeheizten Dreihalskolben mit Rückflusskühler, Tropftrichter, Inertgaszuleitung und Überdruckventil wurden 2, 43 g (0, 1 mol, 1 eq.) Magnesium- Späne in 30 mL trockenem Diethylether vorgelegt. Unter leichtem Sieden des Lösemittels wurde danach eine Lösung von 13, 5 g (0, 1 mol, 1 eq.) 4- Brom- 1- buten in 30 mL Diethylether zugetropft und die Reaktionsmischung anschließend eine Stunde unter Rückfluss erhitzt. Nach Abkühlen des Reaktionsansatzes wurde eine Lösung aus 11, 4 g (0, 1 mol, 1 eq.) 2, 4- Dimethyl- 3- pentanon in 30 mL Diethylether zugetropft und fünf Stunden unter Rückfluss erhitzt. Anschließend wurde die Reaktion durch Zugabe von 100 mL gesättigter Ammoniumchlorid- Lösung gestoppt, die organische Phase abgetrennt und die wässrige Phase zwei mal mit 70 mL Diethylether extrahiert. Nach zweimaligem Waschen der Etherphase mit 100 mL Wasser und Trocknen über $MgSO_4$ wurde das Trockenmittel abfiltriert und das Lösungsmittel im Vakuum entfernt. Anschließende Vakuumdestillation lieferte 3- Isopropyl- 2- methyl- 6- hepten- 3- ol bei einem Druck von 16 mbar und einer Temperatur von 90 °C als farblose Flüssigkeit.

Unter Schlenkbedingungen wurden 2, 0 g (11, 7 mmol) 3- Isopropyl- 2- methyl- 6- hepten- 3- ol in 6 mL trockenem Dichlormethan gelöst. Die Selbstmetathese von 3- Isopropyl- 2- methyl- 6- hepten- 3- ol wurde durch Zugabe von 100 mg (0, 117 mmol, 1 mol- %) Grubbs II- Katalysator in 6 mL Dichlormethan gestartet. Die Reaktionsmischung wurde anschließend 6 Stunden bei Raumtemperatur gerührt. Das entstandene Ethen wurde durch einen kontinuierlichen Inertgas- Strom ausgetrieben. Nach Entfernen des Lösungsmittels im Vakuum wurde das Produkt nach Säulenchromatographie (Kieselgel, Pentan/ Ethylacetat = 7/1) als farbloses Öl erhalten.

Ausbeute: 1,29 g (0,41 mmol, 71%, davon 80% trans-konfiguriert)

**Fumarsäurediethylester:**

In einem 100 mL Kolben mit Wasserabscheider und Rückflusskühler wurden 11,6 g (0,1 mol, 1 eq.) Fumarsäure, 16,1 g (0,35 mol, 3,5 eq.) Ethanol und 1 g (5,3 mmol, 0,05 eq.) Toluolsulfonsäure in 30 mL Chloroform vorgelegt. Dann wurde unter Rückfluss erhitzt, bis keine Abscheidung von Wasser mehr erfolgte. Anschließend wurde zwei Mal mit 100 mL ein molarer Natronlauge und ein Mal mit Wasser gewaschen. Nach dem Trocknen über $MgSO_4$ und dem Abfiltrieren des Trockenmittels wurde das Lösungsmittel im Vakuum entfernt und man erhält das Produkt als farblose Flüssigkeit.
Ausbeute: 16,8 g (97,6 mmol, 97%)

**cis-2-Buten-1,4-diyl-diacetat:**

Unter Schlenkbedingungen wurden in einem Schlenkkolben mit Tropftrichter und Überdruckventil 17, 2 g (0, 1 mol, 1 eq.) cis- 2- Buten- 1, 4- diol in 10 mL Pyridin vorgelegt. Unter Kühlung im Eisbad wurde eine Lösung aus 30, 6 g (0, 3 mol, 3 eq.) Essigsäureanhydrid in 20 mL Pyridin innerhalb von einer Stunde zugetropft. Nach Entfernen des Eisbads wurde die Reaktionslösung 24 Stunden bei Raumtemperatur gerührt. Anschließend wurden 25 mL Dichlormethan zugefügt, die organische Phase abgetrennt und ein Mal mit 50 mL zwei molarer Salzsäure und zwei Mal mit 80 mL gesättigter Natriumchloridlösung gewaschen. Nach dem Trocknen über $MgSO_4$, wurde das Trockenmittel abfiltriert und das Lösungsmittel des Filtrats im Vakuum entfernt. Nach der Extraktion fiel das Produkt als farblose Flüssigkeit an.
Ausbeute: 16,5 g (96 mmol, 96%)

**cis-2-Buten-1,4-diyl-dibenzoat:**

Unter Schlenkbedingungen wurden in einem Schlenkkolben mit Tropftrichter und Überdruckventil 4, 5 g (51 mmol, 1 eq.) cis- 2- Buten- 1, 4- diol in 5 mL Pyridin vorgelegt. Unter Kühlung im Eisbad wurde eine Lösung aus 24, 5 g (0, 11 mol, 2, 1 eq.) Benzoesäureanhydrid in 20 mL Pyridin innerhalb von einer Stunde zugetropft. Nach Entfernen des Eisbads wurde die Reaktionslösung 24 Stunden bei Raumtemperatur gerührt. Anschließend wurden 25 mL Dichlormethan zugefügt, die organische Phase abgetrennt und ein Mal mit 50 mL zwei molarer Salzsäure und zwei Mal mit 80 mL gesättigter Natriumchloridlösung gewaschen. Nach dem Trocknen über $MgSO_4$, wurde das Trockenmittel abfiltriert und das Lösungsmittel des Filtrats im Vakuum entfernt. Anschließende Säulenchromatographie (Aluminiumoxid, Pentan/Ethylacetat = 1/1) ergab das Produkt als blassgelben, süßlich riechenden Feststoff.
Ausbeute: 12,9 g (0,43 mmol, 85%)

**Benzoesäureallylester:**

Unter Schlenkbedingungen wurden in einem Schlenkkolben mit Tropftrichter und Überdruckventil 2 g (34,4 mmol, 1 eq.) Allylalkohol in 5 mL Pyridin vorgelegt. Unter Kühlung im Eisbad wurde dann eine Lösung aus 8,6 g (37,9 mmol, 1,1 eq.) Benzoesäureanhydrid in 10 mL Pyridin innerhalb von einer Stunde zugetropft. Nach Entfernen des Eisbads wurde die Reaktionslösung 24 Stunden bei Raumtemperatur gerührt. Anschließend wurden 25 mL Dichlormethan zugefügt, die organische Phase abgetrennt und ein Mal mit 50 mL zwei molarer Salzsäure und zwei Mal mit 80 mL gesättigter Natriumchloridlösung gewaschen. Nach dem Trocknen über $MgSO_4$, wurde das Trockenmittel abfiltriert und das Lösungsmittel des Filtrats im Vakuum entfernt. Anschließende Säulenchromatographie (Kieselgel, Pentan/Ethylacetat = 12/1) lieferte das Produkt als farblose Flüssigkeit.
Ausbeute: 2,99 g (18,4 mmol, 54%)

**p-Allylphenol:**

In einem ausgeheizten Schlenkkolben mit Tropftrichter und Überdruckventil wurden 2,96 g (20 mmol, 1 eq.) p-Allylanisol in 80 mL trockenem Dichlormethan vorgelegt. Nach Kühlen des Ansatzes auf -70 °C werden danach 20 mL einer 1-molarer Lösung von Bortribromid in Heptan (5 g, 20 mmol, 1 eq. $BBr_3$) zugetropft. Nach Aufwärmen auf 15 °C innerhalb von zwei Stunden wurde die Reaktion durch Zugabe von 50 mL Eiswasser gestoppt. Die organische Phase wurde abgetrennt und zwei Mal mit 50 mL 5%iger Natronlauge gewaschen. Die wässrige Phase wurde drei Mal mit 50 mL Diethylether extrahiert. Anschließend wurden die vereinigten organischen Phasen über $MgSO_4$ getrocknet und nach dem Abfiltrieren des Trockenmittels das Lösungsmittel im Vakuum entfernt. Anschließende Säulenchromatographie (Kieselgel, Dichlormethan) ergab das Produkt als hellbraunes Öl.
Ausbeute: 1,45 g (10,8 mmol, 54%)

**o-Allylanisol:**

In einem Dreihalskolben mit Rückflusskühler, Innenthermometer und Tropftrichter wurden 4,0 g (29,8 mmol, 1 eq.) o-Allylphenol vorgelegt. Nach Zugabe von 2,13 g (38 mmol, 1,3 eq.) Kaliumhydroxid in Form einer 10 Gew.-%igen Lösung in Wasser, färbte sich die Lösung blaugrün. Unter Kühlung im Wasserbad wurden langsam 3,76 g (29,8 mmol, 1 eq.) Dimethylsulfat zugetropft, wobei die Temperatur nie über 40 °C steigt. Anschließend wurde eine Stunde bei 90 °C gerührt und nach Abkühlen der Reaktionsmischung die organische Phase abgetrennt. Die wässrige Phase wurde drei Mal mit 40 mL Diethylether extrahiert und die vereinigten organischen Phasen zwei Mal mit 70 mL ein molarer Natronlauge und zwei Mal mit 70 mL Wasser gewaschen. Nach dem Trocknen über $MgSO_4$ und dem Abfiltrieren des Trockenmittels, wurde das Lösungsmittel im Vakuum entfernt. Anschließende Säulenchromatographie (Kieselgel, Pentan/Dichlormethan = 2/1) ergab das Produkt als farblose Flüssigkeit.

Ausbeute: 3,55 g (23,9 mmol, 80%)

**B Durchführung der Metathesereaktionen**

Sämtliche Metathesereaktionen wurden in Lösung unter Verwendung von Chlorbenzol (Firma Aldrich), nachfolgend "MCB" genannt, durchgeführt. Vor dem Einsatz wurde das MCB destilliert und bei Raumtemperatur durch Durchleiten von Argon inertisiert. Während eines Zeitraums von 12 Stunden wurde der Nitrilkautschuk bzw. teilhydrierte Nitrilkautschuk **(Tabelle 2)** unter Rühren bei Raumtemperatur in MCB gelöst. Zu der kautschukhaltigen Lösung wurden die in den folgenden Tabellen vermerkten Zusätze (ohne Verdünnung) hinzugegeben und zur Homogenisierung 30 Minuten gerührt. Die Metathesekatalysatoren (siehe Tabelle 1) wurden jeweils in 6 mL inertisiertem MCB unter Argon gelöst, wobei die Zugabe der Katalysatorlösungen zu den NBR-Lösungen sofort nach der Herstellung der Katalysatorlösungen erfolgte. Sämtliche Reaktionsansätze waren so ausgelegt, dass die Kautschukkonzentration nach Katalysatorzugabe 12 Gew.% betrug. Bei den Versuchen mit $2{,}38*10^{-4}$ mol Olefin / g Kautschuk wurden 40 g Kautschuk eingesetzt. Bei Verwendung von $7{,}14*10^{-4}$, $1{,}43*10^{-3}$ bzw. $2{,}86*10^{-3}$ mol Olefin / g Kautschuk wurden 10 g Kautschuk eingesetzt. Die Metathesereaktionen wurden bei 23°C unter Einsatz der in den **Tabellen 4-6** genannten Mengen an Einsatzstoffen durchgeführt. Nach jeweils 7 h Reaktionszeit wurden der Reaktionslösung 3 g entnommen und durch Zusatz von 0,2 mL Ethylvinylether und anschließendem 30 minütigen Rühren bei Raumtemperatur abgestoppt.

Für die GPC-Analytik wurden den mit Ethylvinylether abgestoppten Nitrilkautschuk-Lösungen 0,2 ml entnommen und mit 3 ml N,N'-Dimethylacetamid (der Firma Acros Organics mit 5 g/L LiBr versetzt) verdünnt. Vor Durchführung der GPC-Analyse wurden die Lösungen jeweils mittels eines 0,2 μm-Spritzenfilters aus Teflon (Chromafil PTFE 0,2 μm; Firma Macherey-Nagel) filtriert. Im Anschluss daran erfolgte die GPC-Analyse mit einem Gerät der Firma Waters, ausgestattet mit einem Waters 717 Autosampler, einer Vorsäule PSS Gram, einer Säule PSS Gram-30 Å 8 x 300 mm und zwei Säulen PSS Gram-1000 Å 8 x 300 mm der Firma Polymer Standards Service, einem Waters 410 RI Detektor und Cirrus Software Multi Version 3.0. Die Kalibrierung der Säulen erfolgte mit linearem Polymethylmethacrylat der Molmassen 600 bis $1{,}64*10^6$ g/mol der Firma Polymer Standards Service. Die Analytik wurde mit einer Flussrate von 1,0 mL/min bei 80 °C unter Verwendung von N,N'-Dimethylacetamid (mit 5 g/L LiBr) als Eluent durchgeführt.

**C Versuchsergebnisse**

**C1 Bestimmmung der Gehalte an funktionellen Gruppen im Kautschuk**

Zur Bestimmung der Gehalte an funktionellen Gruppen im Kautschuk wurden 750 mg der abgestoppten Probe mit 3 mL Chloroform (HPLC- grade, mit 7, 5 mmol/L Amylen als Stabilisator) verdünnt und mittels eines 0, 2 μm-Spritzenfilters aus Teflon (Chromafil PTFE 0, 2 μm; Firma Macherey- Nagel) filtriert. Anschließend wurde der polymere Anteil von niedermolekularen Bestandteilen mittels Gelpermeationschromatographie (Gerät der Firma Waters, ausgestattet mit einem Waters 717 Autosampler, einer Vorsäule 1x Vorsäule PLgel, 1x Säule PLgel 5 μm MIXED- C 300 x 7, 5 mm, 1x Säule PLgel 5 μm MIXED- C 600 x 7, 5 mm der Firma Polymer Laboratories und einem Waters 410 RI Detektor) getrennt. Das Lösungsmittel der polymeren Fraktion wurde bei vermindertem Druck entfernt und anschließend ein $^1$H-NMR- Spektrum aufgenommen. Aus dem Integral der funktionellen Gruppe und dem Integral des Protons neben der Nitrilgruppe wurde nach folgender Gleichung die Zahl funktioneller Gruppen pro Polymer- Kette ermittelt:

$$N(X) = \frac{I(X) \cdot \%(\mathrm{ACN}) \cdot MN_e}{I(ACN) \cdot p(X) \cdot M(ACN)}$$

N (X) Zahl funktioneller Gruppen pro Polymer- Kette

| | |
|---|---|
| I (X) | Integral der funktionellen Gruppe |
| % (ACN) | Nitrilgehalt des Polymers |
| $MN_e$ | zahlenmittlere Molmasse nach dem Metathese- Abbau |
| p (X) | Anzahl an Protonen, die zum Integral I (X) führen |
| M (ACN) | Molmasse Acrylnitril (53, 06 g/mol) |
| I (ACN) | Integral des Rückgratprotons am gleichen Kohlenstoffatom wie die CN- Gruppe |

**C2 Versuchsergebnisse**

Die Ergebnisse aus drei Versuchsserien sind in den **Tabellen 4, 5 und 6** zusammengefasst.

In **Tabelle 4** sind die nicht erfindungsgemäßen **Vergleichsversuche der 1. Versuchsserie** dargestellt, die bei konstantem Katalysator- ($5{,}89*10^{-7}$ mol pro g Kautschuk) und Olefineinsatz ($2{,}38*10^{-4}$ mol pro g Kautschuk) durchgeführt wurden, unter Bestimmung der bei diesen Bedingungen erzielbaren Endmolmassen.

Aus **Tabelle 4** ergibt sich für die 1. Versuchsserie, dass niedrige Endmolmassen mit einem Verhältnis ($Mw_e/Mw_0$) < 55% nur bei Einsatz des Grubbs (II)- Katalysators (I) in Kombination mit aus dem Stand der Technik bekannten, nicht funktionalisierten 1- Olefinen wie 1- Hexen, 1- Octen und 1- Decen bzw. nicht funktionalisierten Olefinen mit innenständiger Doppelbindung wie trans- 4- Octen erzielt werden. Auf diesem Weg werden jedoch keine funktionalisierten Nitrilkautschuke erhalten. Bei Einsatz der molybdänhaltigen Katalysatoren (II) und (III) in Gegenwart von 1- Hexen liegen die erzielbaren Endmolmassen nur geringfügig unter 100% der Ausgangsmolmasse, ein metathetischer Abbau tritt somit kaum ein. Bei Verwendung der in **Tabelle 4** genannten Olefine 5- Decen, Styrol, m- Nitrostyrol, α- Methylstyrol, trans-Stilben, 1, 1- Diphenylethylen, 4- Octen- 1, 8- diol, 3, 10- Diisopropyl- 2, 11- dimethyl- 6- dodecen- 3, 10- diol, Fumarsäurediethylester, Allylamin, 1- Allyl- 2, 3, 4, 5, 6- Pentafluorbenzol und 3, 3, 4, 4, 5, 5, 6, 6, 6, -Nonafluor- 1- hexen beträgt $Mw_e/Mw_0$ deutlich über 55%.

In **Tabelle 5** sind die erfindungsgemäßen Versuche der 2. Versuchsserie dargestellt, die ebenfalls bei konstantem Katalysator- ($5{,}89*10^{-7}$ mol pro g Kautschuk) und Olefineinsatz ($2{,}38*10^{-4}$ mol pro g Kautschuk) durchgeführt wurden, unter Bestimmung der bei diesen Bedingungen erzielbaren Endmolmassen.

Aus **Tabelle 5** ergibt sich für die 2. Versuchsserie, dass bei Verwendung aller erfindungsgemäßen funktionalisierten Olefine niedrige Endmolmassen mit einem Verhältnis $MW_e/MW_0$ < 55% resultieren.

In **Tabelle 6** sind die erfindungsgemäßen Beispielen der 3. Versuchsserie dargestellt, die unter Einsatz verschiedener Mengen an Katalysator und Olefin durchgeführt wurden. Es wird gezeigt, dass bei Verwendung der erfindungsgemäßen funktionalisierten Olefine sowohl ausgehend von nicht hydriertem als auch von teilhydriertem Nitrilkautschuk durch die Metathese Nitrilkautschuke niedrigeren Molekulargewichts $M_w$ mit 0,7 bis 3,3 funktionellen Gruppen pro Molekül erhalten werden.

**Tabelle 4: 1. Versuchsserie (Vergleichsversuche)**

| **Versuch** | **Katalysator** | | **NBR** | **Olefin** | | $\left[\frac{Mw_e}{Mw_o}\right] \times 100$ |
|---|---|---|---|---|---|---|
| **Nr.** | **Art** | **Menge** [mol/ gNBR] | | **Art** | **Menge** [mol/g NBR] | **[%]** |
| 1.01 | I | $5{,}89*10^{-7}$ | C | 1-Hexen | $2{,}38*10^{-4}$ | 28 |
| 1.02 | II | $5{,}89*10^{-7}$ | C | 1-Hexen | $2{,}38*10^{-4}$ | 95 |
| 1.03 | III | $5{,}89*10^{-7}$ | C | 1-Hexen | $2{,}38*10^{-4}$ | 94 |
| 1.04 | I | $5{,}89*10^{-7}$ | A | 1-Octen | $2{,}38*10^{-4}$ | 19 |
| 1.05 | I | $5{,}89*10^{-7}$ | A | 1-Decen | $2{,}38*10^{-4}$ | 22 |
| 1.06 | I | $5{,}89*10^{-7}$ | C | trans-4-Octen | $2{,}38*10^{-4}$ | 52 |
| 1.07 | I | $5{,}89*10^{-7}$ | C | 5-Decen | $2{,}38*10^{-4}$ | 60 |

(fortgesetzt)

| Versuch Nr. | Katalysator | | NBR | Olefin | | $\left[\frac{Mw_e}{Mw_o}\right] \times 100$ [%] |
|---|---|---|---|---|---|---|
| | Art | Menge [mol/gNBR] | | Art | Menge [mol/g NBR] | |
| 1.08 | I | 5,89*10$^{-7}$ | C | Styrol | 2,38*10$^{-4}$ | 57 |
| 1.09 | I | 5,89*10$^{-7}$ | C | m-Nitrostyrol | 2,38*10$^{-4}$ | 67 |
| 1.10 | I | 5,89*10$^{-7}$ | A | α-Methylstyrol | 2,38*10$^{-4}$ | 67 |
| 1.11 | I | 5,89*10$^{-7}$ | A | trans-Stilben | 2,38*10$^{-4}$ | 75 |
| 1.12 | I | 5,89*10$^{-7}$ | A | 1,1-Diphenyl-ethylen | 2,38*10$^{-4}$ | 66 |
| 1.13 | I | 5,89*10$^{-7}$ | C | 4-Octen-1,8-diol | 2,38*10$^{-4}$ | 58 |
| 1.14 | I | 5,89*10$^{-7}$ | C | 3, 1 0-Diisopropyl-2,11 -dimethyl-6-dodecen-3,10-diol | 2,38*10$^{-4}$ | 61 |
| 1.15 | I | 5,89*10$^{-7}$ | B | Fumarsäurediethylester | 2,38*10$^{-4}$ | 59 |
| 1.16 | I | 5,89*10$^{-7}$ | C | Allylamin | 2,38*10$^{-4}$ | 92 |
| 1.17 | I | 5,89*10$^{-7}$ | B | 1-Allyl-2,3,4,5,6-Pentafluorbenzol | 2,38*10$^{-4}$ | 65 |
| 1.18 | I | 5,89*10$^{-7}$ | B | 3, 3, 4, 4, 5, 5, 6, 6, 6-Nonafluor-1-hexen | 2,38*10$^{-4}$ | 88 |

**Tabelle 5: 2. Versuchsserie (erfindungsgemäße Versuche)**

| Nr. | Katalysator | | NBR | Olefin | | $\left[\frac{Mw_e}{Mw_o}\right] \times 100$ [%] |
|---|---|---|---|---|---|---|
| | Art | Menge [mol/gNBR] | | Art | Menge [mol/gNBR] | |
| 2.01 | I | 5,89*10$^{-7}$ | C | Allylalkohol | 2,38*10$^{-4}$ | 54 |
| 2.02 | I | 5,89*10$^{-7}$ | C | Allylbenzylether | 2,38*10$^{-4}$ | 44 |
| 2.03 | I | 5,89*10$^{-7}$ | C | Benzoesäure-allylester | 2,38*10$^{-4}$ | 49 |
| 2.04 | I | 5,89*10$^{-7}$ | C | t-Butyl-n-Allylcarbamat | 2,38*10$^{-4}$ | 44 |
| 2.05 | I | 5,89*10$^{-7}$ | B | o-Allylphenol | 2,38*10$^{-4}$ | 45 |
| 2.06 | I | 5,89*10$^{-7}$ | B | p-Allylphenol | 2,38*10$^{-4}$ | 47 |
| 2.07 | I | 5,89*10$^{-7}$ | B | o-Allylanisol | 2,38*10$^{-4}$ | 38 |
| 2.08 | I | 5,89*10$^{-7}$ | B | p-Allylanisol | 2,38*10$^{-4}$ | 33 |
| 2.09 | I | 5,89*10$^{-7}$ | B | cis-2-Buten-1,4-diol | 2,38*10$^{-4}$ | 51 |
| 2.10 | I | 5,89*10$^{-7}$ | B | cis-1,4-Bisbenzyl-oxy-2-buten | 2,38*10$^{-4}$ | 46 |
| 2.11 | I | 5,89*10$^{-7}$ | B | cis-2-Buten-1,4-diyl-dibenzoat | 2,38*10$^{-4}$ | 47 |
| 2.12 | I | 5,89*10$^{-7}$ | B | cis-2-Buten-1,4-diyl-diacetat | 2,38*10$^{-4}$ | 47 |

**Tabelle 6: 3. Versuchsserie (erfindungsgemäße Versuche)**

| **Nr.** | **Metathese-Katalysator** | | | **NBR** | **Olefin** | | $\left[\frac{Mw_e}{Mw_o} - \right] \times 100$ | Zahlfunktioneller Gruppen pro NBR-Kette |
|---|---|---|---|---|---|---|---|---|
| | **Art** | **Menge** [mol/g NBR] | **Zusatz** (bzg. auf Katalysator) | | **Art** | **Menge** [mol/gNBR] | [%] | |
| 3.01 | I | $1,77*10^{-6}$ | - | C | Allylbenzylether | $7,14*10^{-4}$ | 14 | 1,2 |
| 3.02 | I | $1,77*10^{-6}$ | - | C | Benzoesäure -allylester | $7,14*10^{-4}$ | 20 | 1,1 |
| 3.03 | I | $1,77*10^{-6}$ | - | C | t-Butyl-n-Allylcarbamat | $7,14*10^{-4}$ | 14 | 1,4 |
| 3.04 | I | $1,77*10^{-6}$ | - | C | p-Allylanisol | $7,14*10^{-4}$ | 7 | 1,5 |
| 3.05 | I | $1,77*10^{-6}$ | - | C | cis-2-Buten-1,4-diyldibenzoat | $7,14*10^{-4}$ | 24 | 1,9 |
| 3.06 | I | $5,89*10^{-7}$ | - | C | cis-2-Buten-1,4-diyldibenzoat | $1,43*10^{-3}$ | 44 | 2,2 |
| 3.07 | I | $3,53*10^{-6}$ | - | C | cis-2-Buten-1,4-diyldibenzoat | $2,38*10^{-4}$ | 21 | 1,8 |
| 3.08 | I | $3,53*10^{-6}$ | - | C | cis-2-Buten-1,4-diyldibenzoat | $1,43*10^{-3}$ | 13 | 3,3 |
| 3.09 | I | $5,89*10^{-7}$ | 100eq. $Ti(OiPr)_4$ | C | cis-2-Buten-1,4-diyldibenzoat | $2,38*10^{-4}$ | 21 | 1,2 |
| 3.10 | I | $5,89*10^{-7}$ | 100eq. $Ti(OiPr)_4$ | C | cis-1,4-Bisbenzylox y-2-buten | $2,38*10^{-4}$ | 32 | 0,7 |
| 3.11 | I | $7,06*10^{-6}$ | - | D | cis-1,4-Bisbenzylox y-2-buten | $2,86*10^{-3}$ | 15 | 1,9 |

## Patentansprüche

1. Verfahren zur Herstellung funktionalisierter Nitrilkautschuke, indem man einen Nitrilkautschuk mit einem Metathese-Katalysator in Kontakt bringt, bei dem es sich um einen Komplexkatalysator auf Basis eines Metalls der 6. oder 8. Nebengruppe des Periodensystems mit mindestens einem carbenartig an das Metall gebundenen Liganden handelt, in Gegenwart mindestens einer Verbindung der allgemeinen Formel (I) oder (II),

$H_2C=CH\text{-}\ CH_2\text{-}\ X$ (I)

$Y\text{-}\ CH_2\text{-}\ CH=CH\text{-}\ CH_2\text{-}\ Z$ (II)

wobei

X $OR^1$, worin $R^1$ für H, $C_1$- $C_{18}$ Alkyl, $C_7$- $C_{24}$ Aralkyl, Phenyl, Naphthyl oder Fluorenyl steht,
**O- (CH₂- CH₂- O)ₙ- R²** → **$O\text{-}\ (CH_2\text{-}\ CH_2\text{-}\ O)_n\text{-}\ R^2$**, worin $R^2$ für H, $C_1$- $C_{18}$ Alkyl, $C_7$- $C_{24}$ Aralkyl, Phenyl, Naphthyl oder Fluorenyl steht und n = 1 bis 20 ist,
**$O\text{-}\ (CH_2\text{-}\ CH\ (CH_3)\text{-}\ O)_n\text{-}\ R^3$**, worin $R^3$ für H, $C_1$- $C_{18}$ Alkyl, $C_7$- $C_{24}$ Aralkyl, Phenyl, Naphthyl oder Fluorenyl steht und n = 1 bis 20 ist,
**$O\text{-}\ C\ (=O)\text{-}\ R^4$**, worin $R^4$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl**, welches durch mindestens einen Rest $OR^5$ substituiert ist, worin $R^5$ für H, $C_1$- $C_{18}$ Alkyl, $C_7$- $C_{24}$ Aralkyl, Phenyl, Naphthyl oder Fluorenyl steht, oder
**$NH\text{-}\ C\ (=O)\text{-}\ OR^6$**, worin $R^6$ für H, $C_1$- $C_{18}$ Alkyl, $C_7$- $C_{24}$ Aralkyl, Phenyl, Naphthyl oder Fluorenyl steht, bedeutet, und
Y und Z gleich oder verschieden sind und
**$OR^7$**, worin $R^7$ für H, $C_1$- $C_{18}$ Alkyl, $C_7$- $C_{24}$ Aralkyl, Phenyl, Naphthyl oder Fluorenyl steht,
**$O\text{-}\ (CH_2\text{-}\ CH_2\text{-}\ O)_n\text{-}\ R^8$**, worin $R^8$ für H, $C_1$- $C_{18}$ Alkyl, $C_7$- $C_{24}$ Aralkyl, Phenyl, Naphthyl oder Fluorenyl steht und n = 1 bis 20 ist,
**$O\text{-}\ (CH_2\text{-}\ CH\ (CH_3)\text{-}\ O)_n\text{-}\ R^9$**, worin $R^9$ für H, $C_1$- $C_{18}$ Alkyl, $C_7$- $C_{24}$ Aralkyl, Phenyl, Naphthyl oder Fluorenyl steht und n = 1 bis 20 ist,
**$O\text{-}\ C\ (=O)\text{-}\ R^{10}$**, worin $R^{10}$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl**, welches durch mindestens einen Rest $OR^{11}$ substituiert ist, worin $R^{11}$ für H, $C_1$- $C_{18}$ Alkyl, $C_7$- $C_{24}$ Aralkyl, Phenyl, Naphthyl oder Fluorenyl steht, oder
**$NH\text{-}\ C\ (=O)\text{-}\ OR^{12}$**, worin $R^{12}$ für H, $C_1$- $C_{18}$ Alkyl, $C_7$- $C_{24}$ Aralkyl, Phenyl, Naphthyl oder Fluorenyl steht, bedeuten.

2. Verfahren nach Anspruch 1, **dadurch gekennzeichnet, dass** als Metathese- Katalysator

(i) ein **Katalysator der allgemeinen Formel (A)** eingesetzt wird, worin

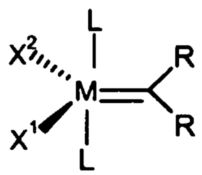

**(A)**

M Osmium oder Ruthenium bedeutet,
$X^1$ und $X^2$ gleich oder verschieden sind und zwei Liganden, bevorzugt anionische Liganden, darstellen,
L gleiche oder verschiedene Liganden, bevorzugt neutrale Elektronen-Donoren darstellen,
R gleich oder verschieden sind und Wasserstoff, Alkyl, bevorzugt $C_1$- $C_{30}$- Alkyl, Cycloalkyl, bevorzugt $C_3$- $C_{20}$- Cycloalkyl, Alkenyl, bevorzugt $C_2$- $C_{20}$- Alkenyl, Alkinyl, bevorzugt $C_2$- $C_{20}$- Alkinyl, Aryl, bevorzugt $C_6$- $C_{24}$- Aryl, Carboxylat, bevorzugt $C_1$- $C_{20}$- Carboxylat, Alkoxy, bevorzugt $C_1$- $C_{20}$- Alkoxy, Alkenyloxy, bevorzugt $C_2$- $C_{20}$- Alkenyloxy, Alkinyloxy, bevorzugt $C_2$- $C_{20}$- Alkinyloxy, Aryloxy, bevorzugt $C_6$- $C_{24}$- Aryloxy, Alkoxycarbonyl, bevorzugt $C_2$- $C_{20}$- Alkoxycarbonyl, Alkylamino, bevorzugt $C_1$- $C_{30}$- AlKylamino, Alkylthio, bevorzugt $C_1$- $C_{30}$- Alkylthio, Arylthio, bevorzugt $C_6$- $C_{24}$- Arylthio, Alkylsulfonyl, bevorzugt $C_1$- $C_{20}$- Alkylsulfonyl, oder Alkylsulfinyl, bevorzugt $C_1$- $C_{20}$- Alkylsulfinyl darstellen, wobei diese Reste alle jeweils optional durch ein oder mehrere Alkyl-, Halogen-, Alkoxy-, Aryl- oder Heteroaryl- Reste substituiert sein können, oder alternativ beide Reste R unter Einbindung des gemeinsamen C- Atoms, an das sie

gebunden sind, zu einer cyclischen Gruppe verbrückt sind, die aliphatischer oder aromatischer Natur sein kann, gegebenenfalls substituiert ist und ein oder mehrere Heteroatome enthalten kann,

(ii) ein **Katalysator der allgemeinen Formel (A1)**, worin

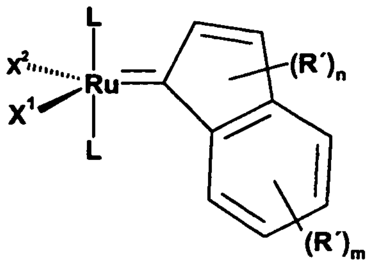

(A1)

$X^1$, $X^2$ und L die gleichen allgemeinen oder bevorzugten Bedeutungen haben können wie in der allgemeinen Formel (A),
n gleich 0, 1 oder 2 ist,
m gleich 0, 1, 2, 3 oder 4 ist und
R' gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können,

(iii) ein **Katalysator der allgemeinen Formel (B)**, worin

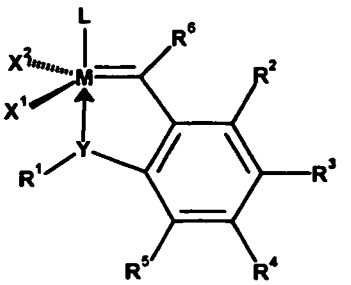

(B)

M Ruthenium oder Osmium bedeutet,
$X^1$ und $X^2$ gleiche oder verschiedene Liganden, bevorzugt anionische Liganden sind,
Y Sauerstoff (O), Schwefel (S), einen Rest N-$R^1$ oder einen Rest P-$R^1$ bedeutet, wobei $R^1$ die nachfolgend genannten Bedeutungen besitzt,
$R^1$ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
$R^2$, $R^3$, $R^4$ und $R^5$ gleich oder verschieden sind und Wasserstoff, organische oder anorganische Reste darstellen,
$R^6$ H, einen Alkyl-, Alkenyl-, Alkinyl- oder einen Aryl-Rest bedeutet und
L ein Ligand ist, der die gleichen Bedeutungen besitzt wie für die Formel (A) genannt,

(iv) ein **Katalysator der allgemeinen Formel (B1)**, worin

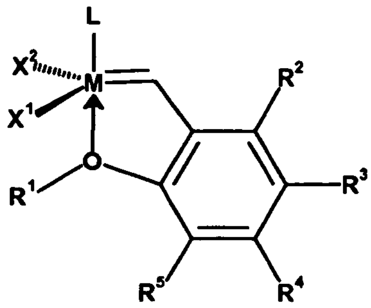

(B 1)

M, L, $X^1$, $X^2$, $R^1$, $R^2$, $R^3$, $R^4$ und $R^5$ die für die allgemeine Formel (B) genannten Bedeutungen besitzen können,

(v) ein **Katalysator der allgemeinen Formel (B2)**, worin

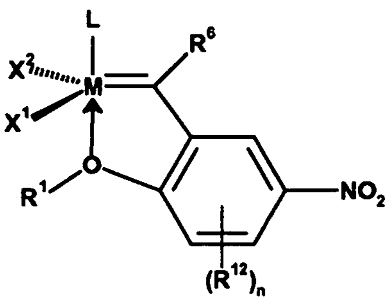

(B2)

M, L, $X^1$, $X^2$, $R^1$ und $R^6$ die für die Formel (B) genannten allgemeinen und bevorzugten Bedeutungen haben, $R^{12}$ gleich oder verschieden sind und die für die Reste $R^2$, $R^3$, $R^4$ und $R^5$ in der Formel (B) genannten Bedeutungen, ausgenommen Wasserstoff, besitzen und
n gleich 0, 1, 2 oder 3 ist.

(vi) ein **Katalysator der allgemeinen Formel (B3)**,

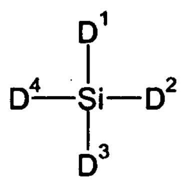

(B3)

worin $D^1$, $D^2$, $D^3$ und $D^4$ jeweils eine Struktur der nachfolgend dargestellten allgemeinen Formel (XVIII) aufweisen, die über die rechts dargestellte Methylengruppe an das Silicium der Formel (B3) angebunden ist und

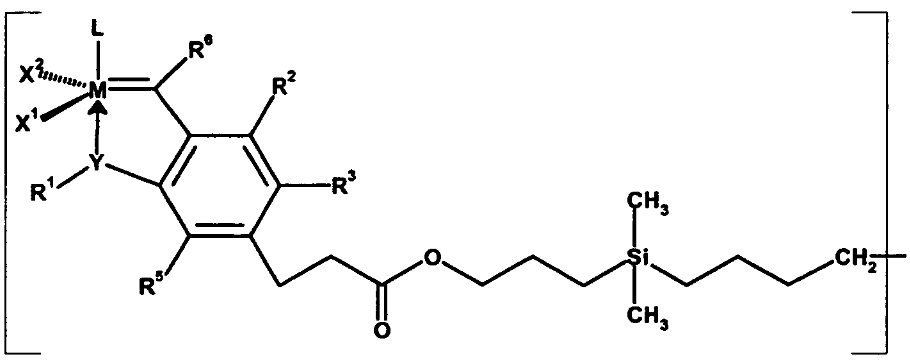

(XVIII)

worin
M, L, $X^1$, $X^2$, $R^1$, $R^2$, $R^3$, $R^5$ und $R^6$ die für die allgemeine Formel (B) genannten Bedeutungen besitzen können,
(vii) ein **Katalysator der allgemeinen Formel (B4)**, worin das Symbol ● für einen Träger steht,

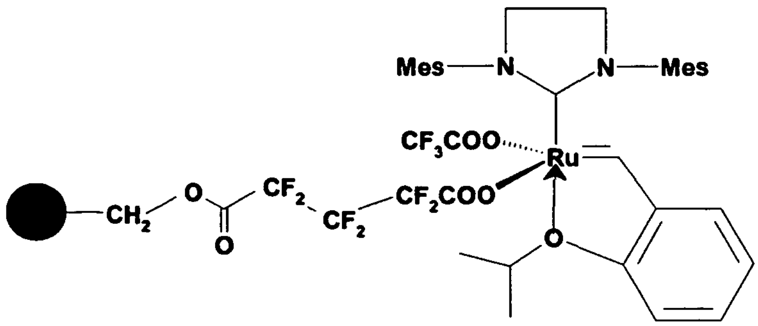

**(B4)**

(viii) ein **Katalysator der allgemeinen Formel (C)**, worin

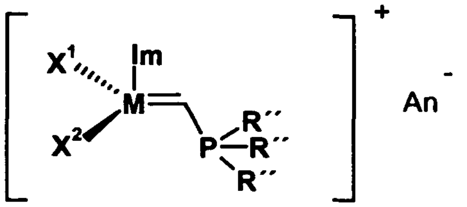

**(C)**

M Ruthenium oder Osmium bedeutet,
$X^1$ und $X^2$ gleich oder verschieden sind und anionische Liganden darstellen,
R" gleich oder verschieden sind und organische Reste darstellen,
Im einen gegebenenfalls substituierten Imidazolidinrest darstellt und
An ein Anion darstellt,

(ix) ein **Katalysator der allgemeinen Formel (D)**, worin

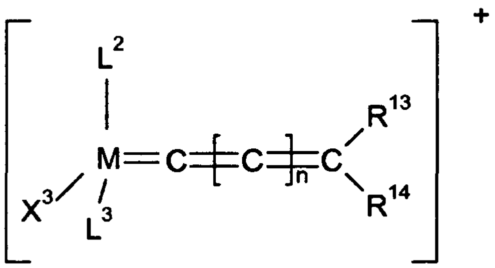

**(D)**

M Ruthenium oder Osmium bedeutet,
$R^{13}$, $R^{14}$ unabhängig voneinander Wasserstoff, $C_1$- $C_{20}$- Alkyl, $C_2$- $C_{20}$- Alkenyl, $C_2$- $C_{20}$ Alkinyl, $C_6$- $C_{24}$- Aryl, $C_1$- $C_{20}$- Carboxylat, $C_1$- $C_{20}$- Alkoxy, $C_2$- $C_{20}$-Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylthio, $C_1$- $C_{20}$- Alkylsulfonyl oder $C_1$- $C_{20}$ Alkylsulfinyl bedeuten,
$X^3$ ein anionischer Ligand ist,
$L^2$ ein neutraler $\pi$-gebundener Ligand ist, unabhängig davon, ob mono- oder polycyclisch,
$L^3$ einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
$Y^-$ ein nicht-koordinierendes Anion ist und
n 0, 1, 2, 3, 4 oder 5 ist,

(x) ein **Katalysator der allgemeinen Formel (E)**, worin

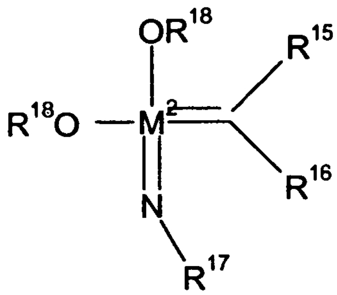

(E)

$M^2$ Molybdän bedeutet,

$R^{15}$ und $R^{16}$ gleich oder verschieden sind und Wasserstoff, $C_1$- $C_{20}$- Alkyl, $C_2$- $C_{20}$- Alkenyl, $C_2$- $C_{20}$- Alkinyl, $C_6$- $C_{24}$- Aryl, $C_1$- $C_{20}$- Carboxylat, $C_1$- $C_{20}$- Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$- Alkylthio, $C_1$- $C_{20}$- Alkylsulfonyl oder $C_1$- $C_{20}$ Alkylsulfinyl bedeuten,

$R^{17}$ and $R^{18}$ gleich oder verschieden sind und einen substituierten oder einen halogen- substituierten $C_1$- $C_{20}$- Alkyl, $C_6$- $C_{24}$- Aryl, $C_6$- $C_{30}$- Aralkyl- Rest oder Silikon- enthaltende Analoga davon darstellen,

(xi) ein **Katalysator der allgemeinen Formel (F)**, worin

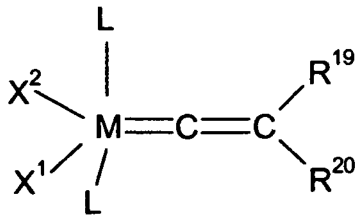

(F)

M Ruthenium oder Osmium bedeutet,

$X^1$ und $X^2$ gleich oder verschieden sind und anionische Liganden darstellen, die alle in den allgemeinen Formeln (A) und (B) genannte Bedeutungen von $X^1$ und $X^2$ annehmen können,

L gleiche oder verschiedene Liganden darstellt, die alle in den allgemeinen Formeln (A) und (B) genannten Bedeutungen von L annehmen können,

$R^{19}$ and $R^{20}$ gleich oder verschieden sind und Wasserstoff oder substituiertes oder unsubstituiertes Alkyl bedeuten,

(xii) ein **Katalysator der allgemeinen Formel (G)**, **(H) oder (K)**, worin

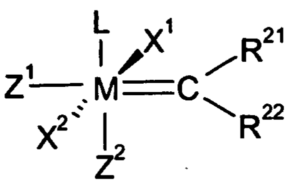

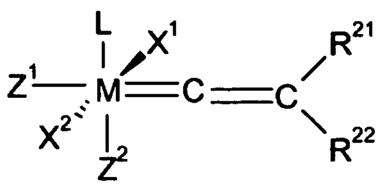

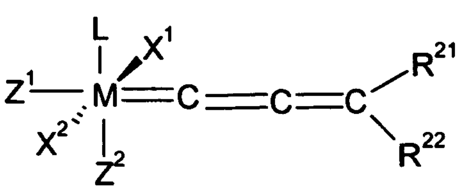

(G) (H) (K)

M Osmium oder Ruthenium bedeutet,

$X^1$ und $X^2$ gleich oder verschieden sind und zwei Liganden, bevorzugt anionische Liganden, darstellen,

L einen Liganden, bevorzugt einen neutralen Elektronen-Donor darstellt,

$Z^1$ und $Z^2$ gleich oder verschieden sind und neutrale Elektronen-Donoren darstellen,

$R^{21}$ und $R^{22}$ unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

(xiii) ein **Katalysator (N)** , der das allgemeine Strukturelement (N1) aufweist, wobei das mit einem "*" gekennzeichnete Kohlenstoff- Atom über eine oder mehrere Doppelbindungen an das Katalysator- Grundgerüst gebunden ist, und worin

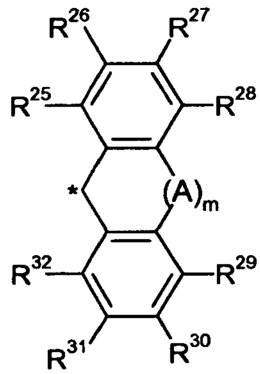

**(N1)**

$R^{25}$- $R^{32}$ gleich oder verschieden sind und für Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat (- $SO_3^-$), - $OSO_3^-$, -$PO_3^-$ oder $OPO_3^-$ bedeuten oder für Alkyl-, Cycloalkyl, -, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl- Reste substituiert sein können, oder alternativ jeweils zwei direkt benachbarte Reste aus der Gruppe von $R^{25}$- $R^{32}$ unter Einschluss der Ringkohlenstoff- Atome, an die sie gebunden sind, durch Verbrückung eine cyclische Gruppe, bevorzugt ein aromatisches System, ausbilden, oder alternativ $R^8$ gegebenenfalls mit einem anderen Liganden des Ruthenium- oder Osmium- Carben- Komplexkatalysators verbrückt ist,
m 0 oder 1 ist und
A Sauerstoff, Schwefel, C ($R^{33}R^{34}$), N- $R^{35}$, -C ($R^{36}$) =C ($R^{37}$) -, - C ($R^{36}$) ($R^{38}$)- C ($R^{37}$) ($R^{39}$)- bedeutet, worin $R^{33}$- $R^{39}$ gleich oder verschieden sind und jeweils die gleichen Bedeutungen besitzen können wie die Reste $R^{25}$- $R^{32}$.

**3.** Verfahren nach Anspruch 2, **dadurch gekennzeichnet, dass** als Metathese-Katalysator

• ein **Katalysator der Formel (IV) oder (V)**, wobei Cy für Cyclohexyl steht, eingesetzt wird,

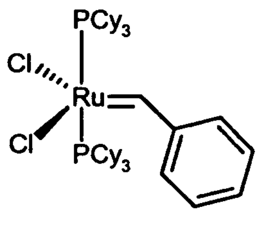

**(IV)**

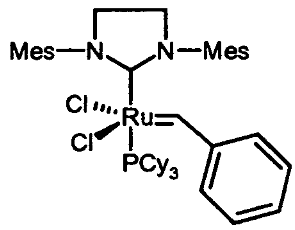

**(V)**

• ein **Katalysator der Formel (VI)** , wobei Mes jeweils für 2, 4, 6- Trimethylphenyl und Ph für Phenyl steht,

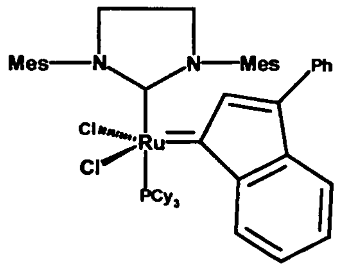

(VI)

• ein **Katalysator der allgemeinen Formel (B1)**, wobei

M Ruthenium darstellt,
$X^1$ und $X^2$ gleichzeitig Halogen, insbesondere gleichzeitig Chlor bedeuten,
$R^1$ für einen geradkettigen oder verzweigten $C_1$-$C_{12}$ Alkylrest, bevorzugt für einen Isopropylrest steht,
$R^2$, $R^3$, $R^4$, $R^5$ die für die allgemeine Formel (B) genannten allgemeinen und bevorzugten Bedeutungen besitzen und bevorzugt alle H bedeuten und
L die für die allgemeine Formel (B) genannten allgemeinen und bevorzugten Bedeutungen besitzt und bevorzugt einen gegebenenfalls substituierten Imidazolidin-Rest der Formeln (IIa) oder (IIb) darstellt,

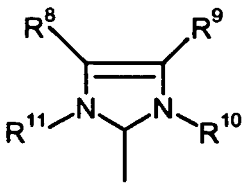

(IIa)

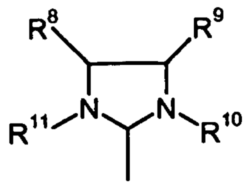

(IIb)

worin

$R^8$, $R^9$, $R^{10}$, $R^{11}$ gleich oder verschieden sind und Wasserstoff, geradkettiges oder verzweigtes $C_1$- $C_{30}$-Alkyl, $C_3$- $C_{20}$- Cylcoalkyl, $C_2$- $C_{20}$- Akenyl, $C_2$- $C_{20}$- Alkbyl, $C_6$- $C_{24}$- Aryl, $C_1$- $C_{20}$- Carboxylat, $C_1$- $C_{20}$-Alkoxy, $C_2$- $C_{20}$- Alkenyloxy, $C_2$- $C_{20}$- Alkinyloxy, $C_6$- $C_{24}$- Aryloxy, $C_2$- $C_{20}$- Alkoxycarbonyl, $C_1$- $C_{20}$-Alkylthio, $C_6$- $C_{24}$- Arylthio, $C_1$- $C_{20}$- Alkylsulfonyl, $C_1$- $C_{20}$- Alkylsulfonat, $C_6$- $C_{24}$- Arylsulfonat oder $C_1$-$C_{20}$- Alkylsulfinyl bedeuten, wobei die vorgenannten Reste jeweils durch einen oder mehrere Substituenten, vorzugsweise geradkettiges oder verzweigtes $C_1$- $C_{10}$- Alkyl, $C_3$- $C_8$- Cycloalkyl, $C_1$- $C_{10}$- Alkoxy oder $C_6$-$C_{24}$- Aryl substituiert sein können, wobei auch diese vorgenannten Substituenten wiederum durch ein oder mehrere Reste, vorzugsweise ausgewählt aus der Gruppe Halogen, insbesondere Chlor oder Brom, $C_1$-$C_5$- Alkyl, $C_1$- $C_5$- Alkoxy und Phenyl substituiert sein können, oder

• ein **Katalysator der Formel (VII)** , wobei Mes jeweils für 2, 4, 6- Trimethylphenyl steht,

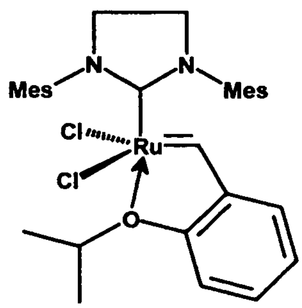

(VII)

• ein **Katalysator der Formeln (VIII), (IX), (X), (XI), (XII), (XIII), (XIV) oder XV)** , wobei Mes jeweils 2, 4, 6- Trimethylphenyl bedeutet,

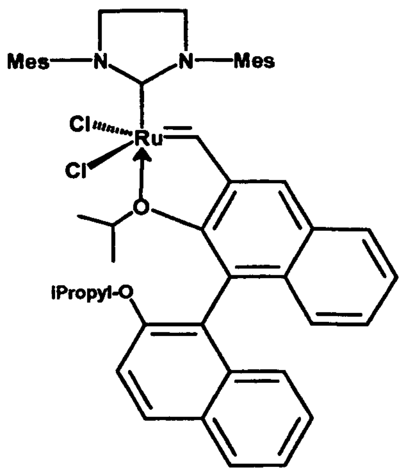

(VIII)

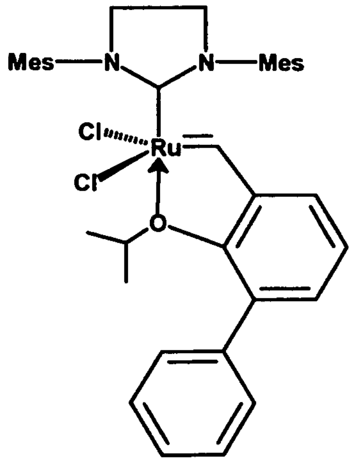

(IX)

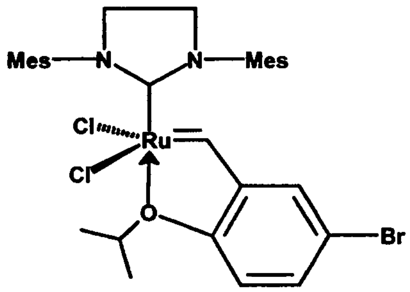

(X)

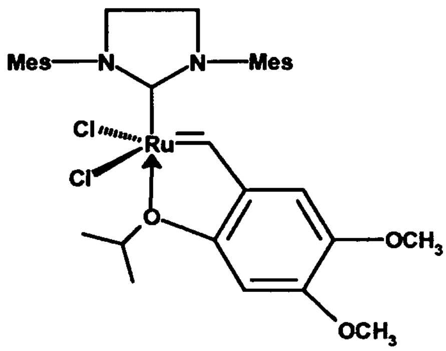

(XI)

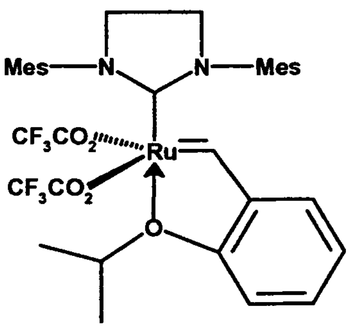

(XII)

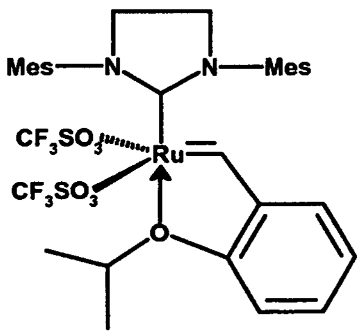

(XIII)

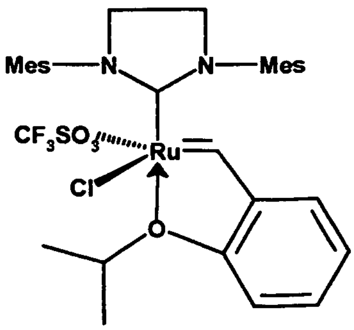

(XIV)

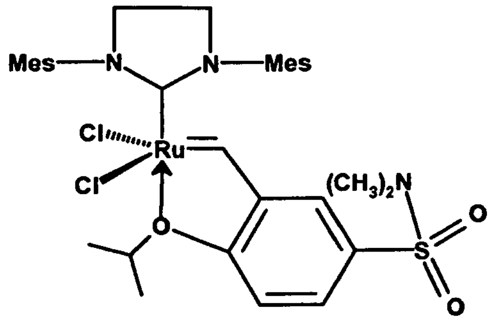

(XV)

• ein **Katalysator der allgemeinen Formel (B2)**, wobei

M Ruthenium darstellt,
$X^1$ und $X^2$ gleichzeitig Halogen, insbesondere gleichzeitig Chlor bedeuten,
$R^1$ für einen geradkettigen oder verzweigten $C_1$-$C_{12}$ Alkylrest, bevorzugt Isopropyl steht,
$R^{12}$ die für die allgemeine Formel (B2) genannten Bedeutungen besitzt,
n gleich 0, 1, 2 oder 3 ist, bevorzugt 0,
$R^6$ Wasserstoff bedeutet und
L die für die allgemeine Formel (B) genannten Bedeutungen besitzt, und bevorzugt für einen gegebenenfalls substituierten Imidazolidin-Rest der Formeln (IIa) oder (IIb) darstellt,

• ein **Katalysator der Formel (XVI) oder (XVII)** , wobei Mes jeweils für 2, 4, 6- Trimethylphenyl steht,

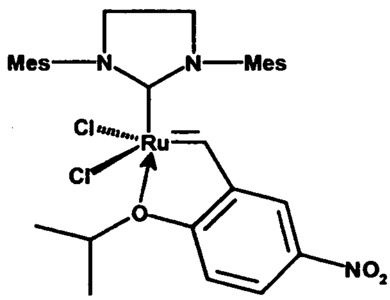

(XVI)

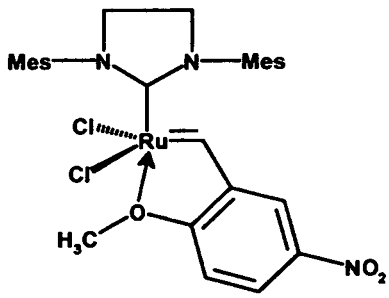

(XVII)

• ein **Katalysator der allgemeinen Formeln (G), (H) und (K)**, worin

M Ruthenium ist,
$X^1$ und $X^2$ beide Halogen, insbesondere Chlor darstellen,
$R^1$ und $R^2$ gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt $C_1$- $C_{10}$- Alkyl, Cycloalkyl, bevorzugt $C_3$- $C_8$- Cycloalkyl, Alkoxy, bevorzugt $C_1$- $C_{10}$- Alkoxy, Halogen, bevorzugt Chlor oder Brom, Aryl, bevorzugt $C_6$- $C_{24}$- Aryl, oder Heteroaryl, bevorzugt $C_5$- $C_{23}$ Heteroaryl- Reste substituiert sein können,
$R^{21}$ und $R^{22}$ gleich oder verschieden sind und $C_1$- $C_{30}$- Alkyl $C_3$- $C_{20}$- Cycloallcyl, $C_2$- $C_{20}$- Alkenyl, $C_2$- $C_{20}$- Alkynyl, $C_6$- $C_{24}$- Aryl, $C_1$- $C_{20}$- Carboxylate, $C_1$- $C_{20}$- Alkoxy, $C_2$- $C_{20}$- Alkenyloxy, $C_2$- $C_{20}$- Alkynyloxy, $C_6$- $C_{24}$- Aryloxy, $C_2$- $C_{20}$- Alkoxycarbonyl, $C_1$- $C_{30}$- Alkylamino, $C_1$- $C_{30}$- Alkylthio, $C_6$- $C_{24}$- Arylthio, $C_1$- $C_{20}$- Alkylsulphonyl, $C_1$- $C_{20}$- Alkylsulphinyl darstellen, und
L eine Struktur der bereits zuvor beschriebenen allgemeinen Formeln (IIa) oder (IIb), inbesondere der Formeln (IIIa) bis (IIIf) besitzt,

• ein **Katalysator der Struktur (XIX)** ,

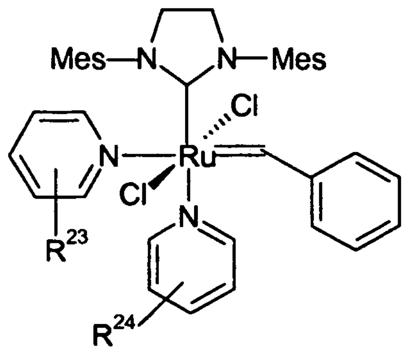

(XIX)

worin

$R^{23}$ und $R^{24}$ gleich oder verschieden sind und Halogen, geradkettiges oder verzweigtes $C_1$- $C_{20}$- Alkyl, $C_1$- $C_{20}$- Heteroalkyl, $C_1$- $C_{10}$- Haloalkyl $C_1$- $C_{10}$- Alkoxy, $C_6$- $C_{24}$- Aryl, bevorzugt Phenyl, Formyl, Nitro, Stickstoff- Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

• ein **Katalysator der Formeln (XIX a) oder (XIX b)**, wobei $R^{23}$ und $R^{24}$ die gleichen Bedeutungen besitzen wie in der Formel (XIX) angegeben und bevorzugt beide für H stehen,

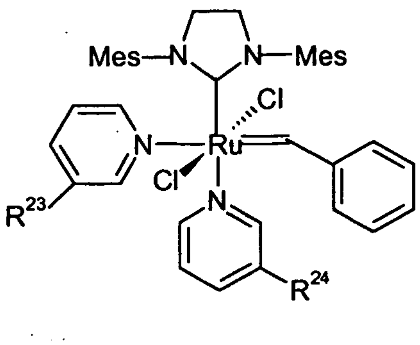

(XIXa)

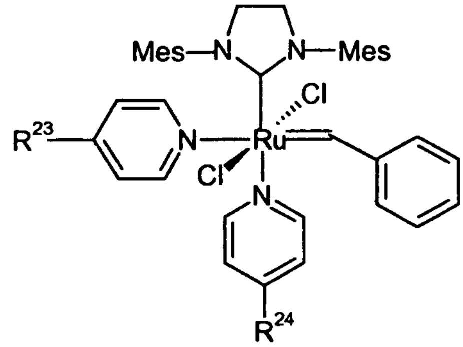

(XIXb)

• ein Katalysator der Formeln (XX)- (XXXI), wobei Mes für 2, 4, 6- Trimethylphenyl steht,

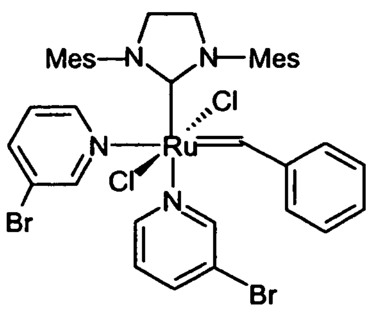

(XX)

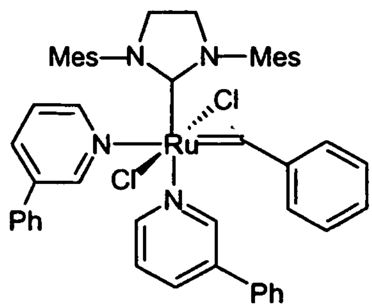

(XXI)

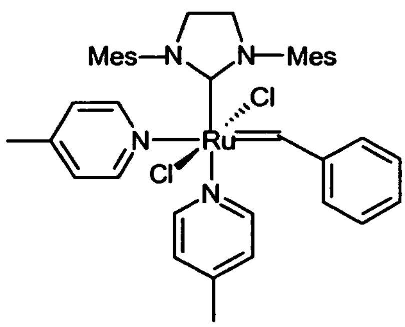

(XXII)

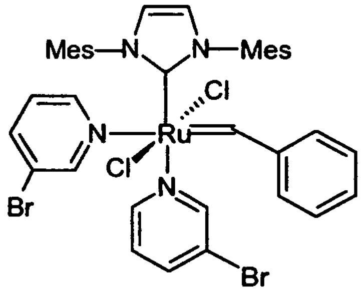

(XXIII)

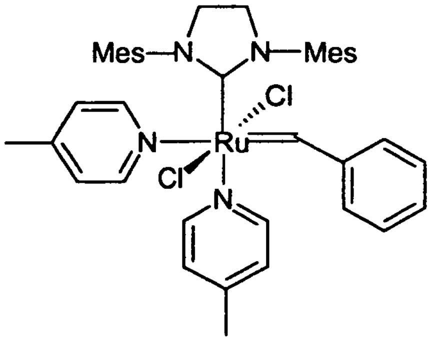

(XXIV)

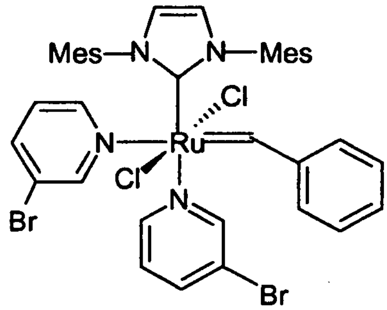

(XXV)

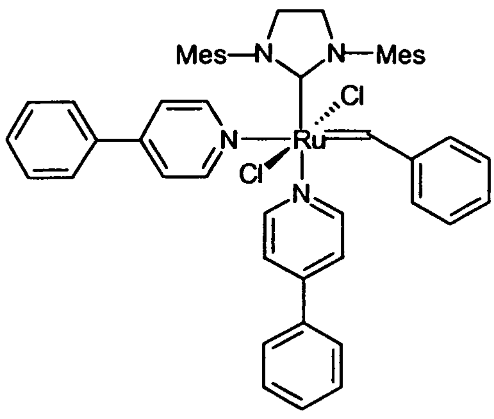

(XXVI)

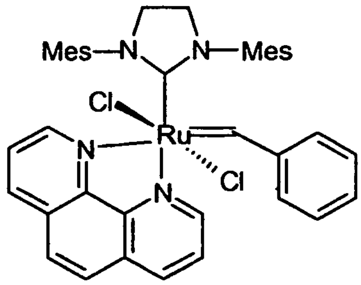

(XXVII)

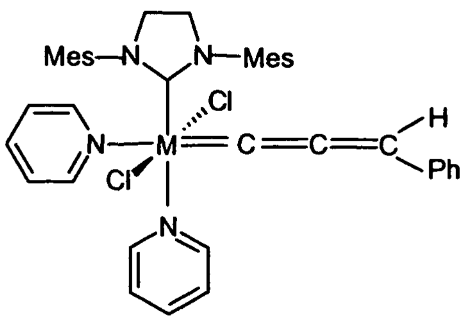

(XXVIII)

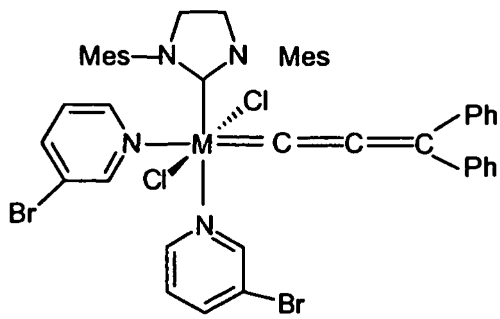

(XXIX)

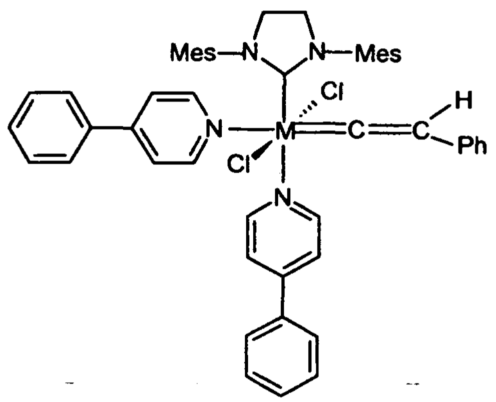

(XXX)

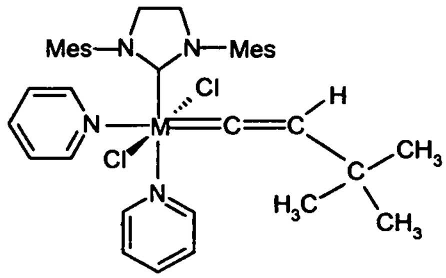

(XXXI)

• ein **Katalysator der Formeln (N2a) und (N2b)**,

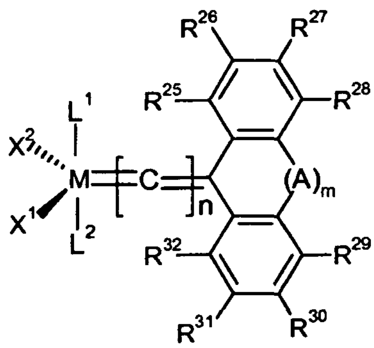

(N2a)

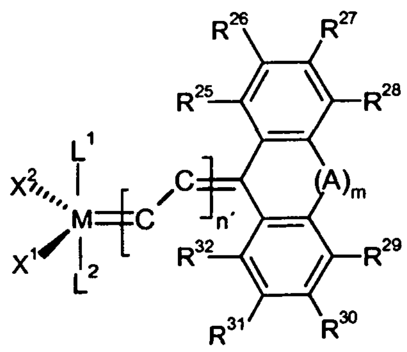

(N2b)

worin

M Ruthenium oder Osmium ist,
$X^1$ und $X^2$ gleich oder verschieden sind und zwei Liganden, bevorzugt anionische Liganden, darstellen,
$L^1$ und $L^2$ gleiche oder verschiedene Liganden, bevorzugt neutrale Elektronen-Donoren darstellen, wobei $L^2$ alternativ auch mit dem Rest $R^8$ verbrückt sein kann,
n 0, 1, 2 oder 3, bevorzugt 0, 1 oder 2, ist,
n' 1 oder 2, bevorzugt 1 ist, und
$R^{25}$-$R^{32}$, m und A die gleichen Bedeutungen besitzen wie in der allgemeinen Formel (N1),

• ein **Katalysator der Formeln (N13a) oder (N13b)**

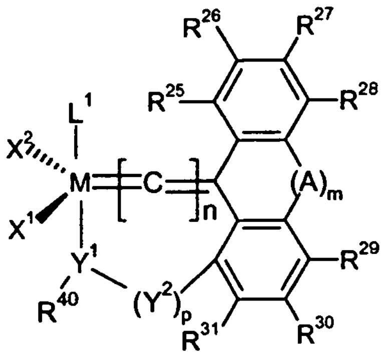

(N13a)

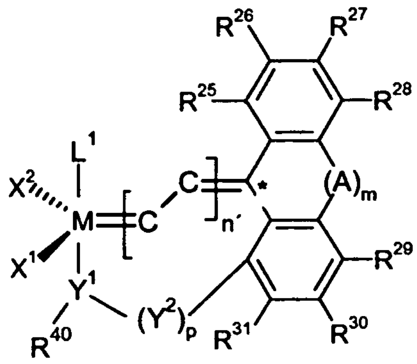

(N13b)

worin

$Y^1$ Sauerstoff, Schwefel, einen Rest N- $R^{41}$ oder einen Rest P- $R^{41}$ bedeutet, wobei $R^{41}$ die nachfolgend genannten Bedeutungen besitzt,
$R^{40}$ und $R^{41}$ gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkyl-sulfinyl-Rest darstellen, die alle jeweils optional durch ein oder mehrere Alkyl-, Halogen-, Alkoxy-, Aryl- oder Heteroaryl-Reste substituiert sein können,
p 0 oder 1 ist und
$Y^2$ wenn p = 1 ist, für- $(CH_2)_r$- mit r = 1, 2 oder 3, -C (=O)- $CH_2$-, - C (=O) -, - N=CH-, - N (H)- C (=O)- oder aber alternativ die gesamte Struktureinheit "- $Y^1$ ($R^{40}$)- ($Y^2$) p- " für (- N ($R^{40}$) =CH- $CH_2$- ), (- N ($R^{40}$, $R^{41}$) =CH- $CH_2$- ), steht und
wobei M, $X^1$, $X^2$, $L^1$, $R^{25}$- $R^{32}$, A, m und n die gleichen Bedeutungen besitzen wie in den allgemeinen Formeln (IIa) und (IIb), oder

• ein **Katalysator der folgenden Strukturen**

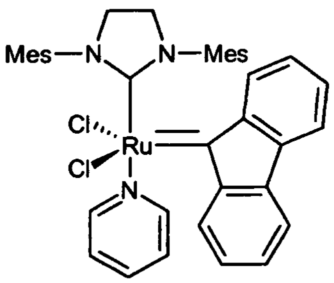

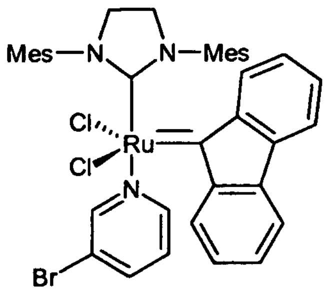

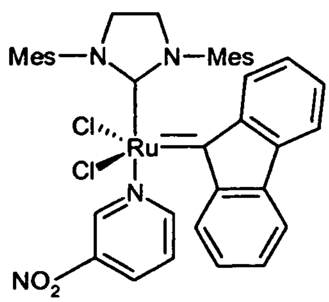

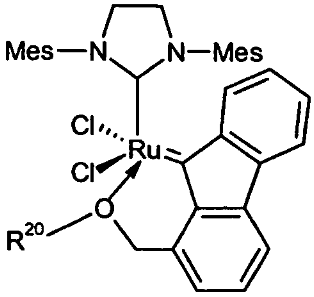

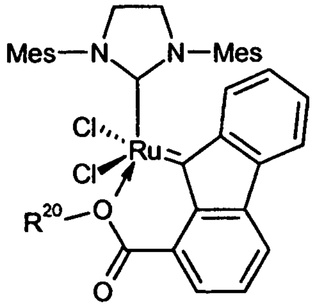

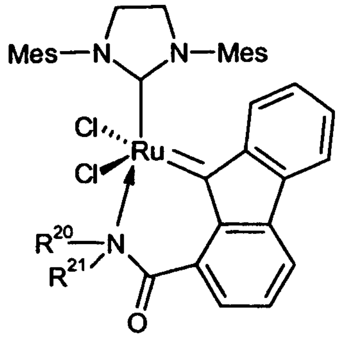

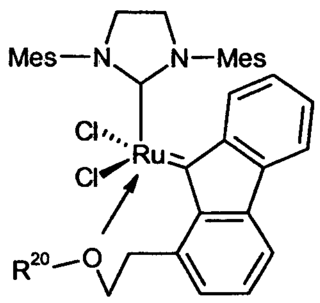
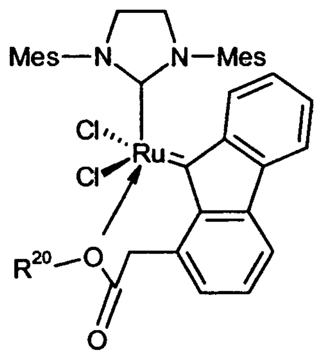
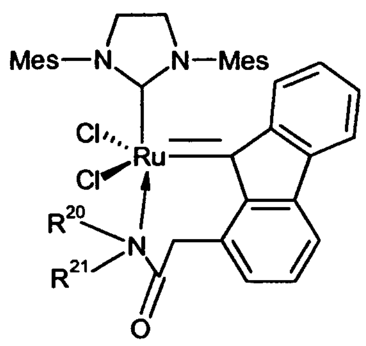

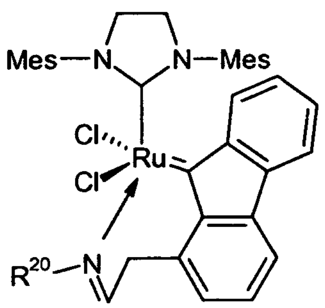
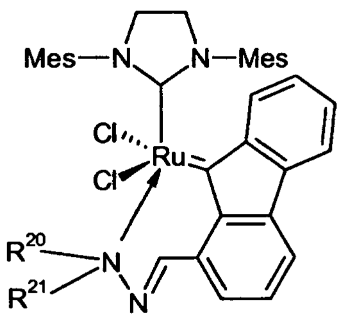
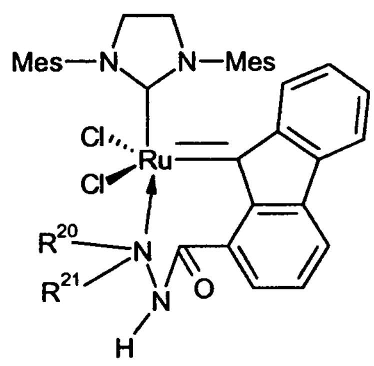

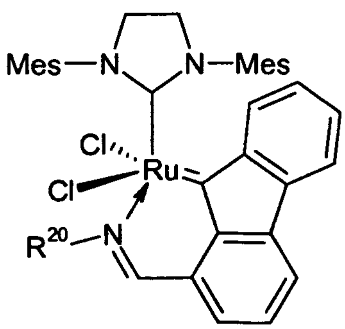

4. Verfahren nach Anspruch 2 oder 3, **dadurch gekennzeichnet, dass** im funktionalisierten Olefin der allgemeinen Formel (I) oder (II)

X **$OR^1$**, worin $R^1$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl,
**O- ($CH_2$- $CH_2$- O)$_n$- $R^2$**, worin $R^2$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- ($CH_2$- CH ($CH_3$)- O)$_n$- $R^3$**, worin $R^3$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- C (=O)- $R^4$**, worin $R^4$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl,
**$C_6$- $C_{12}$ Aryl**, welches durch mindestens einen Rest $OR^5$ substituiert ist, worin $R^5$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl oder
**NH- C (=O)- $OR^6$**, worin $R^6$ für H, $C_1$- $C_{18}$ Alkyl, $C_7$- $C_{24}$ Aralkyl, Phenyl, Naphthyl oder Fluorenyl steht und bevorzugt für H, $C_1$- $C_6$ Alkyl, $C_7$- $C_{12}$ Aralkyl oder Phenyl, bedeutet, und
Y und Z gleich oder verschieden sind und
**$OR^7$**, worin $R^7$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl,
**O- ($CH_2$- $CH_2$- O)$_n$- $R^8$**, worin $R^8$ für H, $C_1$- $C_{12}$ Alkyl, $C_7$- $C_{18}$ Aralkyl, Phenyl, Naphthyl oder Fluorenyl steht

und bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- ($CH_2$- CH ($CH_3$)- O)$_n$- $R^9$**, worin $R^9$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl und n gleich 1 bis 20 und bevorzugt gleich 1 bis 6 ist,
**O- C (=O)- $R^{10}$**, worin $R^{10}$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl,
**$C_6$- $C_{12}$ Aryl**, welches durch mindestens einen Rest $OR^{11}$ substituiert ist, worin $R^{11}$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl oder
**NH- C (=O)- $OR^{12}$**, worin $R^{12}$ für H, $C_1$- $C_{12}$ Alkyl, $C_7$- $C_{18}$ Aralkyl, Phenyl, Naphthyl oder Fluorenyl steht und bevorzugt für H, $C_1$- $C_6$ Alkyl, $C_7$- $C_{12}$ Aralkyl oder Phenyl, bedeuten.

**5.** Verfahren nach Anspruch 2 oder 3, **dadurch gekennzeichnet, dass** als funktionalisiertes Olefin t- Butyl- n- Allylcarbamat, p- Allylanisol, o- Allylanisol, p- Allylphenol, o- Allylphenol, Benzoesäureallylester, Allylbenzylether, cis-1, 4- Bisbenzoyloxy- 2- buten, cis- 2- Buten- 1, 4- diyl- dibenzoat, cis- 2- Buten- 1, 4- diyl- diacetat oder Mischungen davon eingesetzt werden.

**6.** Verfahren nach einem oder mehreren der Ansprüche 1 bis 5, **dadurch gekennzeichnet, dass** die Verbindung der allgemeinen Formel (I) oder (II) in einer Menge von $8*10^{-6}$ mol bis $8*10^{-3}$ mol, bevorzugt $1*10^{-5}$ mol bis $5*10^{-3}$ mol und besonders bevorzugt $2*10^{-5}$ mol bis $2*10^{-3}$ mol bezogen auf 1 g Nitrilkautschuk eingesetzt wird.

**7.** Verfahren nach einem oder mehreren der Ansprüche 1 bis 6, **dadurch gekennzeichnet, dass** der Metathesekatalysator in einer Menge von $4*10^{-8}$ mol bis $4*10^{-5}$ mol, bevorzugt von $2*10^{-7}$ mol bis $2*10^{-5}$ mol und besonders bevorzugt von $5*10^{-7}$ mol bis $7,5*10^{-6}$ mol bezogen auf 1 g Nitrilkautschuk eingesetzt wird.

**8.** Verfahren nach einem oder mehreren der Ansprüche 1 bis 7, **dadurch gekennzeichnet, dass** der Metathese-Katalysator bezogen auf das funktionalisierte Olefin der allgemeinen Formel (I) oder (II) in einem molaren Verhältnis von ($5*10^{-6}$ bis 5) : 1, bevorzugt ($1*10^{-4}$ bis $5*10^{-1}$) : 1, besonders bevorzugt von ($2*10^{-3}$ bis 1, $5*10^{-2}$) : 1 eingesetzt wird.

**9.** Verfahren nach einem oder mehreren der Ansprüche 1 bis 8, **dadurch gekennzeichnet, dass** der eingesetzte Nitrilkautschuk Wiederholungseinheiten enthält, die sich von mindestens einem konjugierten Dien und mindestens einem $\alpha,\beta$-ungesättigten Nitril ableiten und die C=C Doppelbindungen aus den einpolymerisierten Dien-Monomeren entweder unhydriert oder teilweise hydriert vorliegen.

**10.** Funktionalisierte Nitrilkautschuke enthaltend Wiederholungseinheiten, die sich von mindestens einem konjugierten Dien und mindestens einem $\alpha$, $\beta$- ungesättigten Nitril ableiten, sowie entweder Endgruppen X oder Endgruppen Y und Z, wobei

X **$OR^1$**, worin $R^1$ für H, $C_1$- $C_{18}$ Alkyl, $C_7$- $C_{24}$ Aralkyl, Phenyl, Naphthyl oder Fluorenyl steht,
**O- ($CH_2$- $CH_2$- O)$_n$- $R^2$**, worin $R^2$ für H, $C_1$- $C_{18}$ Alkyl, $C_7$- $C_{24}$ Aralkyl, Phenyl, Naphthyl oder Fluorenyl steht und n = 1 bis 20 ist,
**O- ($CH_2$- CH ($CH_3$)- O)$_n$- $R^3$**, worin $R^3$ für H, $C_1$- $C_{18}$ Alkyl, $C_7$- $C_{24}$ Aralkyl, Phenyl, Naphthyl oder Fluorenyl steht und n = 1 bis 20 ist,
**O- C (=O)- $R^4$**, worin $R^4$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl**, welches durch mindestens einen Rest $OR^5$ substituiert ist, worin $R^1$ für H, $C_1$- $C_{18}$ Alkyl, $C_7$- $C_{24}$ Aralkyl, Phenyl, Naphthyl oder Fluorenyl steht, oder
**NH- C (=O)- $OR^6$,** worin $R^6$ für H, $C_1$- $C_{18}$ Alkyl, $C_7$- $C_{24}$ Aralkyl, Phenyl, Naphthyl oder Fluorenyl steht, bedeutet, und
Y und Z gleich oder verschieden sind und
**$OR^7$**, worin $R^7$ für H, $C_1$- $C_{18}$ Alkyl, $C_7$- $C_{24}$ Aralkyl, Phenyl, Naphthyl oder Fluorenyl steht,
**O- ($CH_2$- $CH_2$- O)$_n$- $R^8$**, worin $R^8$ für H, $C_1$- $C_{18}$ Alkyl, $C_7$- $C_{24}$ Aralkyl, Phenyl, Naphthyl oder Fluorenyl steht und n = 1 bis 20 ist,
**O- ($CH_2$- CH ($CH_3$)- O)$_n$- $R^9$**, worin $R^9$ für H, $C_1$- $C_{18}$ Alkyl, $C_7$- $C_{24}$ Aralkyl, Phenyl, Naphthyl oder Fluorenyl steht und n = 1 bis 20 ist,
**O- C (=O)- $R^{10}$**, worin $R^{10}$ für H, $C_1$- $C_{18}$ Alkyl, $C_7$- $C_{24}$ Aralkyl, Phenyl, Naphthyl oder Fluorenyl steht,
**$C_6$- $C_{18}$ Aryl**, welches durch mindestens einen Rest $OR^{11}$ substituiert ist , worin $R^{11}$ für H, $C_1$- $C_{18}$ Alkyl, $C_7$- $C_{24}$ Aralkyl, Phenyl, Naphthyl oder Fluorenyl steht, oder

**NH- C (=O)- OR¹²,** worin $R^{12}$ für H, $C_1$- $C_{18}$ Alkyl, $C_7$- $C_{24}$ Aralkyl, Phenyl, Naphthyl oder Fluorenyl steht, bedeuten,

wobei die C=C Doppelbindungen aus dem einpolymerisierten Dien-Monomeren optional entweder teilweise oder vollständig hydriert vorliegen.

**11.** Funktionalisierte Nitrilkautschuke nach Anspruch 10, **dadurch gekennzeichnet, dass** sie eine Mooney-Viskosität (ML 1+4 bei 100°C) im Bereich von 5 - 30, bevorzugt im Bereich von 5 - 20 und eine Polydispersität PDI = Mw/Mn, wobei Mn das Zahlenmittel des Molekulargewichts und Mw das Gewichtsmittel des Molekulargewichts darstellt, im Bereich 1,4 - 4,0 bevorzugt im Bereich von 1,5 - 3,0 besitzen.

**12.** Vulkanisierbare Mischungen enthaltend

(i) mindestens einen funktionalisierten Nitrilkautschuk nach Anspruch 10 oder 11,
(ii) mindestens einen Vernetzer oder Vemetzungssystem und optional (iii) ein oder mehrere weitere Kautschukadditive.

**13.** Verfahren zur Herstellung von Vulkanisaten, **dadurch gekennzeichnet, dass** man die vulkanisierbare Mischung nach Anspruch 12 durch Erhöhung der Temperatur vernetzt, bevorzugt in einem Formgebungsverfahren, besonders bevorzugt unter Anwendung des Spritzgusses.

**14.** Vulkanisate auf Basis eines funktionalisierten Nitrilakutschuks nach Anspruch 10 oder 11.

**15.** Blockcopolymere enthaltend ein oder mehrere Blöcke basierend auf dem funktionalisierten Nitrilkautschuk nach Anspruch 10 oder 11.

## Claims

**1.** Process for preparing functionalized nitrile rubbers by contacting a nitrile rubber with a metathesis catalyst which is a complex catalyst based on a metal from transition group 6 or 8 of the Periodic Table which has at least one ligand attached carbenically to the metal, in the presence of at least one compound of the general formula (I) or (II),

$$H_2C{=}CH\text{- }CH_2\text{- }X \qquad (I)$$

$$Y\text{- }CH_2\text{- }CH{=}CH\text{- }CH_2\text{- }Z \qquad (II)$$

where

X is **OR**$^1$, in which $R^1$ is H, $C_1$- $C_{18}$ alkyl, $C_7$- $C_{24}$ aralkyl, phenyl, naphthyl or fluorenyl,
**O- (CH₂- CH₂- O)ₙ- R²**, in which $R^2$ is H, $C_1$- $C_{18}$ alkyl, $C_7$- $C_{24}$ aralkyl, phenyl, naphthyl or fluorenyl and n is 1 to 20,
**O- (CH₂- CH (CH₃)- O)ₙ- R³**, in which $R^3$ is H, $C_1$- $C_{18}$, alkyl, $C_7$- $C_{24}$ aralkyl, phenyl, naphthyl or fluorenyl and n is 1 to 20,
**O- C (=O)- R⁴**, in which $R^4$ is H, $C_1$- $C_{18}$, alkyl, $C_7$- $C_{24}$ aralkyl, phenyl, naphthyl or fluorenyl,
**C₆- C₁₈ aryl**, which is substituted by at least one radical $OR^5$, in which $R^5$ is H, $C_1$- $C_{18}$, alkyl, $C_7$- $C_{24}$ aralkyl, phenyl, naphthyl or fluorenyl, or
**NH- C (+O)- OR⁶**, in which $R^6$ is H, $C_1$- $C_{18}$ alkyl, $C_7$- $C_{24}$ aralkyl, phenyl, naphthyl or fluorenyl, and
Y and Z are identical or different and
**OR**$^7$, in which $R^7$ is H, $C_1$- $C_{18}$ alkyl, $C_7$- $C_{24}$ aralkyl, phenyl, naphthyl or fluorenyl,
**O- (CH₂- CH₂- O)ₙ- R⁸**, in which $R^8$ is H, $C_1$- $C_{18}$ alkyl, $C_7$- $C_{24}$ aralkyl, phenyl, naphthyl or fluorenyl and n is 1 to 20,
**O- (CH₂- CH (CH₃)- O)ₙ- R⁹**, in which $R^9$ is H, $C_1$- $C_{18}$ alkyl, $C_7$- $C_{24}$ aralkyl, phenyl, naphthyl or fluorenyl and n is 1 to 20,
**O- C (=O)- R¹⁰**, in which $R^{10}$ is H, $C_1$- $C_{18}$ alkyl, $C_7$- $C_{24}$ aralkyl, phenyl, naphthyl or fluorenyl,
**C₆- C₁₈ aryl**, which is substituted by at least one radical $OR^{11}$, in which $R^{11}$ is H, $C_1$- $C_{18}$ alkyl, $C_7$- $C_{24}$ aralkyl, phenyl, naphthyl or fluorenyl, or
**NH- C (=O)- OR¹²**, in which $R^{12}$ is H, $C_1$- $C_{18}$ alkyl, $C_7$- $C_{24}$ aralkyl, phenyl, naphthyl or fluorenyl.

**2.** Process according to Claim 1, **characterized in that** use is made as metathesis catalyst of

(i) a **catalyst of the general formula (A),**

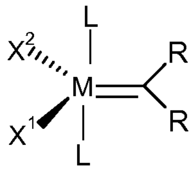

(A)

in which

M is osmium or ruthenium,
$X^1$ and $X^2$ are identical or different and represent two ligands, preferably anionic ligands,
L represents identical or different ligands, preferably neutral electron donors,
R is identical or different at each occurrence and represents hydrogen, alkyl, preferably $C_1$-$C_{30}$ alkyl, cycloalkyl, preferably $C_3$-$C_{20}$ cycloalkyl, alkenyl, preferably $C_2$-$C_{20}$ alkenyl, alkynyl, preferably $C_2$-$C_{20}$ alkynyl, aryl, preferably $C_6$-$C_{24}$ aryl, carboxylate, preferably $C_1$-$C_{20}$ carboxylate, alkoxy, preferably $C_1$-$C_{20}$ alkoxy, alkenyloxy, preferably $C_2$-$C_{20}$ alkenyloxy, alkynyloxy, preferably $C_2$-$C_{20}$ alkynyloxy, aryloxy, preferably $C_6$-$C_{24}$ aryloxy, alkoxycarbonyl, preferably $C_2$-$C_{20}$ alkoxycarbonyl, alkylamino, preferably $C_1$-$C_{30}$ alkylamino, alkylthio, preferably $C_1$-$C_{30}$ alkylthio, arylthio, preferably $C_6$-$C_{24}$ arylthio, alkylsulphonyl, preferably $C_1$-$C_{20}$ alkylsulphonyl, or alkylsulphinyl, preferably $C_1$-$C_{20}$ alkylsulphinyl, it being possible for all of these radicals to be substituted in each case optionally by one or more alkyl, halogen, alkoxy, aryl or heteroaryl radicals, or alternatively both radicals R are bridged, with incorporation of the common C atom to which they are attached, to form a cyclic group, which may be aliphatic or aromatic in nature, is optionally substituted and may contain one or more heteroatoms,

(ii) a **catalyst of the general formula (A1),**

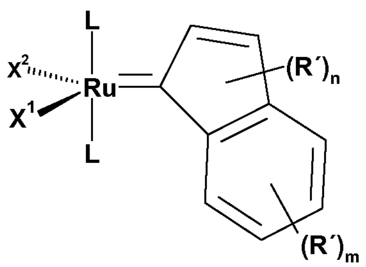

**(A1)**

in which

$X^1$, $X^2$ and L can have the same general or preferred definitions as in the general formula (A),
n is 0, 1 or 2,
m is 0, 1, 2, 3 or 4 and
R' is identical or different at each occurrence and denotes alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radicals, all of which may be substituted in each case by one or more alkyl, halogen, alkoxy, aryl or heteroaryl radicals,

(iii) a **catalyst of the general formula (B),**

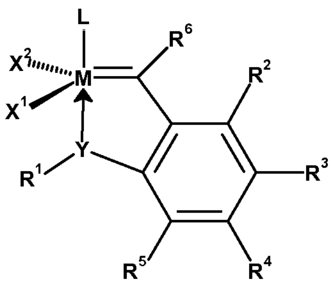

(B)

in which

M is ruthenium or osmium,
$X^1$ and $X^2$ are identical or different ligands, preferably anionic ligands,
Y is oxygen (O), sulphur (S), a radical N-$R^1$ or a radical P-$R^1$, where $R^1$ possesses the definitions stated below,
$R^1$ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all be substituted in each case optionally by one or more alkyl, halogen, alkoxy, aryl or heteroaryl radicals,
$R^2$, $R^3$, $R^4$ and $R^5$ are identical or different and represent hydrogen or organic or inorganic radicals,
$R^6$ is H or an alkyl, alkenyl, alkynyl or aryl radical, and
L is a ligand which possesses the same definitions as stated for the formula (A),

(iv) a **catalyst of the general formula (B1),**

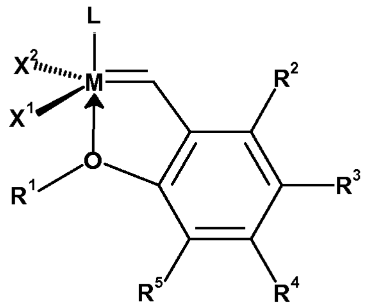

(B 1)

in which

M, L, $X^1$, $X^2$, $R^1$, $R^2$, $R^3$, $R^4$ and $R^5$ can possess the definitions stated for the general formula (B),

(v) a **catalyst of the general formula (B2)**,

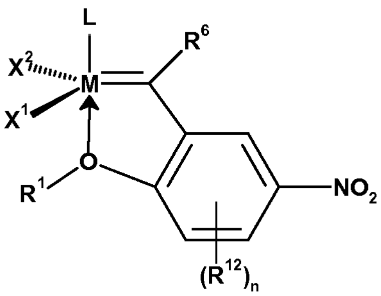

(B2)

in which

M, L, $X^1$, $X^2$, $R^1$ and $R^6$ have the general and preferred definitions for the formula (B),

$R^{12}$ is identical or different at each occurrence and possesses the definitions stated for the radicals $R^2$, $R^3$, $R^4$ and $R^5$ in the formula (B), with the exception of hydrogen, and
n is 0, 1, 2 or 3,

(vi) a **catalyst of the general formula (B3)**,

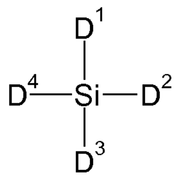

(B3)

in which $D^1$, $D^2$, $D^3$ and $D^4$ each have a structure of the general formula (XVIII) shown below, which is attached via the methylene group shown on the right to the silicon of the formula (B3),

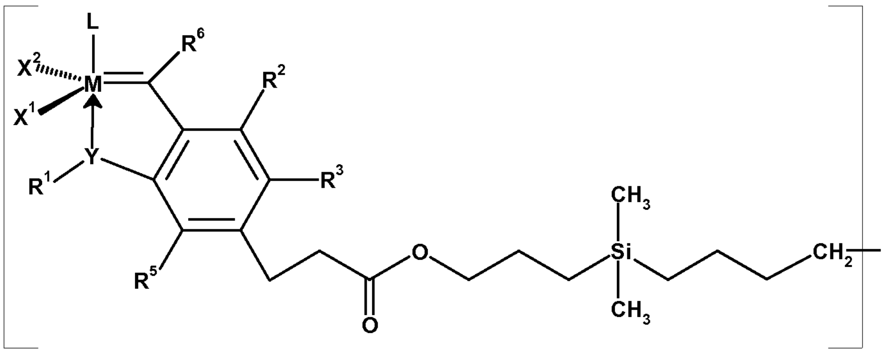

**(XVIII)**

in which
M, L, $X^1$, $X^2$, $R^1$, $R^2$, $R^3$, $R^5$ and $R^6$ may possess the definitions stated for the general formula (B),
(vii)a **catalyst of the general formula (B4)**, in which the symbol ● stands for a support,

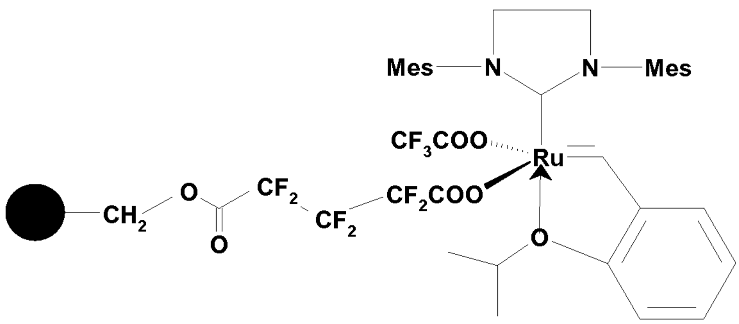

**(B4)**

(viii) a **catalyst of the general formula (C)**,

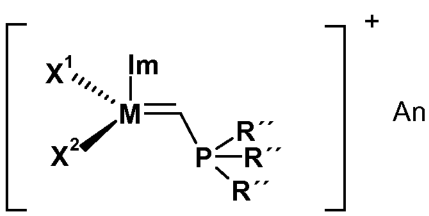

(C)

in which

M is ruthenium or osmium,

$X^1$ and $X^2$ are identical or different and represent anionic ligands,
R" is identical or different at each occurrence and represents organic radicals,
Im represents an optionally substituted imidazolidine radical and
An represents an anion,

(ix) a **catalyst of the general formula (D)**,

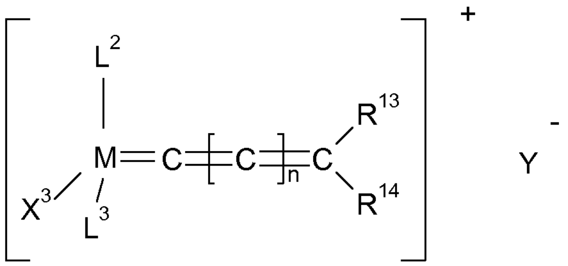

(D)

in which

M is ruthenium or osmium,
$R^{13}$ and $R^{14}$ independently of one another are hydrogen, $C_1$-$C_{20}$ alkyl, $C_1$-$C_{20}$ alkenyl, $C_2$-$C_{20}$ alkynyl, $C_6$-$C_{24}$ aryl, $C_1$-$C_{20}$ carboxylate, $C_1$-$C_{20}$ alkoxy, $C_2$-$C_{20}$ alkenyloxy, $C_2$-$C_{20}$ alkynyloxy, $C_6$-$C_{24}$ aryloxy, $C_2$-$C_{20}$ alkoxycarbonyl, $C_1$-$C_{20}$ alkylthio, $C_1$-$C_{20}$ alkylsulphonyl or $C_1$-$C_{20}$ alkylsulphinyl,
$X^3$ is an anionic ligand,
$L^2$ is a neutral n-bonded ligand, irrespective of whether it is monocyclic or polycyclic,
$L^3$ is a ligand from the group of the phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphinamines, arsines, stibines, ethers, amines, amides, imines, sulphoxides, thioethers and pyridines,
$Y^-$ is a non-coordinating anion and
n is 0, 1, 2, 3, 4 or 5,

(x) a **catalyst of the general formula (E)**,

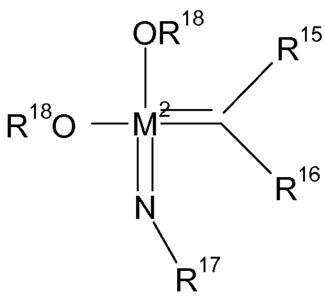

(E)

in which

$M^2$ is molybdenum,
$R^{15}$ and $R^{16}$ are identical or different and are hydrogen, $C_1$-$C_{20}$ alkyl, $C_2$-$C_{20}$ alkenyl, $C_2$-$C_{20}$ alkynyl, $C_6$-$C_{24}$ aryl, $C_1$-$C_{20}$ carboxylate, $C_1$-$C_{20}$ alkoxy, $C_2$-$C_{20}$ alkenyloxy, $C_2$-$C_{20}$ alkynyloxy, $C_6$-$C_{24}$ aryloxy, $C_2$-$C_{20}$ alkoxycarbonyl, $C_1$-$C_{20}$ alkylthio, $C_1$-$C_{20}$ alkylsulphonyl or $C_1$-$C_{20}$ alkylsulphinyl,
$R^{17}$ and $R^{18}$ are identical or different and represent a substituted or a halogen-substituted $C_1$-$C_{20}$ alkyl, $C_6$-$C_{24}$ aryl or $C_6$-$C_{30}$ aralkyl radical or silicone-containing analogues thereof,

(xi) a **catalyst of the general formula (F),**

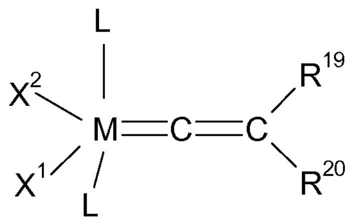

(F)

in which

M is ruthenium or osmium,
$X^1$ and $X^2$ are identical or different and represent anionic ligands, which may adopt all of the definitions of $X^1$ and $X^2$ stated in the general formulae (A) and (B),
L represents identical or different ligands, which may adopt all of the definitions of L stated in the general formulae (A) and (B),
$R^{19}$ and $R^{20}$ are identical or different and are hydrogen or substituted or unsubstituted alkyl,

(xii) a **catalyst of the general formulae (G), (H) or (K)**,

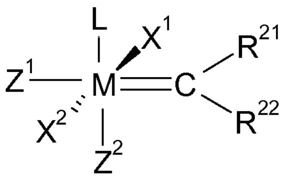

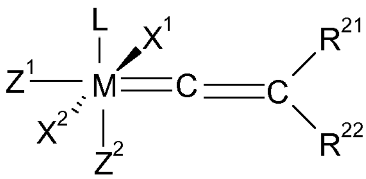

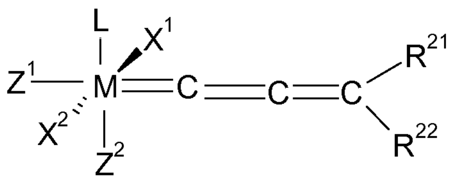

(G) (H) (K)

in which

M is osmium or ruthenium,
$X^1$ and $X^2$ are identical or different and represent two ligands, preferably anionic ligands,
L represents a ligand, preferably a neutral electron donor,
$Z^1$ and $Z^2$ are identical or different and represent neutral electron donors,
$R^{21}$ and $R^{22}$ independently of one another are hydrogen, alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl, which in each case are substituted by one or more radicals selected from alkyl, halogen, alkoxy, aryl or heteroaryl,

(xiii) a **catalyst (N)** containing the general structural element (N1), where the carbon atom labelled with a "*" is attached via one or more double bonds to the parent catalyst structure, and in which

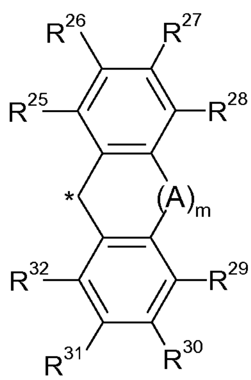

(N1)

$R^{25}$- $R^{32}$ are identical or different and are hydrogen, halogen, hydroxyl, aldehyde, keto, thiol, $CF_3$, nitro, nitroso, cyano, thiocyano, isocyanato, carbodiimide, carbamate, thiocarbamate, dithiocarbamate, amino, amido, imino, silyl, sulphonate (- $SO_3^-$), - $OSO_3^-$, -$PO_3^-$ or $OPO_3^-$ or are alkyl, cycloalkyl, alkenyl, alkynyl, aryl, carboxylate, alkoxy, alkenyloxy, alkynyloxy, aryloxy, alkoxycarbonyl, alkylamino, alkylthio, arylthio, alkylsulphonyl, alkylsulphinyl dialkylamino, alkylsilyl or alkoxysilyl, it being possible for all of these radicals to be substituted in each case optionally by one or more alkyl, halogen, alkoxy, aryl or heteroaryl radicals, or alternatively in each case two directly adjacent radicals from the group of $R^{25}$- $R^{32}$ form by bridging, with inclusion of the ring carbon atoms to which they are attached, a cyclic group, preferably an aromatic system, or alternatively $R^8$ is optionally bridged with another ligand of the ruthenium- or osmium- carbene complex catalyst,

m is 0 or 1 and

A is oxygen, sulphur, C ($R^{33}R^{34}$), N- $R^{35}$, -C ($R^{36}$) =C ($R^{37}$) -, - C ($R^{36}$) ($R^{38}$)- C ($R^{37}$) ($R^{39}$) -, in which $R^{33}$-$R^{39}$ are identical or different and may each possess the same definitions as the radicals $R^{25}$- $R^{32}$.

**3.** Process according to Claim 2, **characterized in that** use is made as metathesis catalyst of

- a **catalyst of the formula (IV) or (V)**, where Cy is cyclohexyl,

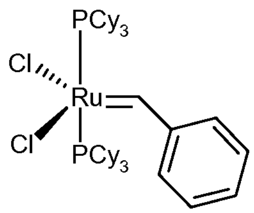

(IV)

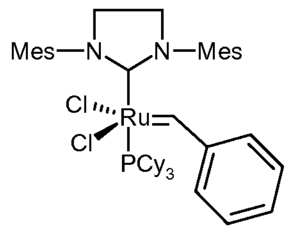

(V)

- a **catalyst of the formula (VI)** , where Mes in each case is 2, 4, 6- trimethylphenyl and Ph is phenyl,

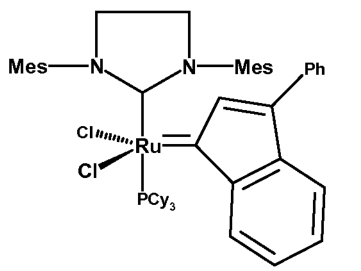

**(VI)**

- a **catalyst of the general formula (B1)**, where

M represents ruthenium,

$X^1$ and $X^2$ simultaneously are halogen, more particularly simultaneously are chlorine,

$R^1$ is a straight-chain or branched $C_1$-$C_{12}$ alkyl radical, preferably an isopropyl radical,

$R^2$, $R^3$, $R^4$ and $R^5$ possess the general and preferred definitions stated for the general formula (B), and preferably are all H, and

L possesses the general and preferred definitions stated for the general formula (B), and preferably represents an optionally substituted imidazolidine radical of the formula (IIa) or (IIb),

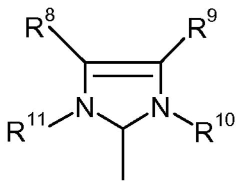

(IIa)

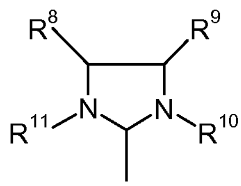

(IIb)

in which
$R^8$, $R^9$, $R^{10}$ and $R^{11}$ are identical or different and are hydrogen, straight- chain or branched $C_1$- $C_{30}$ alkyl, $C_3$- $C_{20}$ cycloalkyl, $C_2$- $C_{20}$ alkenyl, $C_2$- $C_{20}$ alkynyl, $C_6$- $C_{24}$ aryl, $C_1$- $C_{20}$ carboxylate, $C_1$- $C_{20}$ alkoxy, $C_2$- $C_{20}$ alkenyloxy, $C_2$- $C_{20}$ alkynyloxy, $C_6$- $C_{24}$ aryloxy, $C_2$- $C_{20}$ alkoxycarbonyl, $C_1$- $C_{20}$ alkylthio, $C_6$- $C_{24}$ arylthio, $C_1$- $C_{20}$- alkylsulphonyl, $C_1$- $C_{20}$ alkylsulphonate, $C_6$- $C_{24}$ arylsulphonate or $C_1$- $C_{20}$ alkylsulphinyl, it being possible for the aforementioned radicals to be substituted in each case by one or more substituents, preferably straight- chain or branched $C_1$- $C_{10}$ alkyl, $C_3$- $C_8$ cycloalkyl, $C_1$- $C_{10}$ alkoxy or $C_6$- $C_{24}$ aryl, and these aforementioned substituents as well may be substituted in turn by one or more radicals preferably selected from the group of halogen, more particularly chlorine or bromine, $C_1$- $C_5$ alkyl, $C_1$- $C_5$ alkoxy and phenyl, or

• a **catalyst of the formula (VII)** , where Mes in each case is 2, 4, 6- trimethylphenyl,

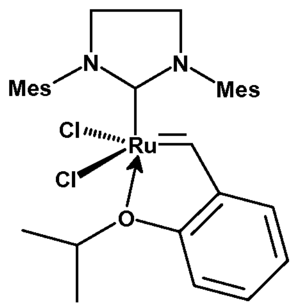

(VII)

• a **catalyst of the formulae (VIII)** , **(IX)** , **(X)** , **(XI)** , **(XII)** , **(XIII)** , **(XIV)** or **(XV)** , where Mes in each case is 2, 4, 6- trimethylphenyl,

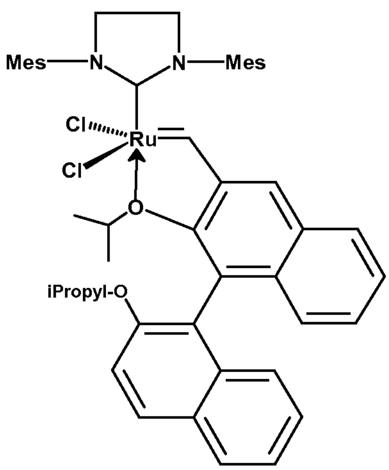

**(VIII)**

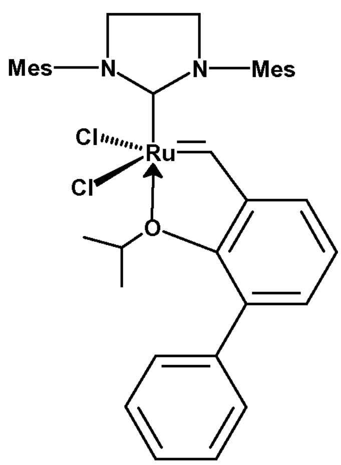

**(IX)**

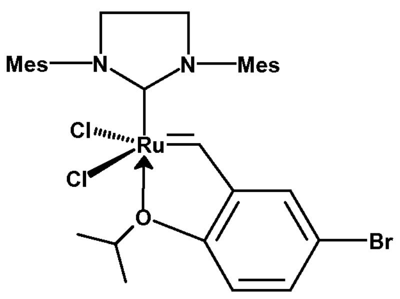

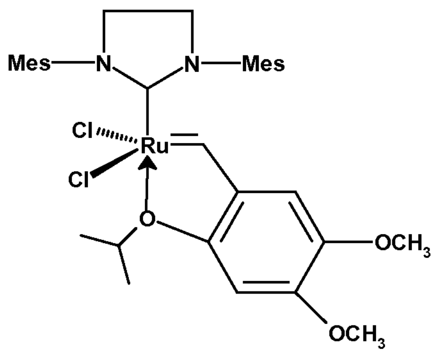

(X) (XI)

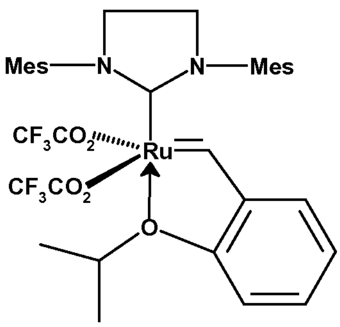

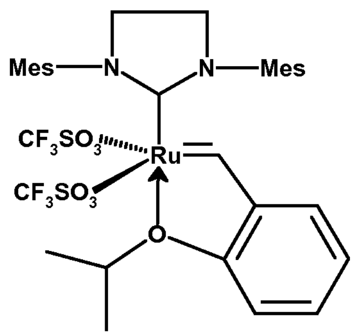

(XII) (XIII)

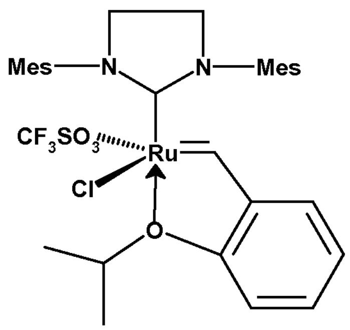

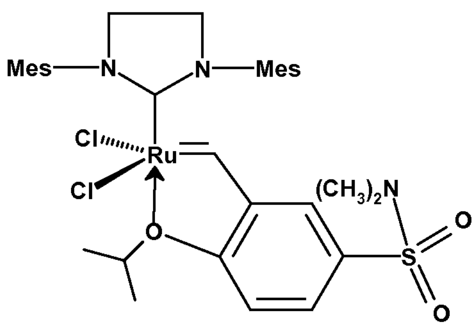

(XIV) (XV)

• a **catalyst of the general formula (B2)**, where

M represents ruthenium,
$X^1$ and $X^2$ simultaneously are halogen, more particularly simultaneously are chlorine,
$R^1$ is a straight-chain or branched $C_1$-$C_{12}$ alkyl radical, preferably isopropyl,
$R^{12}$ possesses the definitions stated for the general formula (B2),
n is 0, 1, 2 or 3, preferably 0,
$R^6$ is hydrogen and
L possesses the definitions stated for the general formula (B), and preferably represents an optionally substituted imidazolidine radical of the formula (IIa) or (IIb),

• a **catalyst of the formula (XVI) or (XVII)** , where Mes in each case is 2, 4, 6- trimethylphenyl,

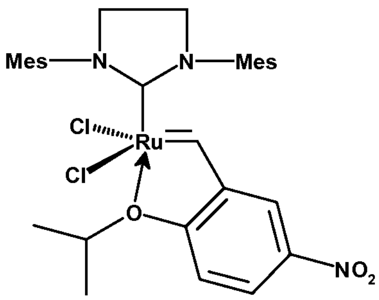

(XVI)

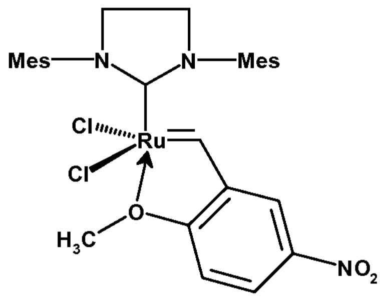

(XVII)

• a **catalyst of the general formulae (G), (H) and (K)**, in which

M is ruthenium,
$X^1$ and $X^2$ both represent halogen, more particularly chlorine,
$R^1$ and $R^2$ are identical or different and represent five- or six-membered monocyclic groups having 1 to 4, preferably 1 to 3 and more preferably 1 or 2 heteroatoms, or bicyclic or polycyclic structures comprising 2, 3, 4 or 5 such five- or six-membered monocyclic groups, it being possible for all groups stated above in each case to be substituted by one or more alkyl, preferably $C_1$-$C_{10}$ alkyl, cycloalkyl, preferably $C_3$-$C_8$ cycloalkyl, alkoxy, preferably $C_1$-$C_{10}$ alkoxy, halogen, preferably chlorine or bromine, aryl, preferably $C_6$-$C_{24}$ aryl, or heteroaryl, preferably $C_5$-$C_{23}$ heteroaryl radicals,
$R^{21}$ and $R^{22}$ are identical or different and represent $C_1$-$C_{30}$ alkyl, $C_3$-$C_{20}$ cycloalkyl, $C_2$-$C_{20}$ alkenyl, $C_2$-$C_{20}$ alkynyl, $C_6$-$C_{24}$ aryl, $C_1$-$C_{20}$ carboxylate, $C_1$-$C_{20}$ alkoxy, $C_2$-$C_{20}$ alkenyloxy, $C_2$-$C_{20}$ alkynyloxy, $C_6$-$C_{24}$ aryloxy, $C_2$-$C_{20}$ alkoxycarbonyl, $C_1$-$C_{30}$ alkylamino, $C_1$-$C_{30}$ alkylthio, $C_6$-$C_{24}$ arylthio, $C_1$-$C_{20}$ alkylsulphonyl, $C_1$-$C_{20}$ alkylsulphinyl, and
L possesses a structure of the general formula (IIa) or (IIb) already described above, more particularly of the formulae (IIIa) to (IIIf),

• a **catalyst of the structure (XIX),**

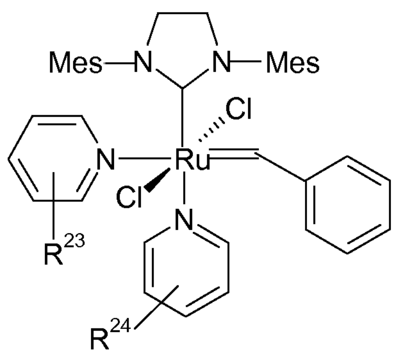

(XIX)

in which

$R^{23}$ and $R^{24}$ are identical or different and are halogen, straight-chain or branched $C_1$-$C_{20}$ alkyl, $C_1$-$C_{20}$ heteroalkyl, $C_1$-$C_{10}$ haloalkyl, $C_1$-$C_{10}$ alkoxy, $C_6$-$C_{24}$ aryl, preferably phenyl, formyl, nitro, nitrogen heterocycles, preferably pyridine, piperidine and pyrazine, carboxyl, alkylcarbonyl, halocarbonyl, carbamoyl, thiocarbamoyl, carbamido, thioformyl, amino, dialkylamino, trialkylsilyl and trialkoxysilyl,

• a **catalyst of the formula (XIX a) or (XIX b)**, where $R^{23}$ and $R^{24}$ possess the same definitions as indicated in the formula (XIX) and preferably both are H,
• a catalyst of the formulae (XX)- (XXXI), where Mes is 2, 4, 6- trimethylphenyl,

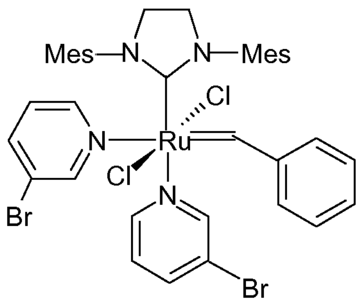

(XX)

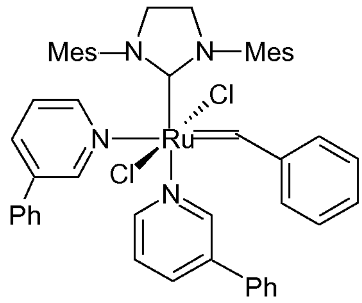

(XXI)

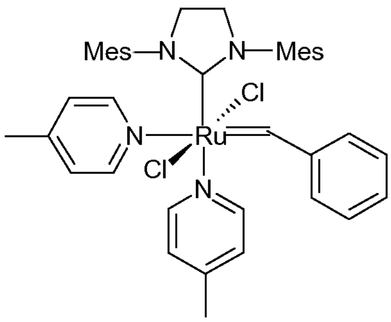

(XXII)

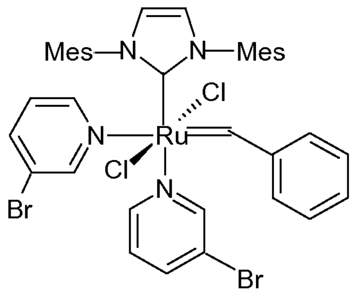

(XXIII)

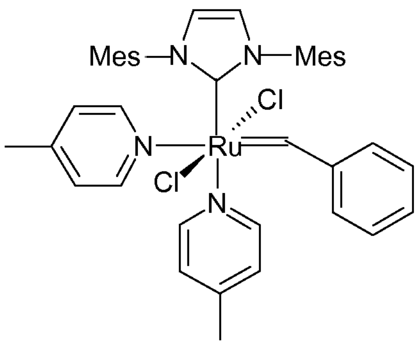

(XXIV)

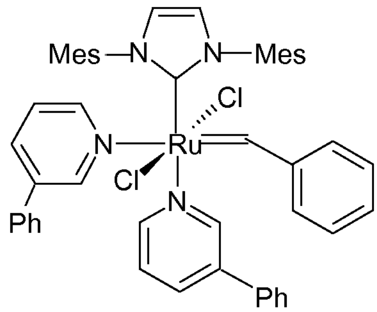

(XXV)

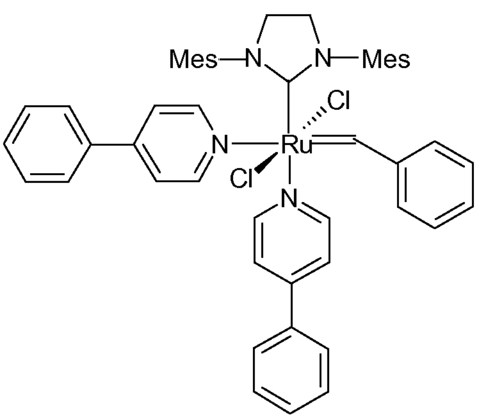

(XXVI)

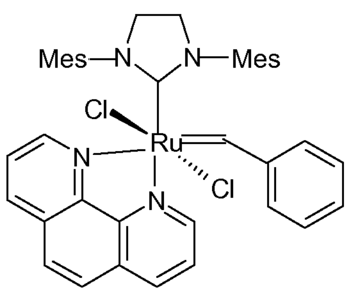

(XXVII)

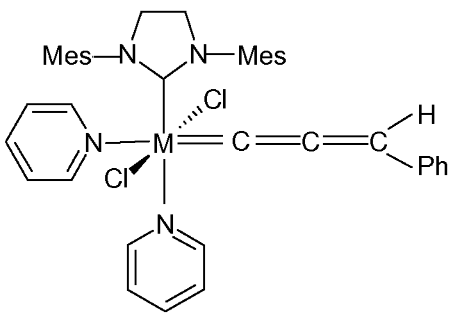

(XXVIII)

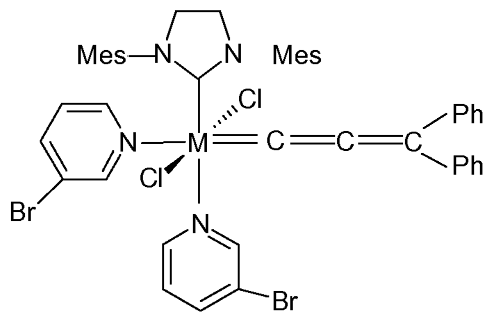

(XXIX)

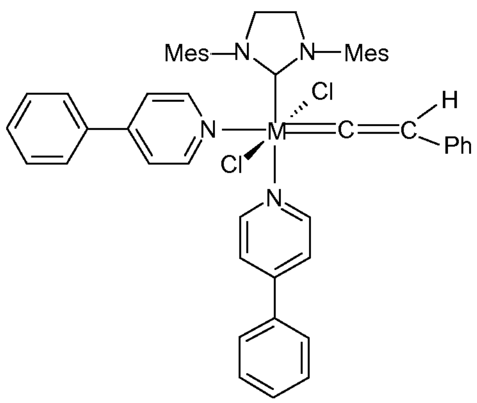

(XXX)

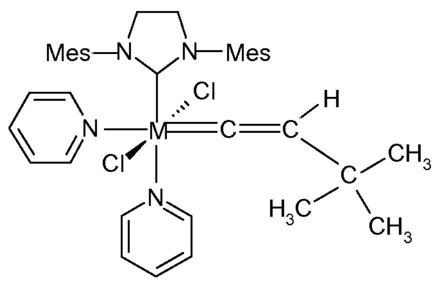

(XXXI)

• a catalyst **of the formulae (N2a) and (N2b)**,

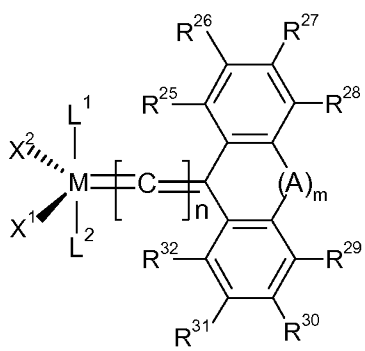

(N2a)

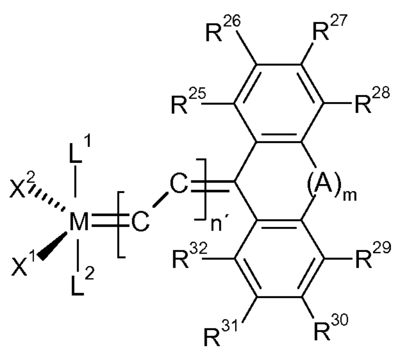

(N2b)

in which

M is ruthenium or osmium,
$X^1$ and $X^2$ are identical or different and represent two ligands, preferably anionic ligands,
$L^1$ and $L^2$ represent identical or different ligands, preferably neutral electron donors, where $L^2$ alternatively may also be bridged with the radical $R^8$,
n is 0, 1, 2 or 3, preferably 0, 1 or 2,
n' is 1 or 2, preferably 1, and
$R^{25}$-$R^{32}$, m and A possess the same definitions as in the general formula (N1),

• a **catalyst of the formulae (N13a) or (N13b)**

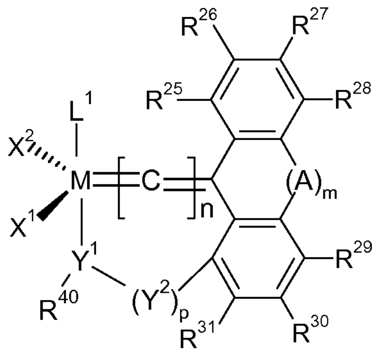

(N13a)

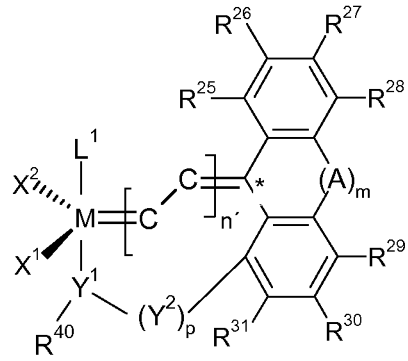

(N13b)

in which

$Y^1$ is oxygen, sulphur, a radical N-$R^{41}$ or a radical P-$R^{41}$, where $R^{41}$ possesses the definitions identified below,
$R^{40}$ and $R^{41}$ are identical or different and represent an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all in each case be optionally substituted by one more alkyl, halogen, alkoxy, aryl or heteroaryl radicals,
p is 0 or 1 and
$Y^2$ if p is 1, is- $(CH_2)_r$- with r = 1, 2 or 3, -C (=O)- $CH_2$-, - C (=O) -, - N=CH-, - N (H)- C (=O)- or else alternatively the entire structural unit "- $Y^1$ ($R^{40}$)- $(Y^2)_p$- " is (- N ($R^{40}$) =CH- $CH_2$- ), (- N ($R^{40}$, $R^{41}$) =CH- $CH_2$- ), and
where M, $X^1$, $X^2$, $L^1$, $R^{25}$- $R^{32}$, A, m and n possess the same definitions as in the general formulae (IIa) and (IIb), or

• a **catalyst of the following structures**

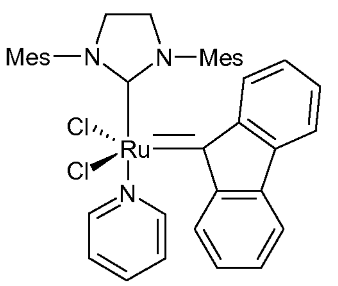

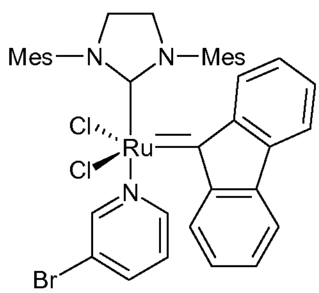

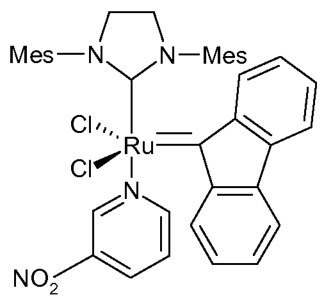

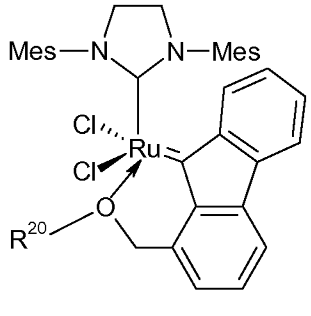

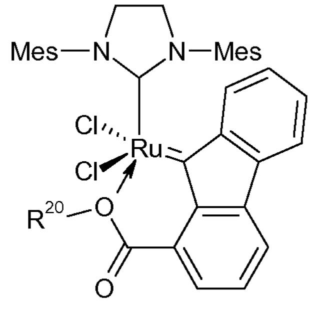

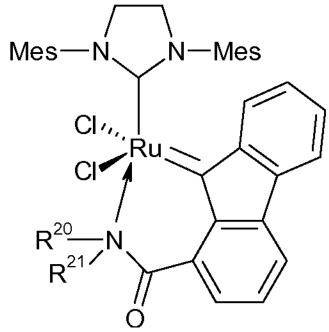

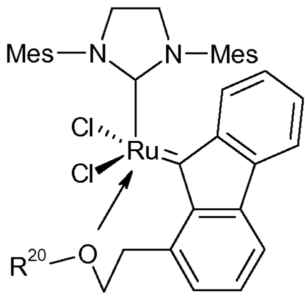

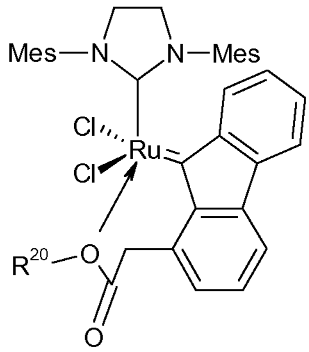

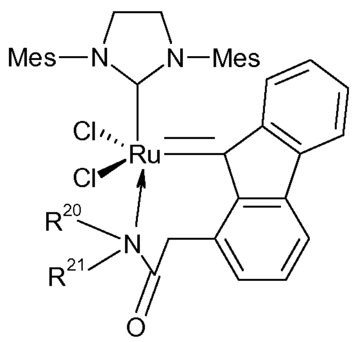

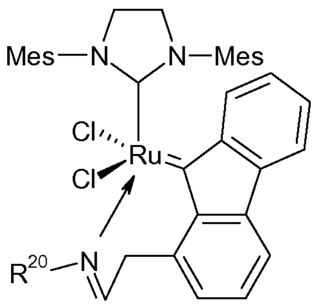

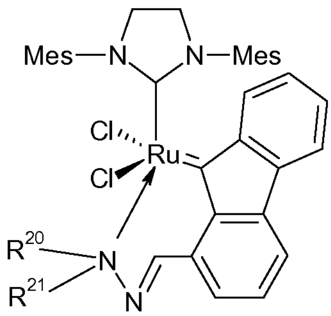

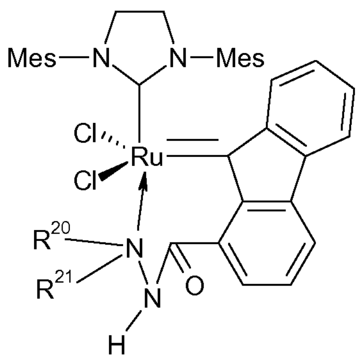

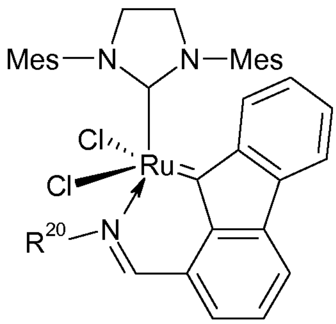

**4.** Process according to Claim 2 or 3, **characterized in that** in the functionalized olefin of the general formula (I) or (II)

X is **$OR^1$**, in which $R^1$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl,
**O- ($CH_2$- $CH_2$- O)$_n$- $R^2$**, in which $R^2$ is H, $C_1$- $C_{12}$ alkyl, $C_7$- $C_{18}$, aralkyl, phenyl, naphthyl or fluorenyl and preferably is H, $C_1$- $C_6$ alkyl, $C_7$- $C_{12}$ aralkyl or phenyl, and n is 1 to 20 and preferably 1 to 6,
**O- ($CH_2$- CH ($CH_3$)- O)$_n$- $R^3$**, in which $R^3$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl and n is 1 to 20 and preferably 1 to 6,
**O- C (=O)- $R^4$**, in which $R^4$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl,
**$C_6$- $C_{12}$ aryl**, which is substituted by at least one radical $OR^5$, in which $R^5$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl, or
**NH- C (=O)- $OR^6$**, in which $R^6$ is H, $C_1$- $C_{18}$, alkyl, $C_7$- $C_{24}$ aralkyl, phenyl, naphthyl or fluorenyl and preferably is H, $C_1$- $C_6$ alkyl, $C_7$- $C_{12}$ aralkyl or phenyl, and
Y and Z are identical or different and are
**$OR^7$**, in which $R^7$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl,
**O- ($CH_2$- $CH_2$- O)$_n$- $R^8$**, in which $R^8$ is H, $C_1$- $C_{18}$ alkyl, $C_7$- $C_{18}$, aralkyl, phenyl, naphthyl or fluorenyl and preferably is H, $C_1$- $C_6$ alkyl, $C_7$- $C_{12}$ aralkyl or phenyl and n is 1 to 20 and preferably 1 to 6,

**O- ($CH_2$- CH ($CH_3$)- O)$_n$- $R^9$**, in which $R^3$ is H, $C_1$- $C_{13}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl and n is 1 to 20 and preferably 1 to 6,
**O- C (=O)- $R^{10}$**, in which $R^{10}$ is H, $C_1$- $C_{12}$ alkyl, $C_7$- $C_{18}$, aralkyl, phenyl, naphthyl or fluorenyl and preferably is H, $C_1$- $C_6$ alkyl, $C_7$- $C_{12}$ aralkyl or phenyl,
**$C_6$- $C_{12}$ aryl**, which is substituted by at least one radical $OR^{11}$, in which $R^{11}$ is H, $C_1$ $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl, or
**NH- C (=O)- $OR^{12}$**, in which $R^{12}$ is H, $C_1$- $C_{12}$ alkyl, $C_7$- $C_{18}$ aralkyl, phenyl, naphthyl or fluorenyl and preferably is H, $C_1$- $C_6$ alkyl, $C_7$- $C_{12}$ aralkyl or phenyl.

**5.** Process according to Claim 2 or 3, **characterized in that** use is made as functionalized olefin of tert- butyl N-allylcarbamate, p- allylanisole, o- allylanisole, p- allylphenol, o- allylphenol, allyl benzoate, allyl benzyl ether, cis- 1, 4- bisbenzoyloxy- 2- butene, cis- 2- butene- 1, 4- diyl dibenzoate, cis- 2- butene- 1, 4- diyl diacetate or mixtures thereof.

**6.** Process according to one or more of Claims 1 to 5, **characterized in that** the compound of the general formula (I) or (II) is used in an amount of $8*10^{-6}$ mol to $8*10^{-3}$ mol, preferably $1*10^{-5}$ mol to $5*10^{-3}$ mol and more preferably $2*10^{-5}$ mol to $2*10^{-3}$ mol, based on 1 g of nitrile rubber.

**7.** Process according to one or more of Claims 1 to 6, **characterized in that** the metathesis catalyst is used in an amount of $4*10^{-8}$ mol to $4*10^{-5}$ mol, preferably of $2*10^{-7}$ mol to $2*10^{-5}$ mol and more preferably of $5*10^{-7}$ mol to $7.5*10^{-6}$ mol, based on 1 g of nitrile rubber.

**8.** Process according to one or more of Claims 1 to 7, **characterized in that** the metathesis catalyst is used, relative to the functionalized olefin of the general formula (I) or (II), in a molar ratio of ($5*10^{-6}$ to 5) : 1, preferably ($1*10^{-4}$ to $5*10^{-1}$) : 1, more preferably of ($2*10^{-3}$ to $1.5*10^{-2}$) : 1.

**9.** Process according to one or more of Claims 1 to 8, **characterized in that** the nitrile rubber used comprises repeating units which derive from at least one conjugated diene and at least one $\alpha,\beta$-unsaturated nitrile and the C=C double bonds from the copolymerized diene monomers are present in either unhydrogenated or partly hydrogenated form.

**10.** Functionalized nitrile rubbers comprising repeating units which derive from at least one conjugated diene and at least one $\alpha$, $\beta$- unsaturated nitrile, and also either end groups X or end groups Y and Z, where

X is **O**$R^1$, in which $R^1$ is H, $C_1$- $C_{18}$ alkyl, $C_7$- $C_{24}$ aralkyl, phenyl, naphthyl or fluorenyl,
**O- ($CH_2$- $CH_2$- O)$_n$- $R^2$**, in which $R^2$ is H, $C_1$- $C_{18}$ alkyl, $C_7$- $C_{24}$ aralkyl, phenyl, naphthyl or fluorenyl and n is 1 to 20,
**O- ($CH_2$- CH ($CH_3$)- O)$_n$- $R^3$**, in which $R^3$ is H, $C_1$- $C_{18}$ alkyl, $C_7$- $C_{24}$ aralkyl, phenyl, naphthyl or fluorenyl and n is 1 to 20,
**O- C (=O)- $R^4$**, in which $R^4$ is H, $C_1$- $C_{18}$, alkyl, $C_7$- $C_{24}$ aralkyl, phenyl, naphthyl or fluorenyl,
**$C_6$- $C_{18}$ aryl,** which is substituted by at least one radical $OR^5$, in which $R^5$ is H, $C_1$- $C_{18}$ alkyl, $C_7$- $C_{24}$ aralkyl, phenyl, naphthyl or fluorenyl, or
**NH- C (=O)- $OR_6$,** in which $R^6$ is H, $C_1$- $C_{18}$ alkyl, $C_7$- $C_{24}$ aralkyl, phenyl, naphthyl or fluorenyl, and
Y and Z are identical or different and
**$OR^7$,** in which $R^7$ is H, $C_1$- $C_{18}$ alkyl, $C_7$- $C_{24}$ aralkyl, phenyl, naphthyl or fluorenyl,
**O- ($CH_2$- $CH_2$- O)$_n$- $R^8$,** in which $R^8$ is H, $C_1$- $C_{18}$ alkyl, $C_7$- $C_{24}$ aralkyl, phenyl, naphthyl or fluorenyl and n is 1 to 20,
**O- ($CH_2$- CH ($CH_3$)- O)$_n$- $R^9$,** in which $R^9$ is H, $C_1$- $C_{18}$ alkyl, $C_7$- $C_{24}$ aralkyl, phenyl, naphthyl or fluorenyl and n is 1 to 20,
**O- C (=O)- $R^{10}$,** in which $R^{10}$ is H, $C_1$- $C_{18}$ alkyl, $C_7$- $C_{24}$ aralkyl, phenyl, naphthyl or fluorenyl,
**$C_6$- $C_{18}$ aryl,** which is substituted by at least one radical $OR^{11}$, in which $R^{11}$ is H, $C_1$- $C_{18}$ alkyl, $C_7$- $C_{24}$ aralkyl, phenyl, naphthyl or fluorenyl, or
**NH- C (=O)- $OR^{12}$,** in which $R^{12}$ is H, $C_1$- $C_{18}$ alkyl, $C_7$- $C_{24}$ aralkyl, phenyl, naphthyl or fluorenyl,

where the C=C double bonds from the copolymerized diene monomers are optionally present in either partially or fully hydrogenated form.

**11.** Functionalized nitrile rubbers according to Claim 10, **characterized in that** they possess a Mooney viscosity (ML 1+4 at 100°C) in the range of 5 - 30, preferably in the range of 5 - 20, and a polydispersity PDI = Mw/Mn, where Mn represents the number average of the molecular weight and Mw the weight average of the molecular weight, in the range 1.4 - 4.0, preferably in the range of 1.5 - 3.0.

**12.** Vulcanizable mixtures comprising

(i) at least one functionalized nitrile rubber according to Claim 10 or 11,
(ii) at least one crosslinker or crosslinking system and optionally (iii) one or more further rubber additives.

**13.** Process for producing vulcanizates, **characterized in that** the vulcanizable mixture according to Claim 12 is crosslinked by temperature increase, preferably in a shaping process, more preferably employing injection moulding.

**14.** Vulcanizates based on a functionalized nitrile rubber according to Claim 10 or 11.

**15.** Block copolymers comprising one or more blocks based on the functionalized nitrile rubber according to Claim 10 or 11.

## Revendications

**1.** Procédé de fabrication de caoutchoucs de nitrile fonctionnalisés, selon lequel un caoutchouc de nitrile est mis en contact avec un catalyseur de métathèse, qui est un catalyseur complexe à base d'un métal du groupe de transition 6 ou 8 du tableau périodique comprenant au moins un ligand de type carbène relié au métal, en présence d'au moins un composé de formule générale (I) ou (II)

$H_2C{=}CH\text{-}\ CH_2\text{-}\ X$ (I)

$Y\text{-}\ CH_2\text{-}\ CH{=}CH\text{-}\ CH_2\text{-}\ Z$ (II)

dans lesquelles
X signifie
$OR^1$, $R^1$ représentant H, alkyle en $C_1$- $C_{18}$, aralkyle en $C_7$- $C_{24}$, phényle, naphtyle ou fluorényle,
O- $(CH_2\text{-}\ CH_2\text{-}\ O)_n$- $R^2$, $R^2$ représentant H, alkyle en $C_1$- $C_{18}$, aralkyle en $C_7$- $C_{24}$, phényle, naphtyle ou fluorényle, et n = 1 à 20,
O- $(CH_2\text{-}\ CH\ (CH_3)\text{-}\ O)_n$- $R^3$, $R^3$ représentant H, alkyle en $C_1$- $C_{18}$, aralkyle en $C_7$- $C_{24}$, phényle, naphtyle ou fluorényle, et n = 1 à 20,
O- C (=O)- $R^4$, $R^4$ représentant H, alkyle en $C_1$- $C_{18}$, aralkyle en $C_7$- $C_{24}$, phényle, naphtyle ou fluorényle,
aryle en $C_6$- $C_{18}$, qui est substitué par au moins un radical $OR^5$, $R^5$ représentant H, alkyle en $C_1$- $C_{18}$, aralkyle en $C_7$- $C_{24}$, phényle, naphtyle ou fluorényle, ou
NH- C (=O)- $OR^6$, $R^6$ représentant H, alkyle en $C_1$- $C_{18}$, aralkyle en $C_7$- $C_{24}$, phényle, naphtyle ou fluorényle, et Y et Z sont identiques ou différents, et signifient
$OR^7$, $R^7$ représentant H, alkyle en $C_1$- $C_{18}$, aralkyle en $C_7$- $C_{24}$, phényle, naphtyle ou fluorényle,
O- $(CH_2\text{-}\ CH_2\text{-}\ O)_n$- $R^8$, $R^8$ représentant H, alkyle en $C_1$- $C_{18}$, aralkyle en $C_7$- $C_{24}$, phényle, naphtyle ou fluorényle, et n = 1 à 20,
O- $(CH_2\text{-}\ CH\ (CH_3)\text{-}\ O)_n$- $R^9$, $R^9$ représentant H, alkyle en $C_1$- $C_{18}$, aralkyle en $C_7$- $C_{24}$, phényle, naphtyle ou fluorényle, et n = 1 à 20,
O- C (=O)- $R^{10}$, $R^{10}$ représentant H, alkyle en $C_1$- $C_{18}$, aralkyle en $C_7$- $C_{24}$, phényle, naphtyle ou fluorényle,
aryle en $C_6$- $C_{18}$, qui est substitué par au moins un radical $OR^{11}$, $R^{11}$ représentant H, alkyle en $C_1$- $C_{18}$, aralkyle en $C_7$- $C_{24}$, phényle, naphtyle ou fluorényle, ou
NH- C (=O)- $OR^{12}$, $R^{12}$ représentant H, alkyle en $C_1$- $C_{18}$, aralkyle en $C_7$- $C_{24}$, phényle, naphtyle ou fluorényle.

**2.** Procédé selon la revendication 1, **caractérisé en ce qu'**on utilise en tant que catalyseur de métathèse

(i) un catalyseur de formule générale A

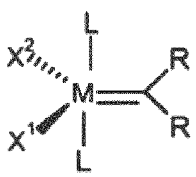

(A)

dans laquelle
M signifie osmium ou ruthénium,
$X^1$ et $X^2$ sont identiques ou différents et représentent deux ligands, de préférence ligands anioniques,
les L représentent des ligands identiques ou différents, de préférence des donneurs d'électrons neutres,
les R sont identiques ou différents et représentent hydrogène, alkyle, de préférence alkyle en $C_1$-$C_{30}$, cycloalkyle, de préférence cycloalkyle en $C_3$-$C_{20}$, alcényle, de préférence alcényle en $C_2$-$C_{20}$, alcynyle, de préférence alcynyle en $C_2$-$C_{20}$, aryle, de préférence aryle en $C_6$-$C_{24}$, carboxylate, de préférence carboxylate en $C_1$-$C_{20}$, alcoxy, de préférence alcoxy en $C_1$-$C_{20}$, alcényloxy, de préférence alcényloxy en $C_2$-$C_{20}$, alcynyloxy, de préférence alcynyloxy en $C_2$-$C_{20}$, aryloxy, de préférence aryloxy en $C_6$-$C_{24}$, alcoxycarbonyle, de préférence alcoxycarboxyle en $C_2$-$C_{20}$, alkylamino, de préférence alkylamino en $C_1$-$C_{30}$, alkylthio, de préférence alkylthio en $C_1$-$C_{30}$, arylthio, de préférence arylthio en $C_6$-$C_{24}$, alkylsulfonyle, de préférence alkylsulfonyle en $C_1$-$C_{20}$, ou alkylsulfinyle, de préférence alkylsulfinyle en $C_1$-$C_{20}$, ces radicaux pouvant tous à chaque fois éventuellement être substitués par un ou plusieurs radicaux alkyle, halogène, alcoxy, aryle ou hétéroaryle, ou, en variante, deux radicaux R peuvent être pontés en incluant l'atome C commun auquel ils sont reliés en un groupe cyclique, qui peut être de nature aliphatique ou aromatique, est éventuellement substitué et peut contenir un ou plusieurs hétéroatomes,
(ii) un catalyseur de formule générale (A1)

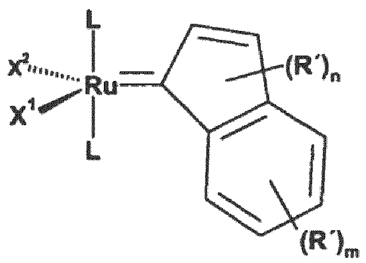

(A1)

dans laquelle
$X^1$, $X^2$ et L peuvent avoir les mêmes significations générales ou préférées que dans la formule générale (A),
n représente 0, 1 ou 2,
m représente 0, 1, 2, 3 ou 4 et
les R' sont identiques ou différents et signifient des radicaux alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être substitués par un ou plusieurs radicaux alkyle, halogène, alcoxy, aryle ou hétéroaryle,
(iii) un catalyseur de formule générale (B)

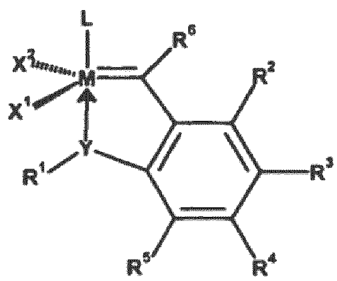

(B)

dans laquelle
M signifie ruthénium ou osmium,
$X^1$ et $X^2$ sont des ligands identiques ou différents, de préférence des ligands anioniques,
Y signifie oxygène (0), soufre (S), un radical N- $R^1$ ou un radical P- $R^1$, $R^1$ ayant les significations indiquées ci-après,
$R^1$ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être substitués par un ou plusieurs radicaux alkyle, halogène, alcoxy, aryle ou hétéroaryle,
$R^2$, $R^3$, $R^4$ et $R^5$ sont identiques ou différents et représentent l'hydrogène, des radicaux organiques ou inorga-

niques,
$R^6$ signifie H, un radical alkyle, alcényle, alcynyle ou aryle, et
L est un ligand qui a les mêmes significations que celles indiquées pour la formule (A),
(iv) un catalyseur de formule générale (B1)

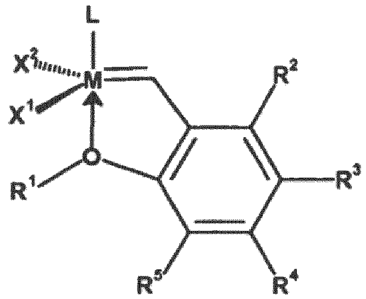

(B 1)

dans laquelle
M, L, $X^1$, $X^2$, $R^1$, $R^2$, $R^3$, $R^4$ et $R^5$ peuvent avoir les significations indiquées pour la formule générale (B),
(v) un catalyseur de formule générale (B2)

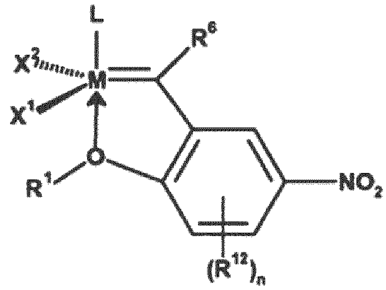

(B2)

dans laquelle
M, L, $X^1$, $X^2$, $R^1$ et $R^6$ ont les significations générales et préférées indiquées pour la formule (B),
les $R^{12}$ sont identiques ou différents et ont les significations indiquées pour les radicaux $R^2$, $R^3$, $R^4$ et $R^5$ dans la formule (B), à l'exception de l'hydrogène, et n représente 0, 1, 2 ou 3,
(vi) un catalyseur de formule générale (B3)

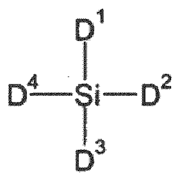

(B3)

dans laquelle $D^1$, $D^2$, $D^3$ et $D^4$ présentent à chaque fois une structure de la formule générale (XVIII) représentée ci-après, qui est reliée au silicium de la formule (B3) par le groupe méthylène représenté à droite,

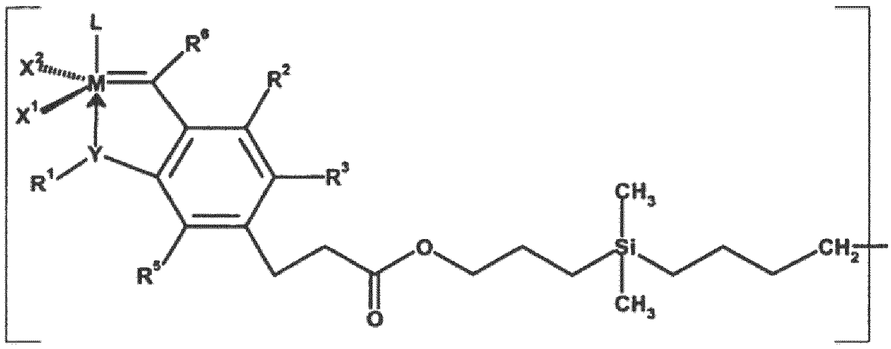

(XVIII)

dans laquelle

M, L, $X^1$, $X^2$, $R^1$, $R^2$, $R^3$, $R^5$ et $R^6$ peuvent avoir les significations indiquées pour la formule générale (B),

(vii) un catalyseur de formule générale (B4), dans laquelle le symbole ● représente un support,

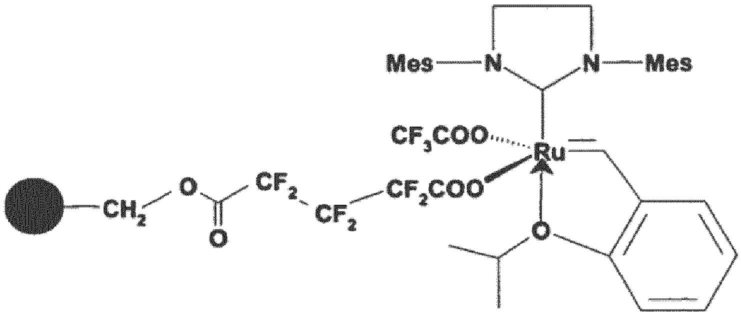

(B4)

(viii) un catalyseur de formule générale (C)

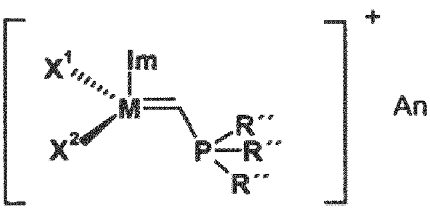

(C)

dans laquelle

M signifie ruthénium ou osmium,

$X^1$ et $X^2$ sont identiques ou différents et représentent des ligands anioniques,

les R" sont identiques ou différents et représentent des radicaux organiques,

Im représente un radical imidazolidine éventuellement substitué et

An représente un anion,

(ix) un catalyseur de formule générale (D)

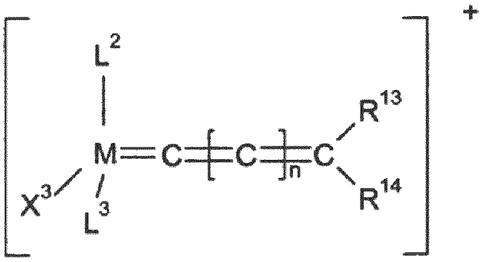

(D)

dans laquelle

M représente ruthénium ou osmium,
$R^{13}$, $R^{14}$ représentent indépendamment l'un de l'autre hydrogène, alkyle en $C_1$- $C_{20}$, alcényle en $C_2$- $C_{20}$, alcynyle en $C_2$- $C_{20}$, aryle en $C_6$- $C_{24}$, carboxylate en $C_1$- $C_{20}$, alcoxy en $C_1$- $C_{20}$, alcényloxy en $C_2$- $C_{20}$, alcynyloxy en $C_2$- $C_{20}$, aryloxy en $C_6$- $C_{24}$, alcoxycarbonyle en $C_2$- $C_{20}$, alkylthio en $C_1$- $C_{20}$, alkylsulfonyle en $C_1$- $C_{20}$ ou alkylsulfinyle en $C_1$- $C_{20}$,
$X^3$ représente un ligand anionique,
$L^2$ est un ligand neutre à liaison $\Pi$, indépendamment du fait qu'il soit mono- ou polycyclique,
$L^3$ représente un ligand du groupe des phosphines, phosphines sulfonées, phosphines fluorées, phosphines fonctionnalisées avec jusqu'à trois groupes aminoalkyle, ammonium- alkyle, alcoxyalkyle, alcoxycarbonylalkyle, hydrocarbonylalkyle, hydroxyalkyle ou cétoalkyle, phosphites, phosphinites, phosphonites, phosphine- amines, arsines, stibines, éthers, amines, amides, imines, sulfoxydes, thioéthers et pyridines,
$Y^-$ est un anion non coordinant et
n représente 0, 1, 2, 3, 4 ou 5,
(x) un catalyseur de formule générale (E)

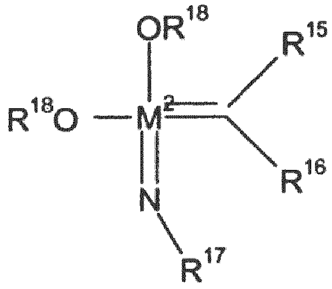

(E)

dans laquelle
$M^2$ signifie molybdène,
$R^{15}$ et $R^{16}$ sont identiques ou différents et signifient hydrogène, alkyle en $C_1$-$C_{20}$, alcényle en $C_2$-$C_{20}$, alcynyle en $C_2$-$C_{20}$, aryle en $C_6$-$C_{24}$, carboxylate en $C_1$-$C_{20}$, alcoxy en $C_1$-$C_{20}$, alcényloxy en $C_2$-$C_{20}$, alcynyloxy en $C_2$-$C_{20}$, aryloxy en $C_6$-$C_{24}$, alcoxycarbonyle en $C_2$-$C_{20}$, alkylthio en $C_1$-$C_{20}$, alkylsulfonyle en $C_1$-$C_{20}$ ou alkylsulfinyle en $C_1$-$C_{20}$,
$R^{17}$ et $R^{18}$ sont identiques ou différents et représentent un radical alkyle en $C_1$-$C_{20}$, aryle en $C_6$-$C_{24}$, aralkyle en $C_6$-$C_{30}$ substitué ou substitué par un halogène ou leurs analogues contenant de la silicone,
(xi) un catalyseur de formule générale (F)

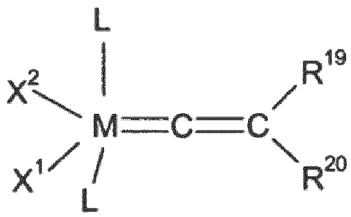

(F)

dans laquelle
M signifie ruthénium ou osmium,
$X^1$ et $X^2$ sont identiques ou différents et représentent des ligands anioniques, qui peuvent prendre toutes les significations de $X^1$ et $X^2$ indiquées dans les formules générales (A) et (B),
L représente des ligands identiques ou différents, qui peuvent prendre toutes les significations de L indiquées dans les formules générales (A) et (B),
$R^{19}$ et $R^{20}$ sont identiques ou différents et signifient hydrogène ou alkyle substitué ou non substitué,
(xii) un catalyseur de formule générale (G), (H) ou (K)

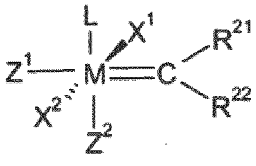 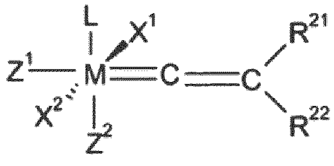 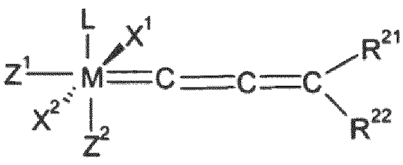

(G) (H) (K)

dans lesquelles

M signifie osmium ou ruthénium,

$X^1$ et $X^2$ sont identiques ou différents et représentent deux ligands, de préférence ligands anioniques,

L représente un ligand, de préférence un donneur d'électrons neutre,

$Z^1$ et $Z^2$ sont identiques ou différentes et représentent des donneurs d'électrons neutres,

$R^{21}$ et $R^{22}$ signifient indépendamment l'un de l'autre hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont à chaque fois substitués par un ou plusieurs radicaux choisis parmi alkyle, halogène, alcoxy, aryle ou hétéroaryle,

(xiii) un catalyseur (N) qui comprend l'élément structural général (N1), dans lequel l'atome de carbone caractérisé avec un « * » est relié au squelette de base du catalyseur par une ou plusieurs doubles liaisons

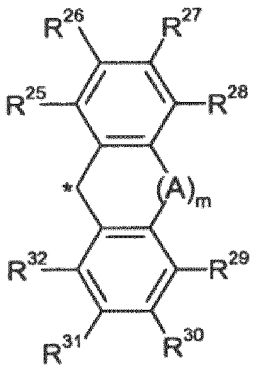

(N1)

et $R^{25}$ à $R^{32}$ sont identiques ou différents et signifient hydrogène, halogène, hydroxyle, aldéhyde, céto, thiol, $CF_3$, nitro, nitroso, cyano, thiocyano, isocyanato, carbodiimide, carbamate, thiocarbamate, dithiocarbamate, amino, amido, imino, silyle, sulfonate (- $SO_3^-$), - $OSO_3^-$, -$PO_3^-$ ou $OPO_3^-$, ou représentent alkyle, cycloalkyle, alcényle, alcynyle, aryle, carboxylate, alcoxy, alcényloxy, alcynyloxy, aryloxy, alcoxycarbonyle, alkylamino, alkylthio, arylthio, alkylsulfonyle, alkylsulfinyle, dialkylamino, alkylsilyle ou alcoxysilyle, ces radicaux pouvant tous à chaque fois éventuellement être substitués par un ou plusieurs radicaux alkyle, halogène, alcoxy, aryle ou hétéroaryle, ou, en variante, à chaque fois deux radicaux directement voisins du groupe de $R^{25}$ à $R^{32}$ forment par pontage, en incluant les atomes de carbone de cycle auxquels ils sont reliés, un groupe cyclique, de préférence un système aromatique, ou, en variante, $R^8$ est éventuellement ponté avec un autre ligand du catalyseur complexe ruthénium- ou osmium- carbène,

m représente 0 ou 1 et

A signifie oxygène, soufre, C ($R^{33}R^{34}$), N- $R^{35}$, -C ($R^{36}$) = ($R^{37}$) -, - C ($R^{36}$) ($R^{38}$)- C ($R^{37}$) ($R^{39}$) -, $R^{33}$ à $R^{39}$ étant identiques ou différents et pouvant à chaque fois avoir les mêmes significations que les radicaux $R^{25}$ à $R^{32}$.

3. Procédé selon la revendication 2, **caractérisé en ce qu'**on utilise en tant que catalyseur de métathèse,

- un catalyseur de formule (IV) ou (V), Cy représentant cyclohexyle

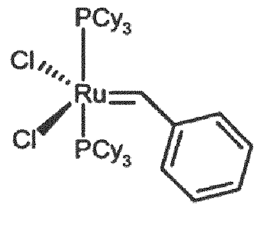

(IV)

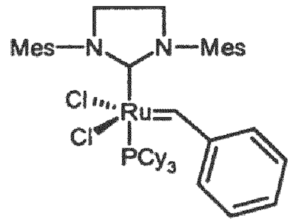

(V)

- un catalyseur de formule (VI), Mes représentant à chaque fois 2, 4, 6- triméthylphényle et Ph représentant phényle,

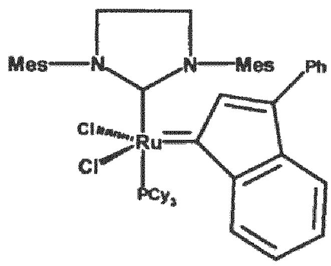

(VI)

- un catalyseur de formule générale (B1), dans laquelle
M représente ruthénium,
$X^1$ et $X^2$ signifient simultanément un halogène, notamment simultanément le chlore,
$R^1$ représente un radical alkyle en $C_1$- $C_{12}$ linéaire ou ramifié, de préférence un radical isopropyle,
$R^2$, $R^3$, $R^4$, $R^5$ ont les significations générales et préférées indiquées pour la formule générale (B) et signifient de préférence tous H, et
L a les significations générales et préférées indiquées pour la formule générale (B) et représente de préférence un radical imidazolidine éventuellement substitué de formule (IIa) ou (IIb),

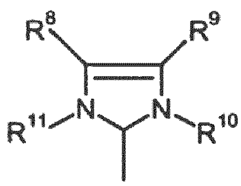

(IIa)

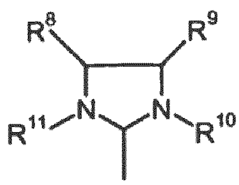

(IIb)

dans lesquelles
$R^8$, $R^9$, $R^{10}$, $R^{11}$ sont identiques ou différents et signifient hydrogène, alkyle en $C_1$- $C_{30}$ linéaire ou ramifié, cycloalkyle en $C_3$- $C_{20}$, alcényle en $C_2$- $C_{20}$, alcynyle en $C_2$- $C_{20}$, aryle en $C_6$- $C_{24}$, carboxylate en $C_1$- $C_{20}$, alcoxy en $C_1$- $C_{20}$, alcényloxy en $C_2$- $C_{20}$, alcynyloxy en $C_2$- $C_{20}$, aryloxy en $C_6$- $C_{24}$, alcoxycarbonyle en $C_2$- $C_{20}$, alkylthio en $C_1$- $C_{20}$, arylthio en $C_6$- $C_{24}$, alkylsulfonyle en $C_1$- $C_{20}$, alkylsulfonate en $C_1$- $C_{20}$, arylsulfonate en $C_6$- $C_{24}$ ou alkylsulfinyle en $C_1$- $C_{20}$, les radicaux susmentionnés pouvant à chaque fois être substitués par un ou plusieurs substituants, de préférence alkyle en $C_1$- $C_{10}$ linéaire ou ramifié, cycloalkyle en $C_3$- $C_8$, alcoxy en $C_1$- $C_{10}$ ou aryle en $C_6$- $C_{24}$, ces substituants susmentionnés pouvant également à leur tour être substitués par un ou plusieurs radicaux, de préférence choisis dans le groupe constitué par halogène, notamment chlore ou brome, alkyle en $C_1$- $C_5$, alcoxy en $C_1$- $C_5$ et phényle, ou
- un catalyseur de formule (VII), dans laquelle Mes représente à chaque fois 2, 4, 6- triméthylphényle

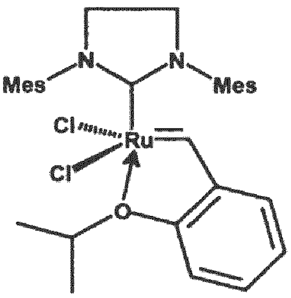

(VII)

- un catalyseur de formule (VIII), (IX), (X), (XI), (XII), (XIII), (XIV) ou (XV), dans lesquelles Mes signifie à chaque fois 2, 4, 6- triméthylphényle,

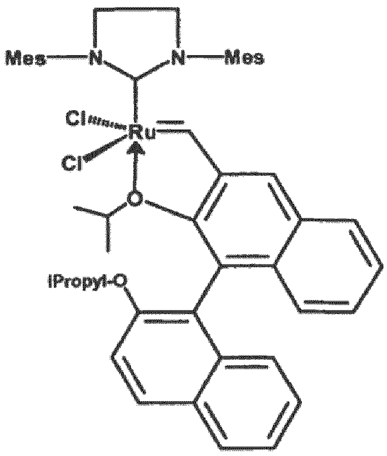

(VIII)

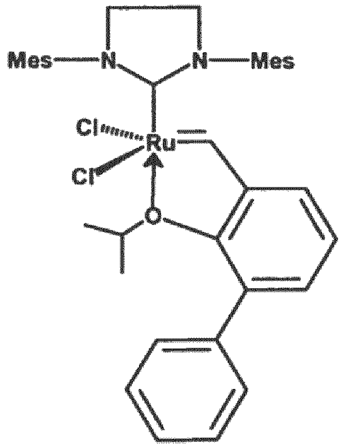

(IX)

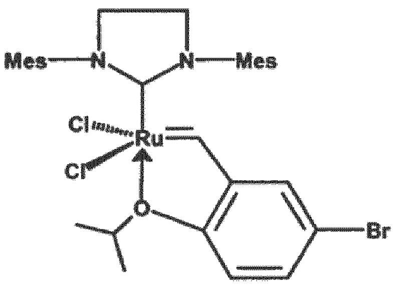

(X)

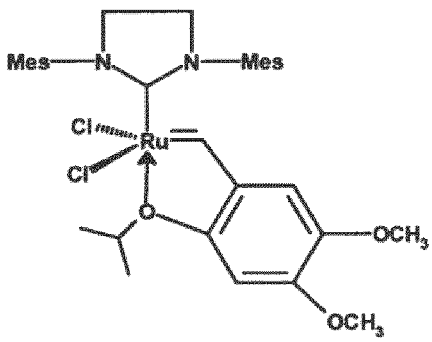

(XI)

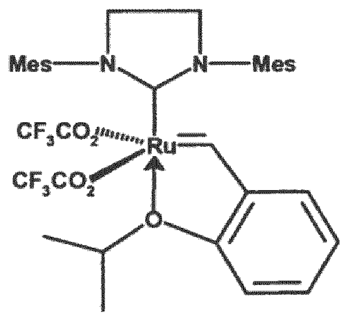

(XII)

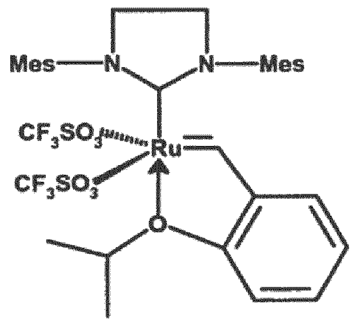

(XIII)

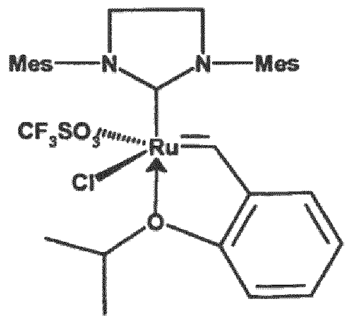

(XIV)

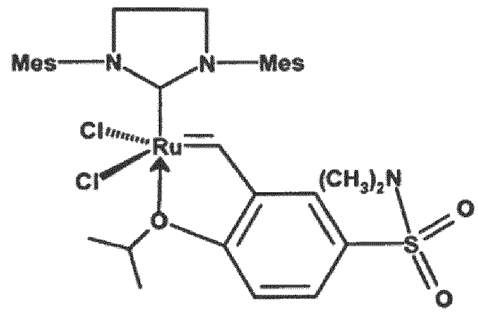

(XV)

- un catalyseur de formule générale (B2), dans laquelle
M représente ruthénium,
$X^1$ et $X^2$ signifient simultanément un halogène, notamment simultanément le chlore,
$R^1$ représente un radical alkyle en $C_1$-$C_{12}$ linéaire ou ramifié, de préférence isopropyle,
$R^{12}$ a les significations indiquées pour la formule générale (B2),
n représente 0, 1, 2 ou 3, de préférence 0,
$R^6$ signifie l'hydrogène et
L a les significations indiquées pour la formule générale (B), et représente de préférence un radical imidazolidine éventuellement substitué de formule (IIa) ou (IIb),
- un catalyseur de formule (XVI) ou (XVII), dans lesquelles Mes représente à chaque fois 2, 4, 6- triméthylphényle,

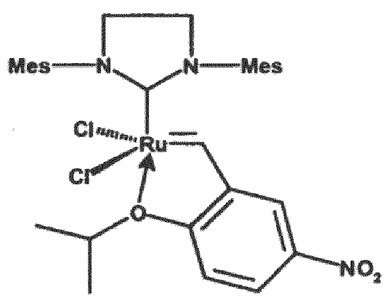

(XVI)

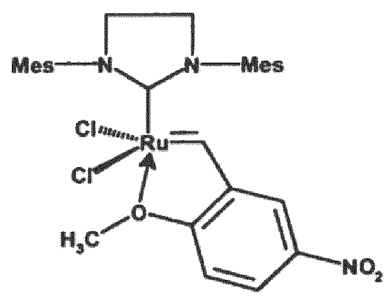

(XVII)

- un catalyseur de formule générale (G), (H) et (K), dans lesquelles
M représente le ruthénium,
$X^1$ et $X^2$ représentent tous les deux un halogène, notamment le chlore,
$R^1$ et $R^2$ sont identiques ou différents et représentent des groupes monocycliques à cinq ou six éléments

contenant 1 à 4, de préférence 1 à 3 et de manière particulièrement préférée 1 ou 2 hétéroatomes, ou des structures bi- ou polycycliques de 2, 3, 4 ou 5 desdits groupes monocycliques à cinq ou six éléments, tous les groupes susmentionnés pouvant à chaque fois être substitués par un ou plusieurs radicaux alkyle, de préférence alkyle en $C_1$-$C_{10}$, cycloalkyle, de préférence cycloalkyle en $C_3$-$C_8$, alcoxy, de préférence alcoxy en $C_1$-$C_{10}$, halogène, de préférence chlore ou brome, aryle, de préférence aryle en $C_6$-$C_{24}$, ou hétéroaryle, de préférence hétéroaryle en $C_5$-$C_{23}$,

$R^{21}$ et $R^{22}$ sont identiques ou différents et représentent alkyle en $C_1$-$C_{30}$, cycloalkyle en $C_3$-$C_{20}$, alcényle en $C_2$-$C_{20}$, alcynyle en $C_2$-$C_{20}$, aryle en $C_6$-$C_{24}$, carboxylate en $C_1$-$C_{20}$, alcoxy en $C_1$-$C_{20}$, alcényloxy en $C_2$-$C_{20}$, alcynyloxy en $C_2$-$C_{20}$, aryloxy en $C_6$-$C_{24}$, alcoxycarbonyle en $C_2$-$C_{20}$, alkylamino en $C_1$-$C_{30}$, alkylthio en $C_1$-$C_{30}$, arylthio en $C_6$-$C_{24}$, alkylsulfonyle en $C_1$-$C_{20}$, alkylsulfinyle en $C_1$-$C_{20}$, et

L représente une structure de la formule générale (IIa) ou (IIb) déjà décrite précédemment, notamment de formule (IIIa) à (IIIf),

- un catalyseur de structure (XIX)

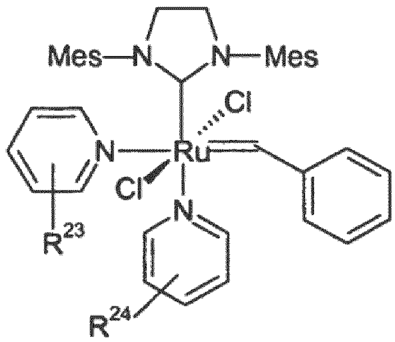

(XIX)

dans laquelle

$R^{23}$ et $R^{24}$ sont identiques ou différents et signifient halogène, alkyle en $C_1$-$C_{20}$ linéaire ou ramifié, hétéroalkyle en $C_1$-$C_{20}$, haloalkyle en $C_1$-$C_{10}$, alcoxy en $C_1$-$C_{10}$, aryle en $C_6$-$C_{24}$, de préférence phényle, formyle, nitro, hétérocycles azotés, de préférence pyridine, pipéridine et pyrazine, carboxy, alkylcarbonyle, halocarbonyle, carbamoyle, thiocarbomoyle, carbamido, thioformyle, amino, dialkylamino, trialkylsilyle et trialcoxysilyle,

- un catalyseur de formule (XIXa) ou (XIXb), dans lesquelles $R^{23}$ et $R^{24}$ ont les mêmes significations que celles indiquées dans la formule (XIX) et représentent de préférence tous les deux H,

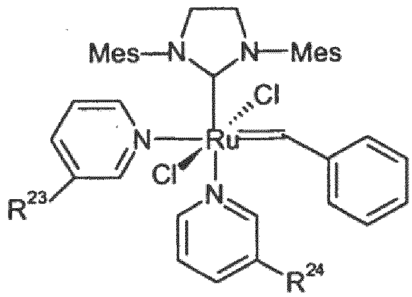

(XIXa)

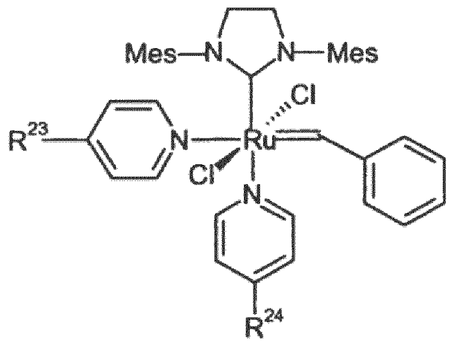

(XIXb)

- un catalyseur de formule (XX) à (XXXI), dans lesquelles Mes représente 2, 4, 6- triméthylphényle,

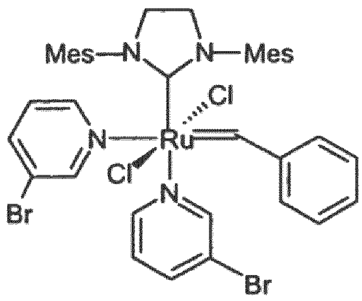

(XX)

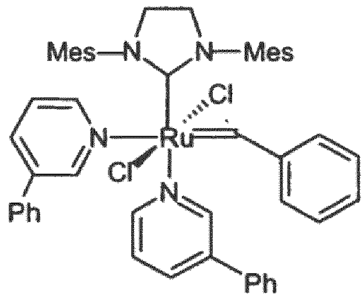

(XXI)

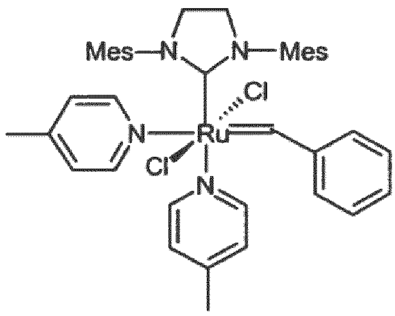

(XXII)

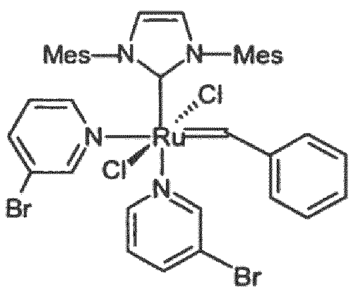

(XXIII)

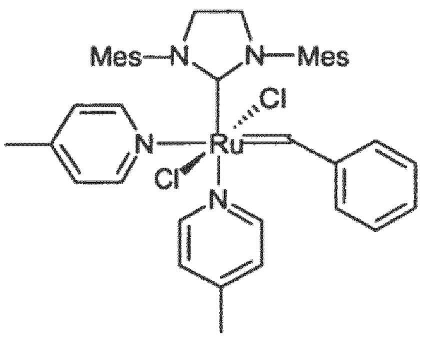

(XXIV)

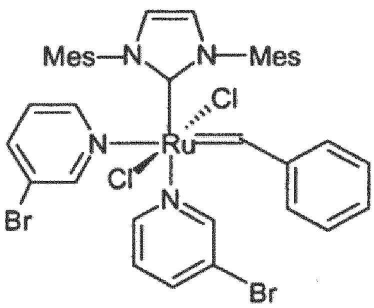

(XXV)

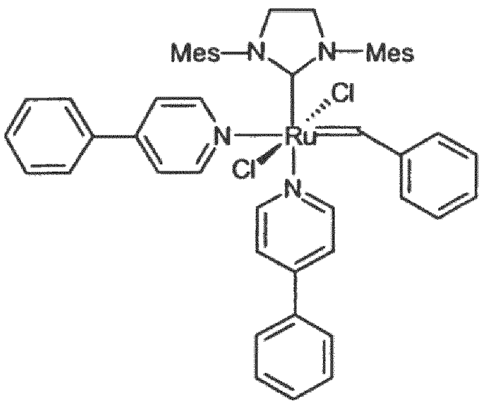

(XXVI)

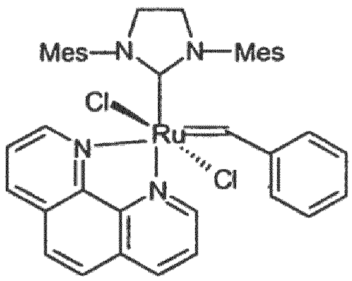

(XXVII)

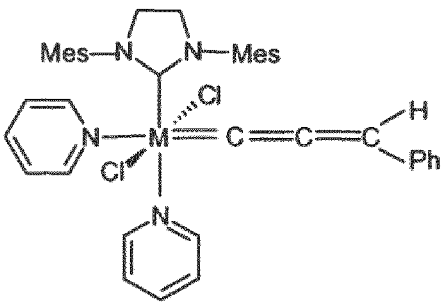

(XXVIII)

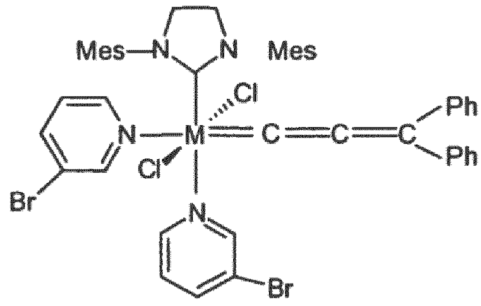

(XXIX)

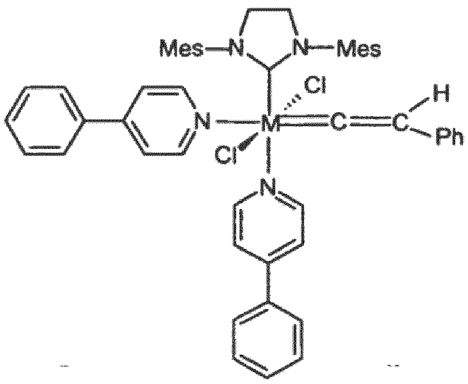

(XXX)

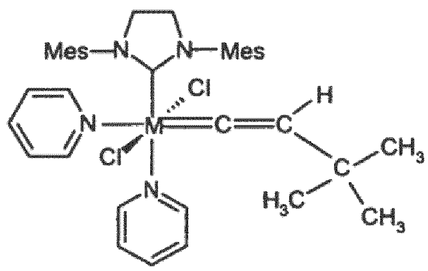

(XXXI)

- un catalyseur de formule (N2a) et (N2b)

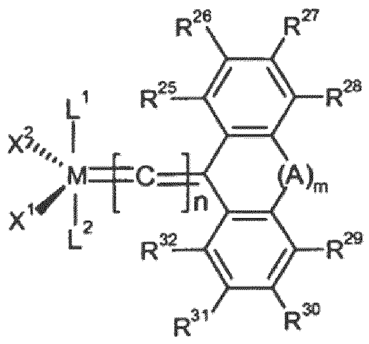

(N2a)

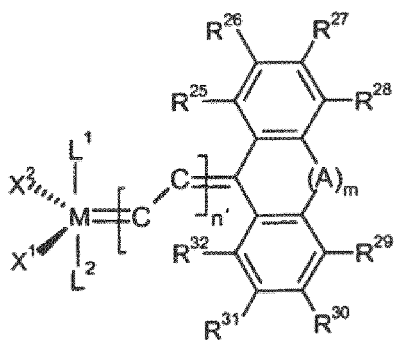

(N2b)

dans lesquelles
M représente ruthénium ou osmium,
$X^1$ et $X^2$ sont identiques ou différents et représentent deux ligands, de préférence ligands anioniques,
$L^1$ et $L^2$ représentent des ligands identiques ou différents, de préférence des donneurs d'électrons neutres, $L^2$ pouvant également en variante être ponté avec le radical $R^8$,
n représente 0, 1, 2 ou 3, de préférence 0, 1 ou 2,
n' représente 1 ou 2, de préférence 1, et
$R^{25}$ à $R^{32}$, m et A ont les mêmes significations que dans la formule générale (N1),
- un catalyseur de formule (N13a) ou (N13b)

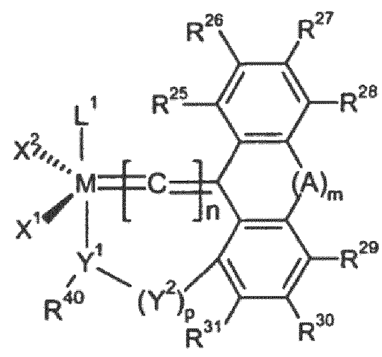

(N13a)

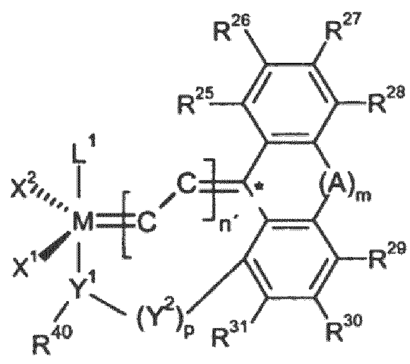

(N13b)

dans lesquelles

$Y^1$ signifie l'oxygène, le soufre, un radical N- $R^{41}$ ou un radical P- $R^{41}$, $R^{41}$ ayant les significations indiquées ci- après,

$R^{40}$ et $R^{41}$ sont identiques ou différents et représentent un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois éventuellement être substitués par un ou plusieurs radicaux alkyle, halogène, alcoxy, aryle ou hétéroaryle,

p représente 0 ou 1 et

$Y^2$ lorsque p = 1, représente- $(CH_2)_r$- avec r = 1, 2 ou 3, -C (=O)- $CH_2$-,- C (=O) -, - N=CH-, - N (H)- C (=O)- ou, en variante, l'unité structurale entière « - $Y^1$ ($R^{40}$)- $(Y^2)_p$- » représente (- N ($R^{40}$) =CH- $CH_2$- ), (- N ($R^{40}$, $R^{41}$) =CH- $CH_2$- ), et

M, $X^1$, $X^2$, $L^1$, $R^{25}$ à $R^{32}$, A, m et n ont les mêmes significations que dans les formules générales (IIa) et (IIb), ou

- un catalyseur des structures suivantes

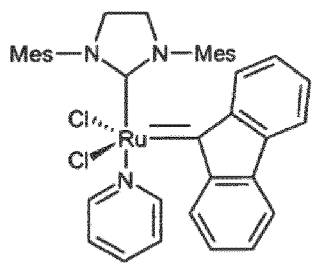

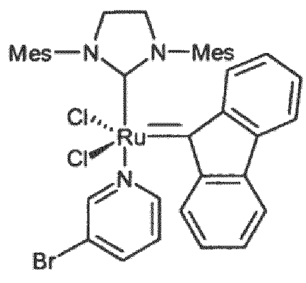

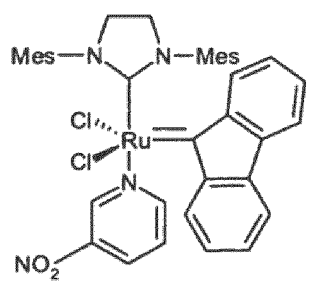

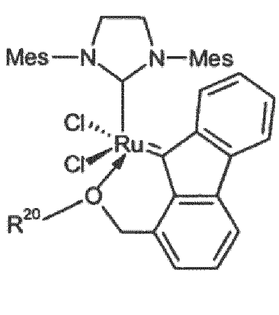

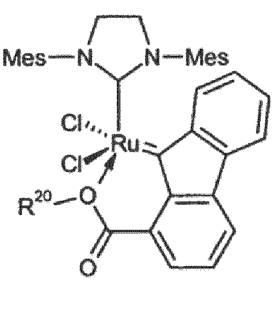

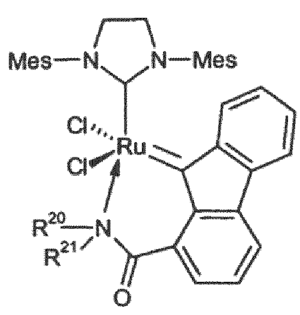

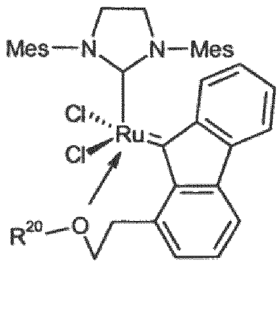

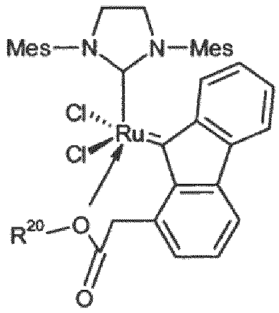

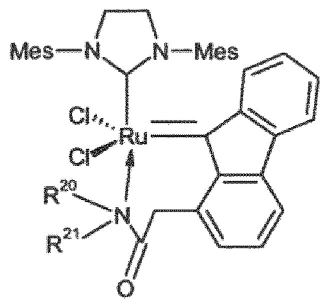

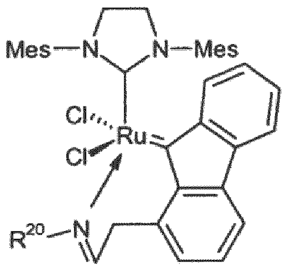

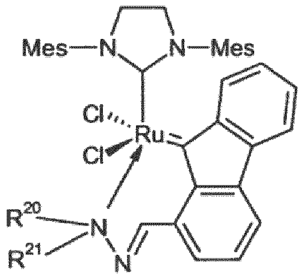

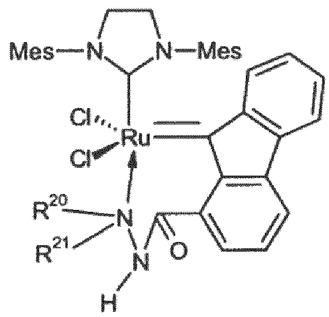

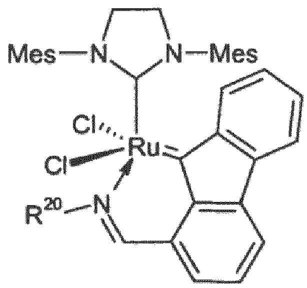

**4.** Procédé selon la revendication 2 ou 3, **caractérisé en ce que**, dans l'oléfine fonctionnalisée de formule générale (I) ou (II),
X signifie
$OR^1$, $R^1$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle,
O- $(CH_2$- $CH_2$- $O)_n$- $R^2$, $R^2$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, et n = 1 à 20, et de préférence 1 à 6,
O- $(CH_2$- CH $(CH_3)$- $O)_n$- $R^3$, $R^3$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, et n = 1 à 20, et de préférence 1 à 6,
O- C (=O)- $R^4$, $R^4$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle,
aryle en $C_6$- $C_{12}$, qui est substitué par au moins un radical $OR^5$, $R^5$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, ou
NH- C (=O)- $OR^6$, $R^6$ représentant H, alkyle en $C_1$- $C_{18}$, aralkyle en $C_7$- $C_{24}$, phényle, naphtyle ou fluorényle, et de préférence H, alkyle en $C_1$- $C_6$, aralkyle en $C_7$- $C_{12}$ ou phényle, et
Y et Z sont identiques ou différents, et signifient
$OR^7$, $R^7$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle,
O- $(CH_2$- $CH_2$- $O)_n$- $R^8$, $R^8$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, et n = 1 à 20, et de préférence 1 à 6,
O- $(CH_2$- CH $(CH_3)$- $O)_n$- $R^9$, $R^9$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, et n = 1 à 20, et de préférence 1 à 6,
O- C (=O)- $R^{10}$, $R^{10}$ représentant H, alkyle en $C_1$- $C_{12}$, aralkyle en $C_7$- $C_{18}$, phényle, naphtyle ou fluorényle, et de

préférence H, alkyle en $C_1$- $C_6$, aralkyle en $C_7$- $C_{12}$ ou phényle,
aryle en $C_6$- $C_{12}$, qui est substitué par au moins un radical $OR^{11}$, $R^{11}$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle, ou
NH- C (=O)- $OR^{12}$, $R^{12}$ représentant H, alkyle en $C_1$- $C_{12}$, aralkyle en $C_7$- $C_{18}$, phényle, naphtyle ou fluorényle, et de préférence H, alkyle en $C_1$- $C_6$, aralkyle en $C_7$- $C_{12}$ ou phényle.

5. Procédé selon la revendication 2 ou 3, **caractérisé en ce qu'**on utilise en tant qu'oléfine fonctionnalisée le carbamate de t- butyl- n- allyle, le p- allylanisole, l'o- allylanisole, le p- allylphénol, l'o- allylphénol, l'ester allylique de l'acide benzoïque, l'éther allylbenzylique, le cis- 1, 4- bisbenzoyloxy- 2- butène, le dibenzoate de cis- 2- butène- 1, 4- diyle, le diacétate de cis- 2- butène- 1, 4- diyle, ou leurs mélanges.

6. Procédé selon une ou plusieurs des revendications 1 à 5, **caractérisé en ce que** le composé de formule générale (I) ou (II) est utilisé en une quantité de $8*10^{-6}$ mol à $8*10^{-3}$ mol, de préférence de $1*10^{-5}$ mol à $5*10^{-3}$ mol et de manière particulièrement préférée de $2*10^{-5}$ mol à $2*10^{-3}$ mol, par rapport à 1 g de caoutchouc de nitrile.

7. Procédé selon une ou plusieurs des revendications 1 à 6, **caractérisé en ce que** le catalyseur de métathèse est utilisé en une quantité de $4*10^{-8}$ mol à $4*10^{-5}$ mol, de préférence de $2*10^{-7}$ mol à $2*10^{-5}$ mol et de manière particulièrement préférée de $5*10^{-7}$ mol à $7,5*10^{-6}$ mol, par rapport à 1 g de caoutchouc de nitrile.

8. Procédé selon une ou plusieurs des revendications 1 à 7, **caractérisé en ce que** le catalyseur de métathèse est utilisé par rapport à l'oléfine fonctionnalisée de formule générale (I) ou (II) en un rapport molaire de ($5*10^{-6}$ à 5) : 1, de préférence de ($1*10^{-4}$ à $5*10^{-1}$) : 1, de manière particulièrement préférée de ($2*10^{-3}$ à 1, $5*10^{-2}$) : 1.

9. Procédé selon une ou plusieurs des revendications 1 à 8, **caractérisé en ce que** le caoutchouc de nitrile utilisé contient des unités de répétition qui dérivent d'au moins un diène conjugué et d'au moins un nitrile $\alpha$, $\beta$- insaturé, et les doubles liaisons C=C des monomères diènes copolymérisés sont présentes sous forme non hydrogénée ou partiellement hydrogénée.

10. Caoutchoucs de nitrile fonctionnalisés contenant des unités de répétition qui dérivent d'au moins un diène conjugué et d'au moins un nitrile $\alpha$, $\beta$- insaturé, ainsi que des groupes terminaux X ou des groupes terminaux Y et Z,
X signifiant
$OR^1$, $R^1$ représentant H, alkyle en $C_1$- $C_{18}$, aralkyle en $C_7$- $C_{24}$, phényle, naphtyle ou fluorényle,
O- ($CH_2$- $CH_2$- O)$_n$- $R^2$, $R^2$ représentant H, alkyle en $C_1$- $C_{18}$, aralkyle en $C_7$- $C_{24}$, phényle, naphtyle ou fluorényle, et n = 1 à 20,
O- ($CH_2$- CH ($CH_3$)- O)$_n$- $R^3$, $R^3$ représentant H, alkyle en $C_1$- $C_{18}$, aralkyle en $C_7$- $C_{24}$, phényle, naphtyle ou fluorényle, et n = 1 à 20,
O- C (=O)- $R^4$, $R^4$ représentant H, alkyle en $C_1$- $C_{18}$, aralkyle en $C_7$- $C_{24}$, phényle, naphtyle ou fluorényle,
aryle en $C_6$- $C_{18}$, qui est substitué par au moins un radical $OR^5$, $R^5$ représentant H, alkyle en $C_1$- $C_{18}$, aralkyle en $C_7$- $C_{24}$, phényle, naphtyle ou fluorényle, ou
NH- C (=O)- $OR^6$, $R^6$ représentant H, alkyle en $C_1$- $C_{18}$, aralkyle en $C_7$- $C_{24}$, phényle, naphtyle ou fluorényle, et
Y et Z étant identiques ou différents, et signifiant
$OR^7$, $R^7$ représentant H, alkyle en $C_1$- $C_{18}$, aralkyle en $C_7$- $C_{24}$, phényle, naphtyle ou fluorényle,
O- ($CH_2$- $CH_2$- O)$_n$- $R^8$, $R^8$ représentant H, alkyle en $C_1$- $C_{18}$, aralkyle en $C_7$- $C_{24}$, phényle, naphtyle ou fluorényle, et n = 1 à 20,
O- ($CH_2$- CH ($CH_3$)- O)$_n$- $R^9$, $R^9$ représentant H, alkyle en $C_1$- $C_{18}$, aralkyle en $C_7$- $C_{24}$, phényle, naphtyle ou fluorényle, et n = 1 à 20,
O- C (=O)- $R^{10}$, $R^{10}$ représentant H, alkyle en $C_1$- $C_{18}$, aralkyle en $C_7$- $C_{24}$, phényle, naphtyle ou fluorényle,
aryle en $C_6$- $C_{18}$, qui est substitué par au moins un radical $OR^{11}$, $R^{11}$ représentant H, alkyle en $C_1$- $C_{18}$, aralkyle en $C_7$- $C_{24}$, phényle, naphtyle ou fluorényle, ou
NH- C (=O)- $OR^{12}$, $R^{12}$ représentant H, alkyle en $C_1$- $C_{18}$, aralkyle en $C_7$- $C_{24}$, phényle, naphtyle ou fluorényle,
les doubles liaisons C=C du monomère diène copolymérisé se présentant éventuellement sous forme partiellement ou complètement hydrogénée.

11. Caoutchoucs de nitrile fonctionnalisés selon la revendication 10, **caractérisés en ce qu'**ils présentent une viscosité de Mooney (ML 1+4 à 100 °C) dans la plage allant de 5 à 30, de préférence dans la plage allant de 5 à 20, et une polydispersité PDI = Mw/Mn, Mn représentant la moyenne en nombre du poids moléculaire et Mw la moyenne en poids du poids moléculaire, dans la plage allant de 1,4 à 4,0, de préférence dans la plage allant de 1,5 à 3,0.

**12.** Mélanges vulcanisables, contenant :

(i) au moins un caoutchouc de nitrile fonctionnalisé selon la revendication 10 ou 11,
(ii) au moins un agent de réticulation ou un système de réticulation et
éventuellement (iii) un ou plusieurs additifs de caoutchouc supplémentaires.

**13.** Procédé de fabrication de vulcanisats, **caractérisé en ce que** le mélange vulcanisable selon la revendication 12 est réticulé par élévation de la température, de préférence lors d'un procédé de façonnage, de manière particulièrement préférée par moulage par injection.

**14.** Vulcanisats à base d'un caoutchouc de nitrile fonctionnalisé selon la revendication 10 ou 11.

**15.** Copolymères séquencés contenant une ou plusieurs séquences à base du caoutchouc de nitrile fonctionnalisé selon la revendication 10 ou 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9706185 A
- DD 146053
- DD 146052
- WO 08027269 A
- WO 2008027269 A
- WO 2008042289 A
- WO 2007100891 A
- US 5880231 A
- WO 2009009158 A
- WO 2006127483 A
- US 5247023 A
- WO 02100905 A
- WO 02100941 A
- WO 03002613 A
- EP 1825913 A
- EP 1894946 A
- EP 2027919 A
- EP 2145681 A
- EP 2145680 A
- EP 1760093 A
- EP 1826220 A
- EP 2028194 A
- EP 2027920 A
- WO 0071554 A
- US 20040132891 A
- WO 03011455 A
- WO 9604289 A
- WO 2004112951 A
- US 20020107138 A1, Hoveyda
- WO 2004035596 A
- WO 2003011455 A1
- WO 2003087167 A2
- US 3700637 A
- DE 2539132 A
- EP 0134023 A
- DE 3541689 A
- DE 3540918 A
- EP 0298386 A
- DE OS3529252 A
- DE OS3433392 A
- US 4464515 A
- US 4503196 A
- EP 0471250 A
- US 4631315 A
- US 6683136 A
- WO 9701597 A
- US 4857571 A
- US 4826721 A


### In der Beschreibung aufgeführte Nicht-Patentliteratur


- *Platinum Metals Rev.,* 2005, vol. 49 (3), 123-137
- *Naturwissenschaften,* 1970, vol. 11, 545
- *J. Macromol. Sci. Part A, Pure Appl. Chem.,* 1993, vol. 30, 621-632
- **KAUTSCH. GUMMI KUNSTST.** *Kautsch. Gummi Kunstst.,* vol. 48, 88-93
- *Makromol. Chem. Rapid Commun.,* 1983, vol. 4, 429-433
- *Angew. Makromol. Chem.,* 1993, vol. 207, 137-143
- *Macromol. Chem.,* 1987, vol. 188, 1075-1084
- tin tetralkyl. Encyclopedia of Occupational Health.and Safety. 1998, vol. III
- *Angew. Chem. Int. Ed.,* 2003, vol. 42, 4592
- *Eur. J. Org. Chem,* 2003, 963-966
- *Angew. Chem. Int. Ed.,* 2002, vol. 41, 4038
- *J. Org. Chem.,* 2004, vol. 69, 6894-96
- *Chem. Eur. J,* 2004, vol. 10, 777-784
- *Chem. Eur. J.,* 2004, vol. 10, 777-784
- *Angew. Chem. Int. Ed.,* 2004, vol. 43, 6161-6165
- *Organometallics,* 2001, vol. 20, 5314